# EUROPEAN PATENT APPLICATION

(11) **EP 4 617 014 A1**
(43) Date of publication of application: **17.09.2025**
(21) Application number: 22965044.5
(22) Date of filing: 07.11.2022
(51) Int. Cl.: B25J 19/04

(54) **POSITION MEASUREMENT SYSTEM AND POSITION MEASUREMENT METHOD**

(71) Applicant: NIKON CORPORATION, Tokyo 140-8601 (JP)
(72) Inventor: NAKAMURA, Takashi, Tokyo 1408601 (JP); ICHINOSE, Go, Tokyo 1408601 (JP)
(74) Representative: Arnold & Siedsma
(86) International application number: PCT/JP2022/041382
(87) International publication number: WO 2024/100717

(57) **Abstract**

A position measurement system is a position measurement system that is used with a robot system that positions a process apparatus for performing a predetermined process on an object, the position measurement system includes: a position measurement apparatus that emits measurement light and optically receives reflected light of the measurement light; and a control apparatus, the control apparatus control the position measurement apparatus t to irradiate a first reflective member, which is attached to a movable body on which the object is placed and which is movable, and a second reflective member attached to the process apparatus, with the measurement light; builds a base coordinate system based on the reflected light from the first reflective member; and generates position posture information, which indicates a position and a posture of the process apparatus in the base coordinate system, based on the reflected light from the second reflective member.

## Description

### Technical Field

The present invention relates to a technical field of a position measurement system and a position measurement method that are used in a robot system, for example.

### Background Art

A robot system that performs a predetermined operation by using a robot is used in various scenes. One technical problem of this robot system is to measurement at least one of a position and a posture of the robot accurately and control it properly.

### Citation List

### Patent Literature

Patent Literature 1: US8,036,452B

### Summary of Invention

A first aspect provides a position measurement system that is used with a robot system, wherein the robot system includes a robot that positions a process apparatus, which performs a predetermined process on an object, in a three-dimensional space, the position measurement system includes: a position measurement apparatus that includes an irradiation unit that emits measurement light and a light receiving unit that optically receives reflected light of the measurement light; and a control apparatus, the control apparatus: controls the irradiation unit to irradiate the measurement light onto each of a plurality of first reflective members, which are attached to a movable body on which the object is placed and which is movable, and each of a plurality of second reflective members, which are attached to the process apparatus; builds a base coordinate system based on the reflected light that is optically received by the light receiving unit and that is from each of the plurality of first reflective members; and generates position posture information, which indicates a position and a posture of the process apparatus in the base coordinate system, based on the reflected light that is optically received by the light receiving unit and that is from each of the plurality of second reflective members.

A second aspect provides a position measurement system that is used in a robot system, wherein the robot system includes a robot that positions a process apparatus, which performs a predetermined process on an object, in a three-dimensional space, the position measurement system comprises: a position measurement apparatus that includes an irradiation unit that emits measurement light and a light receiving unit that optically receives reflected light of the measurement light; and a control apparatus, the control apparatus: controls the irradiation unit to irradiate the measurement light onto each of a plurality of first reflective members, which are attached to a movable body on which the object is placed and which is movable, each of a plurality of second reflective members, which are attached to the process apparatus, and each of a plurality of fourth reflective members, which are positioned in a process space in which the process apparatus performs the predetermined process on the object; builds a base coordinate system based on the reflected light that is optically received by the light receiving unit and that is from each of the plurality of fourth reflective members; generates position posture information, which indicates a position and a posture of the movable body in the base coordinate system, based on the reflected light that is optically received by the light receiving unit and that is from each of the plurality of first reflective members; and generates position posture information, which indicates a position and a posture of the process apparatus in the base coordinate system, based on the reflected light that is optically received by the light receiving unit and that is from each of the plurality of second reflective members.

A third aspect provides a position measurement method that measures a three-dimensional position of a process apparatus, which is moved in a three-dimensional space and which performs a predetermined process on an object, wherein the position measurement method: irradiates measurement light from a position measurement apparatus onto each of a plurality of first reflective members that are attached to a movable body on which the object is placed and that is movable, and optically receives reflected light reflected by each of the plurality of first reflective members; irradiates the measurement light from the position measurement apparatus onto each of a plurality of second reflective members that are attached to the process apparatus, and optically receives reflected light reflected by each of the plurality of second reflective members; acquires position information of the plurality of first reflective members in the three-dimensional space based on the reflected light from the plurality of first reflective members; acquires position information of the plurality of second reflective members in the three-dimensional space based on the reflected light from the plurality of second reflective members; builds a base coordinate system based on the position information of the plurality of first reflective members; and generates position posture information, which indicates a position and a posture of the process apparatus in the base coordinate system, based on the position information of the plurality of second reflective members.

A fourth aspect provides a position measurement method that measures a three-dimensional position of a process apparatus, which is moved in a three-dimensional space and which performs a predetermined process on an object, wherein the position measurement method: irradiates measurement light from a position measurement apparatus onto each of a plurality of first reflective members that are attached to a movable body on which the object is placed and that is movable, and optically receives reflected light reflected by each of the plurality of first reflective members; irradiates the measurement light from the position measurement apparatus onto each of a plurality of second reflective members that are attached to the process apparatus, and optically receives reflected light reflected by each of the plurality of second reflective members; irradiates the measurement light from the position measurement apparatus onto each of a plurality of fourth reflective members, which are positioned in a process space in which the process apparatus performs the predetermined process on the object, and optically receives reflected light reflected by each of the plurality of fourth reflective members; acquires position information of the plurality of first reflective members in the three-dimensional space based on the reflected light from the plurality of first reflective members; acquires position information of the plurality of second reflective members in the three-dimensional space based on the reflected light from the plurality of second reflective members; acquires position information of the plurality of fourth reflective members in the three-dimensional space based on the reflected light from the plurality of fourth reflective members; builds a base coordinate system based on the position information of the plurality of fourth reflective members; generates position posture information, which indicates a position and a posture of the movable body in the base coordinate system, based on the position information of the plurality of first reflective members; and generates position posture information, which indicates a position and a posture of the process apparatus in the base coordinate system, based on the position information of the plurality of second reflective members.

An operation and another advantage of the present invention will be apparent from an example embodiment described below.

### Brief Description of Drawings

p
[FIG. 1] FIG. 1 is a system configuration diagram that illustrates one example of a system configuration of a robot system in a present example embodiment.
[FIG. 2] FIG. 2 is a perspective view that schematically illustrates an example of an arrangement of the robot system.
[FIG. 3] FIG. 3 is a side view that illustrates a configuration of a processing robot.
[FIG. 4] FIG. 4 is a side view that illustrates a configuration of a measurement robot.
[FIG. 5] FIG. 5 is a perspective view that illustrates a configuration of a workpiece transport robot.
[FIG. 6] FIG. 6 is a front view that illustrates an exterior appearance of a laser tracker.
[FIG. 7] FIG. 7 is a cross-sectional view that illustrates a configuration of an optical assembly of the laser tracker.
[FIG. 8] FIG. 8 is a cross-sectional view that illustrates a configuration of an interferometer.
[FIG. 9] FIG. 9 is a block diagram that illustrates a configuration of a tacker control apparatus in the present example embodiment.
[FIG. 10] FIG. 10 is a block diagram that illustrates a configuration of a robot control apparatus in the present example embodiment.
[FIG. 11] FIG. 11 is a flowchart that illustrates a flow of an operation of the robot system.
[FIG. 12] FIG. 12 is a perspective view that schematically illustrates the laser tracker that irradiates measurement light onto a reflector, which is positioned at the workpiece transport apparatus.
[FIG. 13] FIG. 13 is a perspective view that schematically illustrates a base coordinate system.
[FIG. 14] FIG. 14 is a perspective view that schematically illustrates the laser tracker that irradiates the measurement light onto a reflector, which is positioned at a processing head.
[FIG. 15] FIG. 15 is a side view that schematically illustrates the processing head moving in a processing robot coordinate system.
[FIG. 16] FIG. 16 is a side view that schematically illustrates the processing robot that processes a workpiece.
[FIG. 17] FIG. 17 is a perspective view that schematically illustrates the laser tracker that irradiates the measurement light onto a reflector, which is positioned at a measurement head.
[FIG. 18] FIG. 18 is a side view that schematically illustrates the measurement head moving in a measurement robot coordinate system.
[FIG. 19] FIG. 19 is a side view that schematically illustrates the measurement robot that measures the workpiece.
[FIG. 20] FIG. 20 schematically illustrates one example on which a data conversion process is not performed in FIG. 20.
[FIG. 21] FIG. 21 schematically illustrates three-dimensional shape data.
[FIG. 22] FIG. 22 illustrates the workpiece that moves from a first processing space to a second processing space.
[FIG. 23] FIG. 23 illustrates the workpiece that moves from the first processing space to the second processing space.
[FIG. 24] FIG. 24 is a cross-sectional view that illustrates the workpiece processed by an ideal processing operation and the workpiece processed by a processing operation in which a processing error occurs.
[FIG. 25] FIG. 25(a) is a perspective view that illustrates the reflector positioned at a jig, and FIG. 25(b) is a perspective view that illustrates the reflector positioned at the workpiece.

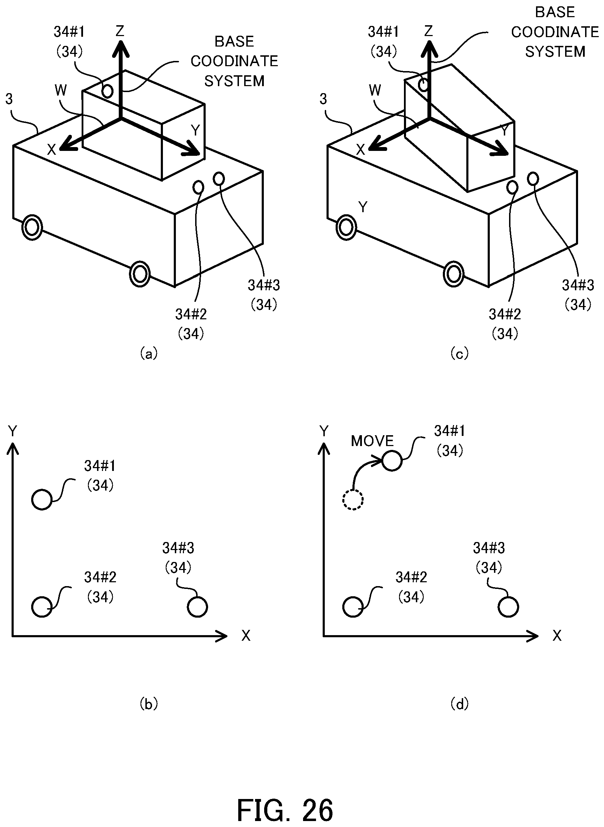

[FIG. 26] FIG. 26(a) is a perspective view that illustrates one example of the workpiece whose position displacement relative to the base coordinate system does not occur, FIG. 26(b) illustrates positions of a plurality of reflectors calculated in a case where the position displacement of the workpiece relative to the base coordinate system does not occur, FIG. 26(c) is a perspective view that illustrates one example of the workpiece whose position displacement relative to the base coordinate system occurs, and FIG. 26(d) illustrates the positions of the plurality of reflectors calculated in a case where the position displacement of the workpiece relative to the base coordinate system occurs.
[FIG. 27] Each of FIG. 27(a) to FIG. 27(f) illustrates another example of the base coordinate system
[FIG. 28] FIG. 28 is a perspective view that illustrates one example of a feature part of the workpiece.

### Description of Example embodiments

Next, with reference to drawings, an example embodiment of a position measurement system and a position measurement method will be described. In the below-described description, the example embodiment of the position measurement system and the position measurement method will be described by using a processing system PSYS used to process a workpiece W that is one example of an object.

### (1) Configuration of Processing System PSYS in Present Example Embodiment

First, a configuration of the processing system PSYS in the present example embodiment will be described.

### (1-1) Entire Configuration of Processing System PSYS

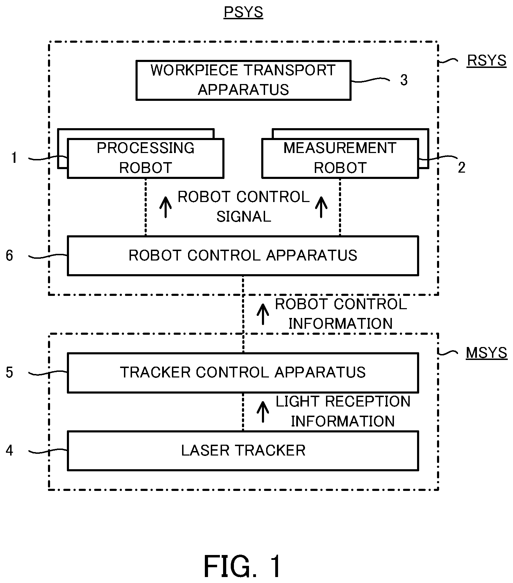

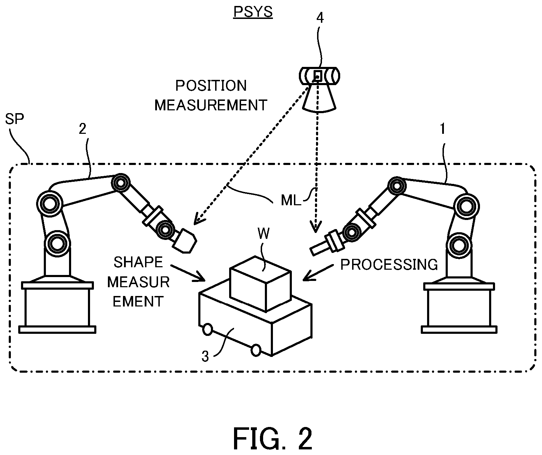

First, with reference to FIG. 1 and FIG. 2, the configuration of the processing system PSYS in the present example embodiment will be described. FIG. 1 is a system configuration diagram that illustrates one example of a system configuration of the processing system PSYS in the present example embodiment. FIG. 2 is a perspective view that illustrates an example of an arrangement of the processing system PSYS.

As illustrated in FIG. 1, the processing system PSYS includes a robot system RSYS and a position measurement system MSYS. The robot system RSYS is used together with the position measurement system MSYS. The position measurement system MSYS is used together with the robot system RSYS.

The robot system RSYS includes at least one robot (in this case, two robots, a robot 1 and a robot 2), a workpiece transport apparatus 3, and a robot control apparatus 6.

An end effector, which may be referred to as a process apparatus, is attached to the robot. The robot performs a predetermined operation (in other words, a predetermined process) on the workpiece W by using the end effector attached to the robot. Especially, the robot performs the predetermined operation (in other words, the predetermined process) on the workpiece W in a process space SP in which the robot performs the predetermined process on the workpiece W.

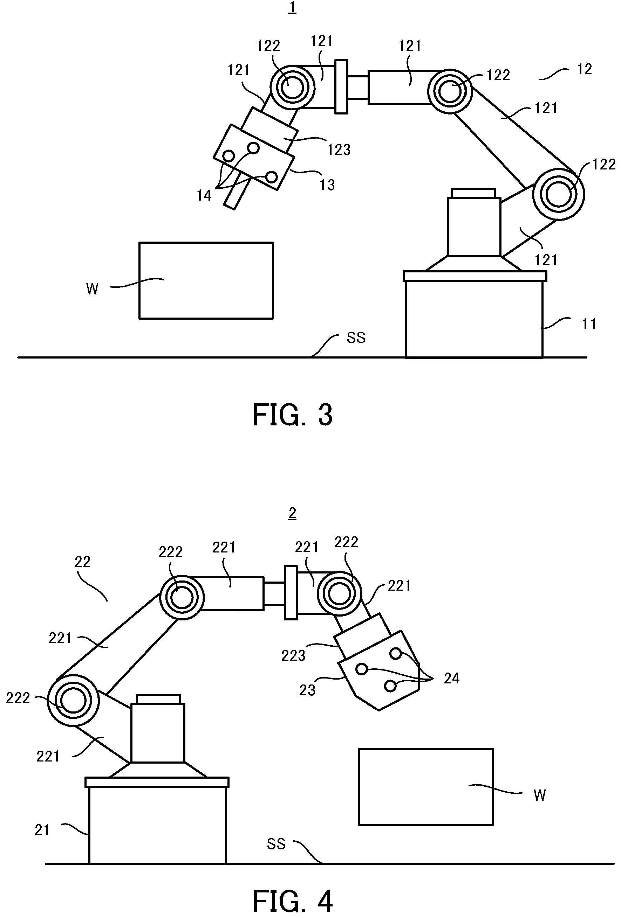

In an example illustrated in FIG. 1, a processing head 13, which will be described later with reference to FIG. 3, is attached to the robot 1 as the end effector. In the below-described description, the robot 1 to which the processing head 13 is attached is referred to as a processing robot 1. The processing robot 1 may be referred to as a processing apparatus. Moreover, in the example illustrated in FIG. 1, a measurement head 23, which will be described later with reference to FIG. 4, is attached to the robot 2 as the end effector. In the below-described description, the robot 2 to which the measurement head 23 is attached is referred to as a measurement robot 2. The measurement robot 2 may be referred to as a measurement apparatus. The robot system RSYS may include a plurality of processing robots 1. The robot system RSYS may include a plurality of measurement robots 2.

The processing robot 1 is a robot that is configured to process the workpiece W. The processing robot 1 is a robot that is configured to perform, as at least a part of the predetermined operation, a processing operation for processing the workpiece W. The processing operation may be referred to as a processing handling. Incidentally, a configuration of the processing robot 1 will be described later with reference to FIG. 3.

The processing robot 1 performs the processing operation corresponding to a process stage (Handling Process) assigned to the processing robot 1. For example, a first processing robot 1 may perform a cutting processing operation as the processing operation corresponding to a first process stage, and a second processing robot 1 may perform a polishing processing operation as the processing operation corresponding to a second process stage that is different from the first process stage.

The processing robot 1 is positioned in the process space SP. In the process space SP, the processing robot 1 performs the processing operation corresponding to the processing operation assigned to the processing robot 1. A single processing robot 1 may be positioned in a single process space SP. A plurality of processing robots 1 may be positioned in a single process space SP.

The processing robot 1 processes the workpiece W located in the process space SP in which the processing robot 1 is positioned. For example, a first processing robot 1 positioned in a first process space SP may process the workpiece W located in the first process space SP, and a second processing robot 1 positioned in a second process space SP, which is different from the first process space SP, may process the workpiece W located in the second process space SP. In this case, the first processing robot 1 may process the workpiece W located in the first process space SP, then, the workpiece W may be transported from the first process space SP to the second process space SP by the workpiece transport apparatus 3 described below, and then the second processing robot 1 may process the workpiece W located in the second process space SP.

The measurement robot 2 is a robot that is configured to measure the workpiece W. The measurement robot 2 is a robot that is configured to perform, as at least a part of the predetermined operation, a measurement operation for measuring the workpiece W. The measurement operation may be referred to as a measurement process. In the present example embodiment, an example in which the measurement robot 2 is a robot that is configured to measure a three-dimensional shape of the workpiece W. Namely, in the present example embodiment, an example in which the measurement robot 2 is a robot that is configured to perform the measurement operation for measuring the three-dimensional shape of the workpiece W. Incidentally, a configuration of the measurement robot 2 will be described later with reference to FIG. 4.

The measurement robot 2 may be positioned in the process space SP in which at least one processing robot 1 corresponding to the measurement robot 2 is positioned. In this case, the measurement robot 2 measures the workpiece W located in the process space SP in which the measurement robot 2 is positioned. For example, a first measurement robot 2 positioned in a first process space SP may measure the workpiece W located in the first process space SP, and a second measurement robot 2 positioned in a second process space SP, which is different from the first process space SP, may measure the workpiece W located in the second process space SP. In this case, the first measurement robot 2 may measure the workpiece W located in the first process space SP, then the workpiece W may be transported from the first process space SP to the second process space SP by the workpiece transport apparatus 3 described below, and then the second measurement robot 2 may measure the workpiece W located in the second process space SP.

The measurement robot 2 may measure the workpiece W before the processing robot 1 positioned in the same process space SP starts processing the workpiece W. The measurement robot 2 may measure the workpiece W after the processing robot 1 positioned in the same process space SP starts processing the workpiece W. The measurement robot 2 may measure the workpiece W in at least a part of a period during which the processing robot 1 positioned in the same process space SP processes the workpiece W. The measurement robot 2 may measure the workpiece W after the processing robot 1 positioned in the same process space SP has finished processing the workpiece W.

Incidentally, the process space SP in which the processing robot 1 performs the processing operation may be referred to as a processing process space. The process space SP in which the measurement robot 2 performs the measurement operation may be referred to as a measurement process space.

The workpiece transport apparatus 3 is configured to transport the workpieces W. For example, the workpiece transport apparatus 3 may transport the workpieces W to the process space SP in which the processing robot 1 and the measurement robot 2 are positioned. For example, the workpiece transport apparatus 3 may transport the workpieces W to a processing position in the process space SP at which the processing robot 1 can process the workpieces W. For example, the workpiece transport apparatus 3 may transport the workpiece W to a measurement position in the process space SP at which the measurement robot 2 can measure the workpiece W. The measurement position may be the same as or may be different from the processing position. Alternatively, as described above, the workpiece transport apparatus 3 may transport the workpiece W from a first process space SP to a second process space SP that is different from the first process space SP.

The robot control apparatus 6 is configured to control the processing robot 1. For example, the robot control apparatus 6 may generate a robot control signal for controlling the processing robot 1, and may control the processing robot 1 by outputting the generated robot control signal to the processing robot 1. As one example, the robot control apparatus 6 may generate the robot control signal for controlling the processing robot 1 to process the workpiece W. For example, the robot control apparatus 6 may generate the robot control signal for controlling the processing robot 1 to change at least one of a position and a posture of the processing head 13 based on robot control information that is generated by the tracker control apparatus 5 described below.

The robot control apparatus 6 is further configured to control the measurement robot 2. For example, the robot control apparatus 6 may generate a robot control signal for controlling the measurement robot 2 and control the measurement robot 2 by outputting the generated robot control signal to the measurement robot 2. For example, the robot control apparatus 6 may generate the robot control signal for controlling the measurement robot 2 to measure the workpiece W. For example, the robot control apparatus 6 may generate the robot control signal for controlling the measurement robot 2 to change at least one of a position and a posture of the measurement head 23 based on the robot control information generated by the tracker control apparatus 5 described below.

The position measurement system MSYS includes a laser tracker 4 and a tracker control apparatus 5.

The laser tracker 4 is a position measurement apparatus (in other words, a position and posture measurement apparatus) that is configured to measuring at least one of a position and a posture of the measurement target object. At least one of the processing robot 1, the measurement robot 2, the workpiece transport apparatus 3, the workpiece W, and a base position positioned in the process space SP. In order to measure at least one of the position and the posture of the measurement target object, the laser tracker 4 is configured to irradiate the measurement light ML onto the measurement target object. The measurement light ML is typically laser light, but the measurement light ML may be light different from the laser light. Furthermore, the laser tracker 4 is configured to optically receive reflected light RL from the measurement target object onto which the measurement light ML is irradiated. Namely, the laser tracker 4 is configured to optically receive reflected light RL of the measurement light ML. Light reception information indicating an optical received result of the reflected light RL by the laser tracker 4 is output from the laser tracker 4 to the tracker control apparatus 5.

The tracker control apparatus 5 is configured to control the laser tracker 4 so as to irradiated the measurement light ML onto the measurement target object. As a result, the tracker control apparatus 5 acquires the received light information indicating the optical received result of the reflected light RL from the laser tracker 4.

The tracker control apparatus 5 is further configured to calculate at least one of the position and the posture of the measurement target object based on the acquired light reception information. Incidentally, the position of the measurement target object may mean at least one of a position of the measurement target object along a first axis (for example, the X-axis), a position of the measurement target object along a second axis (for example, the Y-axis) that is orthogonal to the first axis, and a position of the measurement target object along a third axis (for example, the Z-axis) that is orthogonal to the first and second axes. The posture of the measurement target object may mean at least one of a rotational amount of the measurement target object around a first axis (for example, the X-axis), a rotational amount of the measurement target object around a second axis (for example, the Y-axis) that is orthogonal to the first axis, and a rotational amount of the measurement target object around a third axis (for example, the Z-axis) that is orthogonal to the first and second axes. Furthermore, the position and the posture of the measurement target object may be a position and a posture of a point inside the measurement target object (for example, a center of gravity). The position and the posture of the measurement target object may be a position and a posture of a point on the surface of the measurement target object. The position and the posture of the measurement target object may be a position and a posture of a point whose positional relationship to the measurement target object is fixed and which is distant from the measurement target object.

Incidentally, the posture of the measurement target object may be considered to mean at least one of a position of the measurement target object in a rotational direction around the first axis (for example, the X-axis), a position of the measurement target object in a rotational direction around the second axis (for example, the Y-axis) that is orthogonal to the first axis, and a position of the measurement target object in the rotational direction around the third axis (for example, the Z-axis) that is orthogonal to the first and second axes. Namely, the posture of the measurement target object may be regarded as one example of the position of the measurement target object.

For example, the tracker control apparatus 5 may calculate at least one of the position and the posture of the processing robot 1 based on the light reception information indicating the optical received result of the reflected light RL from the processing robot 1. Incidentally, in the present example embodiment, an example in which a position and a posture of the below-described processing head 13, which is attached to the processing robot 1, are used as the position and the posture of the processing robot 1 will be described. For example, the tracker control apparatus 5 may calculate at least one of the position and the posture of the measurement head 23 based on the light reception information indicating the optical received result of the reflected light RL from the measurement robot 2. Incidentally, in the present example embodiment, an example in which a position and a posture of the below-described measurement head 23, which is attached to the measurement robot 2, are used as the position and the posture of the measurement robot 2 will be described. For example, the tracker control apparatus 5 may calculate at least one of the positions and the postures of the workpiece transport apparatus 3 based on the light reception information indicating the optical received result of the reflected light RL from the workpiece transport apparatus 3. Incidentally, because the workpiece W is placed on the workpiece transport apparatus 3 as described later, a processing for calculating at least one of the position and the posture of the workpiece transport apparatus 3 based on the light reception information indicating the optical received result of the reflected light RL from the workpiece transport apparatus 3 may be considered to be equivalent to a processing for calculating at least one of the position and the posture of the workpiece W, which is placed on the workpiece transport apparatus 3, based on the light reception information indicating the optical received result of the reflected light RL from the workpiece transport apparatus 3. For example, the tracker control apparatus 5 may calculate at least one of the position and the posture of the workpiece W based on the light reception information indicating the optical received result of the reflected light RL from the workpiece W. Incidentally, since the workpiece W is placed on the workpiece transport apparatus 3, the processing for calculating at least one of the position and the posture of the workpiece W based on the light reception information indicating the optical received result of the reflected light RL from the workpiece W may be considered to be equivalent to the processing for calculating at least one of the position and the posture of the workpiece transport apparatus 3 on which the workpiece W is placed based on the light reception information indicating the optical received result of the reflected light RL from the workpiece W.

Furthermore, in the present example embodiment, the tracker control apparatus 5 is configured to build (in other words, generate, set, or define) a base coordinate system based on the acquired light reception information. The base coordinate system is a coordinate system that is used as a base in the process space SP. In this case, the tracker control apparatus 5 may calculate the position of the measurement target object in the base coordinate system as the position of the measurement target object. The tracker control apparatus 5 may calculate the posture of the measurement target object in the base coordinate system as the posture of the measurement target object. For example, the tracker control apparatus 5 may calculate at least one of the position of the measurement target object along a X-axis of the base coordinate system, the position of the measurement target object along a Y-axis of the base coordinate system, which is orthogonal to the X-axis of the base coordinate system, and the position of the measurement target object along a Z-axis of the base coordinate system, which is orthogonal to both of the X-axis and the Y-axis of the base coordinate system. For example, the tracker control apparatus 5 may calculate at least one of the rotational amount of the measurement target object around the X-axis of the base coordinate system, the rotational amount of the measurement target object around the Y-axis of the base coordinate system, and the rotational amount of the measurement target object around the Z-axis of the base coordinate system.

Incidentally, in the below-described description, the X-axis, the Y-axis, and the Z-axis mean the X-axis, the Y-axis, and the Z-axis of the base coordinate system, respectively, if there is no notation.

The tracker control apparatus 5 is further configured to generate the robot control information based on at least one of the position and the posture of the measurement target object calculated by the tracker control apparatus 5. The robot control information may include information that is usable by the robot control apparatus 6 to control at least one of the processing robot 1 and the measurement robot 2. For example, the robot control information may include information that is usable by the robot control apparatus 6 to control the position of the processing head 13. For example, the robot control information may include information that is usable by the robot control apparatus 6 to control the posture of the processing head 13. For example, the robot control information may be information of at least one of the position and the posture of the processing head 13. Namely, the robot control information may include information that is usable by the robot control apparatus 6 to position the processing head 13 by driving the processing robot 1. For example, the robot control information may include information that is usable by the robot control apparatus 6 to control the position of the measurement head 23. For example, the robot control information may include information that is usable by the robot control apparatus 6 to control the posture of the measurement robot 2. For example, the robot control information may be information of at least one of the position and the posture of the measurement head 23. Namely, the robot control information may include information that is usable by the robot control apparatus 6 to position the measurement head 23 by driving the measurement robot 2. The robot control information generated by the tracker control apparatus 5 is output from the tracker control apparatus 5 to the robot control apparatus 6.

### (1-2) Configuration of Processing Robot 1

Next, with reference to FIG. 3, a configuration of the processing robot 1 will be described. FIG. 3 is a side view that illustrates the configuration of the processing robot 1.

As illustrated in FIG. 3, the processing robot 1 includes: a base 11; a robot arm 12, and a processing head 13.

The base 11 is a member that is a foundation of the processing robot 1. The base 11 is placed on a support surface SS, such as a floor. The base 11 may be fixed to the support surface SS. Alternatively, the base 11 may be movable relative to the support surface SS. As one example, the base 11 may be configured to be self-propelled on the support surface SS. In this case, the base 11 may be mounted on automatic transport vehicle. Alternatively, the automatic transport vehicle may be used as the base 11. At least one of an Automatic Guided Vehicle (AGV) and an Autonomous Mobile Robot (AMR) is one example of the automatic transport vehicle.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector is attached to the robot arm 12. In the example illustrated in FIG. 3, the end effector is attached to a movable part 123 located at a tip of the robot arm 12.

Incidentally, the movable part 123 may be referred to as a processing movable part. The movable part 123 is movable by the movement of the robot arm 12. As a result, the end effector attached to the movable part 123 is also movable by the movement of the robot arm 12. Namely, the robot arm 12 moves the end effector and positions the end effector in a three-dimensional space. Namely, the processing robot 1 moves the end effector and positions the end effector in the three-dimensional space.

In the present example embodiment, the processing head 13, which is one example of the end effector, is attached to the robot arm 12. In this case, the robot arm 12 may be referred to as a processing robot arm 12. The processing head 13 is a processing apparatus that is configured to process the workpiece W. The processing head 13 is a processing apparatus that is configured to perform the processing operation for processing the workpiece W.

The processing head 13 may be a processing apparatus that is configured to process the workpiece W by making a tool, which is called as a processing tool, contact the workpiece W. Namely, the processing head 13 may be a processing apparatus that is configured to perform a machining by using a tool. The processing head 13 may be a processing apparatus that is configured to process the workpiece W by irradiating a processing beam such as processing light onto the workpiece W. As one example, the processing head 13 may be a processing apparatus that is configured to perform a subtractive manufacturing for removing a part of the workpiece W by irradiating the processing beam onto the workpiece W. As another example, the processing head 13 may be a processing apparatus that is configured to perform an additive manufacturing for building a build object on the workpiece W by irradiating the processing beam onto the workpiece

### W.

A reflector 14 is positioned at the processing head 13. Typically, the reflector 14 is attached to the processing head 13. The reflector 14 is a reflective member that reflects light entering the reflector 14. Typically, the reflector 14 is a retroreflective member that retroreflects the light entering the reflector 14. Incidentally, the reflector 14 may be attached to a vicinity of the processing head 13 in addition to or instead of the processing head 13 itself. For example, the reflector 14 may be attached to the movable part 123.

The laser tracker 4 described above irradiates the measurement light ML onto the reflector 14 attached to the processing head 13 in order to measure at least one of the position and the posture of the processing head 13 (namely, at least one of the position and the posture of the processing robot 1). The reflector 14 reflects the measurement light ML that enters the reflector 14. The laser tracker 4 optically receives the reflected light RL that is the measurement light ML reflected by the reflector 14. The tracker control apparatus 5 calculates at least one of the position and the posture of the processing head 13 based on the light reception information indicating the optical received result of the reflected light RL from the reflector 14.

In the present example embodiment, a plurality of reflectors 14 are positioned at the processing head 13. Especially, at least three reflectors 14 are positioned at the processing head 13. In this case, a positional relationship between the plurality of reflectors 14 is known, and therefore, the tracker control apparatus 5 can calculate the position of the processing head 13 along each of the X-axis, the Y-axis, and the Z-axis described above, and the rotational amount of the processing head 13 around each of the X-axis, the Y-axis, and the Z-axis described above, based on the light reception information indicating the optical received result of the reflected light RL from each of the at least three reflectors 14. However, two or fewer reflectors 14 may be positioned at the processing head 13. Even In this case, the tracker control apparatus 5 can calculate the position of the processing head 13 along at least one of the X-axis, Y-axis, and Z-axis, and/or the rotational amount of the processing head 13 around at least one of the X-axis, Y-axis, and Z-axis, based on the light reception information indicating the optical received result of reflected light RL from each of the two or fewer reflectors 14.

### (1-3) Configuration of Measurement Robot 2

Next, with reference to FIG. 4, a configuration of the measurement robot 2 will be described. FIG. 4 is a side view that illustrates the configuration of the measurement robot 2.

As illustrated in FIG. 4, the measurement robot 2 includes: a base 21; a robot arm 22, and a measurement head 23.

The base 21 is a member that is a foundation of the measurement robot 2. The base 21 is placed on the support surface SS, such as a floor. The base 21 may be fixed to the support surface SS. Alternatively, the base 21 may be movable relative to the support surface SS. As one example, the base 21 may be configured to be self-propelled on the support surface SS. In this case, the base 21 may be mounted on automatic transport vehicle. Alternatively, the automatic transport vehicle may be used as the base 21. At least one of an Automatic Guided Vehicle (AGV) and an Autonomous Mobile Robot (AMR) is one example of the automatic transport vehicle.

The robot arm 22 is attached to the base 21. The robot arm 22 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 21 and an apparatus in which the plurality of links 121 are connected through the joint 122 may be referred to as the robot arm 22.

The end effector is attached to the robot arm 22. In the example illustrated in FIG. 4, the end effector is attached to a movable part 223 located at a tip of the robot arm 22. Incidentally, the movable part 223 may be referred to as a measurement movable part. The movable part 223 is movable by the movement of the robot arm 22. As a result, the end effector attached to the movable part 223 is also movable by the movement of the robot arm 22. Namely, the robot arm 22 moves the end effector and positions the end effector in a three-dimensional space. Namely, the measurement robot 2 moves the end effector and positions the end effector in the three-dimensional space.

In the present example embodiment, the measurement head 23, which is one example of the end effector, is attached to the robot arm 22. In this case, the robot arm 22 may be referred to as a measurement robot arm 22. The measurement head 23 is a measurement apparatus that is configured to measure the workpiece W. The measurement head 23 is a measurement apparatus that is configured to perform the measurement operation for measuring the workpiece W.

In the present example embodiment, an example in which the measurement head 23 is a shape measurement apparatus that is configured to measure the three-dimensional shape of the workpiece W will be described. Namely, in the present example embodiment, an example in which the measurement head 23 is a shape measurement apparatus that is configured to perform the measurement operation for measuring the three-dimensional shape of the workpiece W will be described. A three-dimensional scanner is one example of the measurement head 23 that is configured to measure the three-dimensional shape of the workpiece W. A stereo camera is another example of the measurement head 23.

Three-dimensional shape data indicating a measured result of the three-dimensional shape of the workpiece W by the measurement head 23 is output from the measurement head 23 to the tracker control apparatus 5. Incidentally, the three-dimensional shape data may be referred to as three-dimensional shape information or three-dimensional shape measured result. Point cloud data indicating the three-dimensional shape of the workpiece W is one example of three-dimensional shape data. The tracker control apparatus 5 may generate the robot control information described above based on the three-dimensional shape data.

A reflector 24 is positioned at the measurement head 23. Typically, the reflector 24 is attached to the measurement head 23. The reflector 24 is a reflective member that reflects light entering the reflector 24. Typically, the reflector 24 is a retroreflective member that retroreflects the light entering the reflector 24. Incidentally, the reflector 24 may be attached to a vicinity of the measurement head 23 in addition to or instead of the measurement head 23 itself. For example, the reflector 24 may be attached to the movable part 223.

The laser tracker 4 described above irradiates the measurement light ML onto the reflector 24 attached to the measurement head 23 in order to measure at least one of the position and the posture of the measurement head 23 (namely, at least one of the position and the posture of the measurement robot 2). The reflector 24 reflects the measurement light ML that enters the reflector 24. The laser tracker 4 optically receives the reflected light RL that is the measurement light ML reflected by the reflector 24. The tracker control apparatus 5 calculates at least one of the position and the posture of the measurement head 23 based on the light reception information indicating the optical received result of the reflected light RL from the reflector 24.

In the present example embodiment, a plurality of reflectors 24 are positioned at the measurement head 23. Especially, at least three reflectors 24 are positioned at the measurement head 23. In this case, a positional relationship between the plurality of reflectors 24 is known, and therefore, the tracker control apparatus 5 can calculate the position of the measurement head 23 along each of the X-axis, the Y-axis, and the Z-axis described above, and the rotational amount of the measurement head 23 around each of the X-axis, the Y-axis, and the Z-axis described above, based on the light reception information indicating the optical received result of the reflected light RL from each of the at least three reflectors 24. However, two or fewer reflectors 24 may be positioned at the measurement head 23. Even In this case, the tracker control apparatus 5 can calculate the position of the measurement head 23 along at least one of the X-axis, Y-axis, and Z-axis, and/or the rotational amount of the measurement head 23 around at least one of the X-axis, Y-axis, and Z-axis, based on the light reception information indicating the optical received result of reflected light RL from each of the two or fewer reflectors 24.

### (1-5) Configuration of Workpiece Transport Apparatus 3

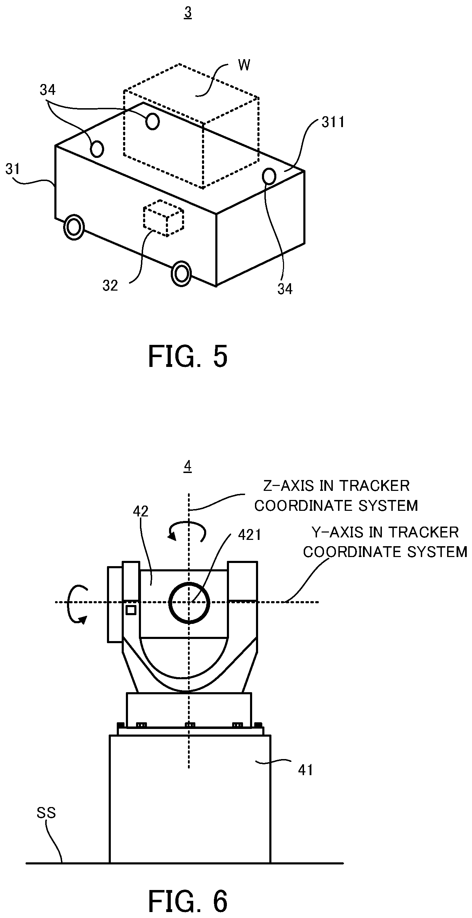

Next, with reference to FIG. 5, a configuration of the workpiece transport apparatus 3 will be described. FIG. 5 is a side view that illustrates the configuration of the workpiece transport apparatus 3.

As illustrated in FIG. 5, the workpiece transport apparatus 3 includes a transport body 31 and a driving unit 32. The transport body 31 is movable by using a driving power of the driving unit 32 such as a motor. The transport body 31 is a movable body that is movable by using the driving power of the driving unit 32 such as the motor. For example, the transport body 31 may move from the first process space SP, in which the first processing robot 1 and the first measurement robot 2 are positioned, to the second process space SP, in which the second processing robot 1 and the second measurement robot 2 are positioned. For example, the transport body 31 may move in the first process space SP in which the first processing robot 1 and the first measurement robot 2 are positioned. For example, the transport body 31 may move in the second process space SP in which the second processing robot 1 and the second measurement robot 2 are positioned.

Incidentally, FIG. 5 illustrates a workpiece transport apparatus 3 including the transport body 31 that is movable on the support surface SS. Namely, FIG. 5 illustrates an example in which the workpiece transport apparatus 3 is an automatic transport vehicle. At least one of an Automatic Guided Vehicle (AGV) and an Autonomous Mobile Robot (AMR) is one example of the automatic transport vehicle. However, the transport body 31 may be movable to fly in a space above the support surface SS. In this case, a drone and the light that is configured to fly may be used as the workpiece transport apparatus 3.

A part of the transport body 31 is used as a placement surface 311 on which the workpiece W is placed. In the example illustrated in FIG. 5, at least a part of an upper surface of the transport body 31 is used as the placement surface 311 on which the workpiece W is placed. The transport body 31 may hold the workpiece W placed on the placement surface 311. In this case, the transport body 31 may include a holding member for holding the workpiece W. At least one of a jig, a vacuum suction chuck, and an electrostatic suction chuck is one example of the holding member. Alternatively, the transport body 31 may not hold the workpiece W placed on the placement surface 311. In this case, the workpiece W may be placed on the workpiece W without a clamp.

The transport body 31 may move in a state where the workpiece W is placed on the placement surface 311. As a result, the workpiece transport apparatus 3 may transport the workpiece W placed on the placement surface 311. However, the transport body 31 may move in a state where the workpiece W is not placed on the placement surface 311.

A reflector 34 is positioned at the transport body 31. Typically, the reflector 34 is attached to the transport body 31. The reflector 34 is a reflective member that reflects light entering the reflector 34. Typically, the reflector 34 is a retroreflective member that retroreflects the light entering the reflector 34.

The reflector 34 may be positioned at a position that is fixed relative to the workpiece W. Namely, the reflector 34 may be positioned at a position that satisfies a condition that a positional relationship between the reflector 34 and the workpiece W does not change. The reflector 34 may be positioned at a position that satisfies a condition that the positional relationship between the reflector 34 and the workpiece W does not change even in a case where the workpiece W is transported. A position on the transport body 31 is one example of the position that satisfies the condition that the positional relationship between the reflector 34 and the workpiece W does not change. This is because the workpiece W is placed on the workpiece transport apparatus 3, and so the workpiece W moves as the workpiece transport apparatus 3 moves.

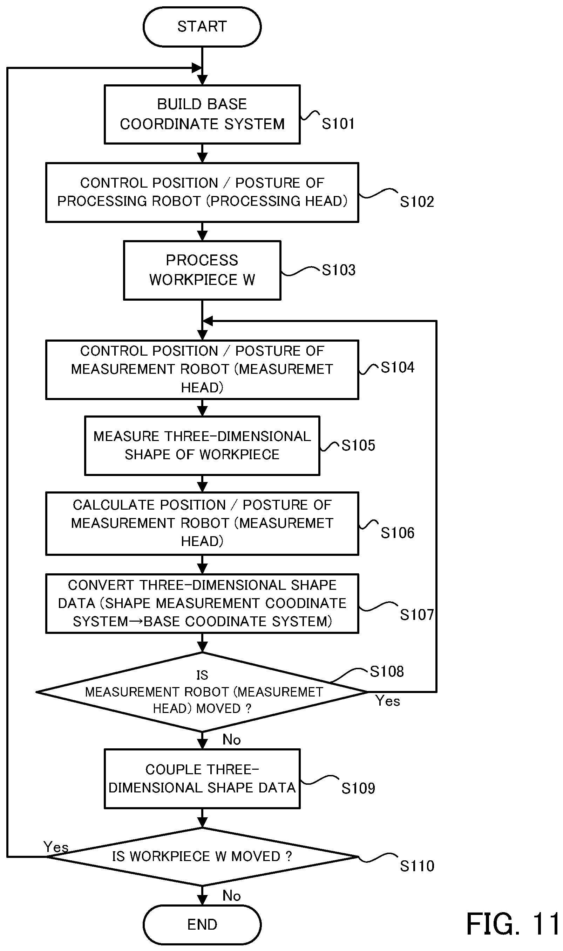

The laser tracker 4 described above irradiates the measurement light ML onto the reflector 34 attached to the transport body 31 in order to build the base coordinate system. The reflector 34 reflects the measurement light ML that enters the reflector 34. The laser tracker 4 optically receives the reflected light RL that is the measurement light ML reflected by the reflector 34. The tracker control apparatus 5 build the base coordinate system based on the light reception information that indicates the optical received result of the reflected light RL from the reflector 34. Incidentally, a method for building the base coordinate system will be described in detail later with reference to FIG. 11 and so on.

The laser tracker 4 described above irradiates the measurement light ML onto the reflector 34 attached to the transport body 31 in order to measure at least one of the position and the posture of at least one of the workpiece transport apparatus 3 and the workpiece W placed on the workpiece transport apparatus 3. In this case, the tracker control apparatus 5 may calculate at least one of the position and the posture of at least one of the workpiece transport apparatus 3 and the workpiece W based on the light reception information indicating the optical received result of the reflected light RL from the reflector 34.

In the present example embodiment, a plurality of reflectors 34 are positioned at the transport body 31. Especially, at least three reflectors 34 are positioned at the transport body 31. In this case, a positional relationship between the plurality of reflectors 34 is known, and therefore, the tracker control apparatus 5 can calculate the position of the workpiece transport apparatus 3 along each of the X-axis, the Y-axis, and the Z-axis described above, and the rotational amount of the workpiece transport apparatus 3 around each of the X-axis, the Y-axis, and the Z-axis described above, based on the light reception information indicating the optical received result of the reflected light RL from each of the at least three reflectors 34. However, two or fewer reflectors 34 may be positioned at the transport body 31. Even In this case, the tracker control apparatus 5 can calculate the position of the workpiece transport apparatus 3 along at least one of the X-axis, Y-axis, and Z-axis, and/or the rotational amount of the workpiece transport apparatus 3 around at least one of the X-axis, Y-axis, and Z-axis, based on the light reception information indicating the optical received result of reflected light RL from each of the two or fewer reflectors 34.

### (1-5) Configuration of Laser Tracker 4

Next, with reference to FIG. 6, a configuration of the laser tracker 4 will be described. FIG. 6 is a front view that illustrates an external appearance of the laser tracker 4.

As illustrated in FIG. 6, the laser tracker 4 includes a base 41 and a housing 42.

The base 41 is a member that is a foundation of the laser tracker 4. The base 41 is placed on the support surface SS, such as a floor. The base 41 may be fixed to the support surface SS. Alternatively, the base 41 may be movable relative to the support surface SS. As one example, the base 41 may be configured to be self-propelled on the support surface SS. In this case, the base 41 may be mounted on automatic transport vehicle. Alternatively, the automatic transport vehicle may be used as the base 41. At least one of an Automatic Guided Vehicle (AGV) and an Autonomous Mobile Robot (AMR) is one example of the automatic transport vehicle.

The housing 42 is attached to the base 41. The housing 42 is a member in which an optical assembly 43 is contained. The housing 42 may be rotatable around a predetermined rotational axis. In the example illustrated in FIG. 6, the housing 42 is rotatable around a rotational axis along a Y-axis (for example, an axis extending in a horizontal direction) in a tracker coordinate system, which is determined with respect to the laser tracker 4, and a rotational axis along a Z-axis (for example, an axis extending in a vertical direction or a gravity direction) in the tracker coordinate system. Namely, the housing 42 is rotatable in each of a pan direction (a longitude direction), which is a rotational direction around the rotational axis along the vertical direction or the gravity direction, and a tilt direction (a latitude direction), which is a rotational direction around the rotational axis along the horizontal direction.

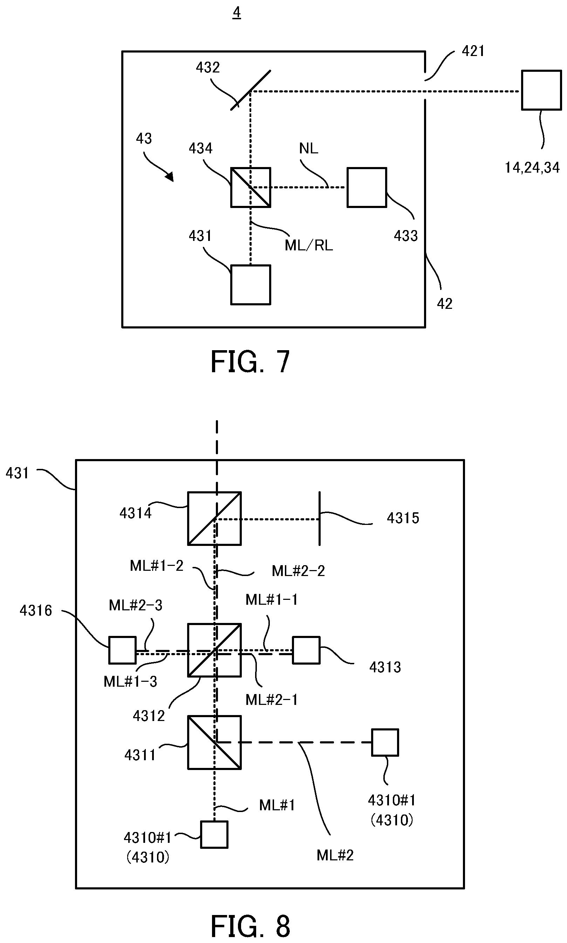

FIG. 7 illustrates a configuration of the optical assembly 43. Incidentally, FIG. 7 illustrates only one example of the configuration of the optical assembly 43, and the configuration of the optical assembly 43 is not limited to the configuration illustrated in FIG. 7. The optical assembly 43 may have any configuration that is configured to measure at least one of the position and the posture of the measurement target object. The optical assembly 43 may have any configuration that is configured to irradiate the measurement light ML onto the measurement target object and optically receive the reflected light RL from the measurement target object. The optical assembly 43 may have any configuration that is configured to irradiate the measurement light ML onto each of the reflectors 14, 24, and 34 and optically receives the reflected light RL from each of the reflectors 14, 24, and 34.

As illustrated in FIG. 7, the optical assembly 43 includes an light comb interferometer 431, a beam steering mirror 432, a camera 433, and a half mirror 434.

The light comb interferometer 431 emits the measurement light ML. The measurement light ML, which has been emitted by the light comb interferometer 431, passes through the half mirror 434, then is reflected by the beam steering mirror 432, and then is emitted toward an outside of the housing 42 through an aperture 421 formed in the housing 42. As a result, the measurement light ML is irradiated onto the measurement target object. Namely, the light comb interferometer 431 irradiates the measurement light ML onto the measurement target object through the half mirror 434 and the beam steering mirror 432. Therefore, the light comb interferometer 431 serves as an irradiation unit that irradiates the measurement light ML onto the measurement target object.

In order to measure at least one of the position and the posture of the measurement target object, the light comb interferometer 431 irradiates the measurement light ML onto the reflector positioned at the measurement target object. For example, in order to measure at least one of the position and the posture of the processing head 13, the light comb interferometer 431 may irradiate the measurement light ML onto the reflector 14 positioned at the processing head 13. For example, in order to measure at least one of the position and the posture of the measurement head 23, the light comb interferometer 431 may irradiate the measurement light ML onto the reflector 24 positioned at the measurement head 23. For example, in order to measure at least one of the position and the posture of the workpiece transport apparatus 3, the light comb interferometer 431 may irradiate the measurement light ML onto the reflector 34 positioned at the workpiece transport apparatus 3. For example, in order to measure at least one of the position and the posture of the workpiece W, the light comb interferometer 431 may irradiate the measurement light ML onto the reflector 34 positioned at the workpiece transport apparatus 3 (alternatively, the workpiece W).

Incidentally, since the optical received result of the reflected light RL is used to build the base coordinate system as described above, the light comb interferometer 431 may irradiate the measurement light ML onto the reflector 34 positioned at the workpiece transport apparatus 3 in order to build the base coordinate system, as described in detail later.

The housing 42 rotates along at least one of the pan direction and the tilt direction so that the measurement light ML is irradiated onto the desired reflector positioned at the desired measurement target object. Specifically, when the housing 42 rotates along at least one of the pan direction and the tilt direction, a direction along which the measurement light ML is emitted from the housing 42 is changed. Therefore, the housing 42 rotates along at least one of the pan direction and the tilt direction so that the measurement light ML is emitted from the housing 42 towards the desired reflector positioned at the desired measurement target object. For example, in a period which the measurement light ML should be irradiated onto the desired reflector 14 positioned at the processing head 13, the housing 42 may rotate along at least one of the pan direction and the tilt direction so that the measurement light ML is irradiated onto the desired reflector 14 positioned at the processing robot 1. For example, in a period which the measurement light ML should be irradiated onto the desired reflector 24 positioned at the measurement head 23, the housing 42 may be rotated along at least one of the pan direction and the tilt direction so that the measurement light ML is irradiated onto the desired reflector 24 positioned at the measurement head 23. For example, in a period which the measurement light ML should be irradiated onto the desired reflector 34 positioned at the workpiece transport apparatus 3, the housing 42 may be rotated along at least one of the pan direction and the tilt direction so that the measurement light ML is irradiated onto the desired reflector 34 positioned at the workpiece transport apparatus 3.

Incidentally, the laser tracker 4 may rotate only a part of the housing 42 along at least one of the pan direction and the tilt direction so that the measurement light ML is irradiated onto the desired reflector positioned at the desired measurement target object. For example, only the beam steering mirror 432 may be contained in the housing 42, the other components of the optical assembly 43 may be contained in the base 41, and the laser tracker 4 may rotate only the beam steering mirror 432 relative to the base 41 (namely, the other components of the optical assembly 43) along at least one of the pan direction and the tilt direction.

The reflected light RL from the measurement target object enters an interior of the housing 42 through the aperture 421 formed in the housing 42, then is reflected by the beam steering mirror 432, then passes through the half mirror 434, and then enters the light comb interferometer 431. The light comb interferometer 431 optically receives the reflected light RL that enters the light comb interferometer 431. Therefore, the light comb interferometer 431 serves as a light receiving unit that optically receives the reflected light RL.

FIG. 8 illustrates one example of a configuration of the light comb interferometer 431. As illustrated in FIG. 8, the light comb interferometer 431 includes two measurement light sources 4310 (specifically, a measurement light source 4310#1 and a measurement light source 4310#2), a beam splitter 4311, a beam splitter 4312, a detector 4313, a beam splitter 4314, a mirror 4315, and a detector 4316.

The measurement light source 4310 is configured to generate the measurement light ML. In the below-described description, an example in which the measurement light source 4310 is an light comb light source. In this case, the measurement light source 4310 generates, as the measurement light ML, a pulsed light including frequency components that are arranged with equal interval on a frequency axis. The light including the frequency components that are arranged with equal interval on the frequency axis may be referred to as light frequency comb. The measurement light sources 4310#1 and #2 emit two measurement lights ML whose phases are synchronized with each other and that are coherent, respectively. For example, oscillation frequencies of the measurement light sources 4310#1 and #2 may be different from each other. Therefore, the plurality of measurement lights ML respectively emitted from the measurement light sources 4310#1 and #2 may be the plurality of measurement lights ML having different pulse frequencies (for example, the number of the pulsed light per unit time, and an inverse number of an emission cycle of the pulsed light). As one example, the measurement light source 4310#1 may emit, as the measurement light ML, the measurement light ML#1 whose pulse frequency is 25 GHz, and the measurement light source 4310#2 may emit, as the measurement light ML, the measurement light ML#2 whose pulse frequency is 25 GHz + α (for example, +100 kHz).

The measurement light ML that has been emitted from the measurement light source 4310 enters the beam splitter 4311. Specifically, the measurement light ML#1 that has been emitted from the measurement light source 4310#1 and the measurement light ML#2 that has been emitted from the measurement light source 4310#2 enters the beam splitter 4311 The beam splitter 4311 emits, toward the beam splitter 4312, the measurement lights ML#1 and ML#2 that have entered the beam splitter 4311. Namely, the beam splitter 4311 emits, toward the same direction (namely, toward a direction along which the beam splitter 4312 is positioned), the measurement lights ML#1 and ML#2 that have entered the beam splitter 4311 from different directions, respectively.

The beam splitter 4312 reflects, toward the detector 4313, measurement light ML#1-1 that is a part of the measurement light ML#1 that has entered the beam splitter 4312. The beam splitter 4312 emits, toward the beam splitter 4314, measurement light ML#1-2 that is another part of the measurement light ML#1 that has entered the beam splitter 4312. The beam splitter 4312 reflects, toward the detector 4313, measurement light ML#2-1 that is a part of the measurement light ML#2 that has entered the beam splitter 4312. The beam splitter 4312 emits, toward the beam splitter 4314, measurement light ML#2-2 that is another part of the measurement light ML#2 that has entered the beam splitter 4312.

The measurement lights ML#1-1 and ML#2-1 that have been emitted from the beam splitter 4312 enter the detector 4313. The detector 4313 detects (in other words, optically receives) the measurement light ML#1-1 and the measurement light ML#2-1. Especially, the detector 4313 detects (in other words, optically receives) interference light generated by an interference between the measurement light ML#1-1 and the measurement light ML#2-1. Therefore, the detector 4313 may include a light receiving element (a light receiving unit, typically a photoelectric conversion element) that is configured to optically receive light. A detected results by the detector 4313 (namely, an optical received result of the measurement lights ML#1-1 and ML#2-1) is output to the tracker control apparatus 5 as a part of the light reception information indicating the optical received result of the reflected light RL by the laser tracker 4.

The measurement lights ML#1-2 and ML#2-2 that have been emitted from the beam splitter 4312 enter the beam splitter 4314. The beam splitter 4314 emits, toward the mirror 4315, a part of the measurement light ML#1-2 that has entered the beam splitter 4314. The beam splitter 4314 emits, toward the half mirror 433 positioned outside the light comb interferometer 431, a part of the measurement light ML#2-2 that has entered the beam splitter 4314.

The measurement light ML#1-2 that has been emitted from the beam splitter 4314 enters the mirror 4315. The measurement light ML#1-2 that has entered the mirror 4315 is reflected by a reflective surface of the mirror 4315. Specifically, the mirror 4315 reflects, toward the beam splitter 4314, the measurement light ML#1-2 that has entered the mirror 4315 as measurement light ML#1-3 that is a reflected light thereof. The measurement light ML#1-3 that has been emitted from the mirror 4315 enters the beam splitter 4314. The beam splitter 4314 emits, toward the beam splitter 4312, the measurement light ML#1-3 that has entered the beam splitter 4314. The measurement light ML#1-3 that has been emitted from the beam splitter 4314 enters the beam splitter 4312. The beam splitter 4312 emits, toward the detector 4316, the measurement light ML#1-3 that has entered the beam splitter 4312.

On the other hand, the measurement light ML#2-2 that has been emitted from the beam splitter 4314 is irradiated onto the measurement target object through the half mirror 434 and the beam steering mirror 432. The reflected light RL, which is generated by irradiating the measurement light ML#2-2 onto the measurement target object, enters the beam splitter 4314 through the beam steering mirror 432 and the half mirror 434. The beam splitter 4314 emits, towards the beam splitter 4312, at least a part of the reflected light RL that has entered the beam splitter 4314. The beam splitter 4312 emits, towards the detector 4316, at least a part of the reflected light RL that has entered the beam splitter 4312.

The detector 4316 detects (in other words, optically receives) the measurement light ML#1-3 and the reflected light RL. Especially, the detector 4316 detects (in other words, optically receives) interference light generated by an interference between the measurement light ML#1-3 and the reflected light RL. Therefore, the detector 4316 may include a light receiving element (a light receiving unit, typically a photoelectric conversion element) that is configured to optically receive light. A detected results by the detector 4316 (namely, an optical received result of the measurement light ML#1-3 and the reflected light RL) is output to the tracker control apparatus 5 as a part of the light reception information indicating the optical received result of the reflected light RL by the laser tracker 4.

The tracker control apparatus 5 calculates at least one of the position and the posture of the measurement target object based on the light reception information including the detected result by the detector 4313 and the detected result by the detector 4316. Here, a principle of calculating at least one of the position and the posture of the measurement target object based on the light reception information will be described. Especially, in the below-described description, a principle of calculating at least one of the position and the posture of the processing head 13 will be described for convenience of description. However, the below-described description may be used as a description of a principle of calculating at least one of the position and the posture of the measurement head 23 by replacing the terms "processing head 13" and "reflector 14" with the terms "measurement head 23" and "reflector 24", respectively. The below-described description may be used as a description of a principle for calculating at least one of the position and the posture of the workpiece transport apparatus 3 by replacing the terms "processing head 13" and "reflector 14" with the terms "workpiece transport apparatus 3" and "reflector 34", respectively. The below-described description may be used as a description of a principle of calculating at least one of the position and the posture of the workpiece W by replacing the terms "processing head 13" and "reflector 14" with the terms "workpiece W" and "reflector 34", respectively.

Since the pulse frequency of the measurement light ML#1 is different from the pulse frequency of the measurement light ML#2, a pulse frequency of the measurement light ML#1-1 is different from a pulse frequency of the measurement light ML#2-1. Therefore, the interference light generated by the interference between the measurement light ML#1-1 and the measurement light ML#2-1 is interference light in which pulsed light appears in synchronization with a timing at which the pulsed light of the measurement light ML#1-1 and the pulsed light of the measurement light ML#2-1 enter the detector 4313 at the same time. Similarly, a pulse frequency of the measurement light ML#1-3 is different from a pulse frequency of the reflected light RL. Therefore, the interference light generated by the interference between the measurement light ML#1-3 and the reflected light RL is interference light in which pulsed light appears in synchronization with a timing at which the pulsed light of the measurement light ML#1-3 and the pulsed light of the reflected light RL enter the detector 4316 at the same time.

Here, a position (a position along a time axis) of the pulsed light of the interference light detected by the detector 4316 changes depending on a distance between the laser tracker 4 and the reflector 14. This is because the interference light detected by the detector 4316 is the interference light generated by the interference between the reflected light RL that propagates toward the detector 4316 through the reflector 14 and the measurement light ML#1-3 that propagates toward the detector 4316 without going through the reflector 14. On the other hand, a position (a position along a time axis) of the pulsed light of the interference light detected by the detector 4313 does not change depending on the distance between the laser tracker 4 and the reflector 14. Therefore, it can be said that a difference in time between the pulsed light of the interference light detected by the detector 4313 and the pulsed light of the interference light detected by the detector 4316 indirectly indicates a positional relationship between the laser tracker 4 and the reflector 14 (typically, the distance between the laser tacker 4 and the reflector 14). Therefore, the tracker control apparatus 5 may calculate the distance between the laser tracker 4 and the reflector 14 based on the difference in time between the pulsed light of the interference light detected by the detector 4313 and the pulsed light of the interference light detected by the detector 4316. Furthermore, an orientation of the reflector 14 as seen from the laser tracker 4 is the same as a direction along which the measurement light ML is emitted from the laser tracker 4. The direction along which the measurement light ML is emitted from the laser tracker 4 may be acquired as a rotational amount of the housing 42 along each of the pan direction and the tilt direction. Therefore, the tracker control apparatus 5 may acquire the rotational amount of the housing 42 as a part of the light reception information from the laser tracker 4, and calculate the orientation of the reflector 14 as seen from the laser tracker 4 based on the light reception information. As a result, the tracker control apparatus 5 may calculate the position of the reflector 14 in the three-dimensional space based on the distance between the laser tracker 4 and the reflector 14 and the orientation of the reflector 14 as seen from the laser tracker 4.

Since the plurality of reflectors 14 are positioned at the processing robot 1 as described above, the tracker control apparatus 5 may calculate the position of each of the plurality of reflectors 14 in the three-dimensional space. Then, the tracker control apparatus 5 may calculate at least one of the position and the posture of the processing head 13 in the three-dimensional space based on the position of each of the plurality of reflectors 14 in the three-dimensional space.

Again in FIG. 7, reflected light NL of ambient light (alternatively, illumination light) from the reflector 14, 24 or 34 enters the interior of housing 42 through the aperture 421 formed in the housing 42, then is reflected by the beam steering mirror 432, the is reflected by the half mirror 434, and the enters the camera 433. The camera 433 images the reflector 14, 24 or 34 by using an imaging element to optically receive the reflected light NL. A reflector image, which is an image of the reflectors 14, 24 or 34 captured by the camera 433, is output to the tracker control apparatus 5.

The tracker control apparatus 5 may track the reflectors 14, 24 or 34 based on the reflector image. Furthermore, the tracker control apparatus 5 may control the rotational movement of the housing 42 so that the measurement light ML is irradiated onto the desired reflector 14, 24 or 34 based on the reflector image.

### (1-6) Configuration of Tracker Control Apparatus 5

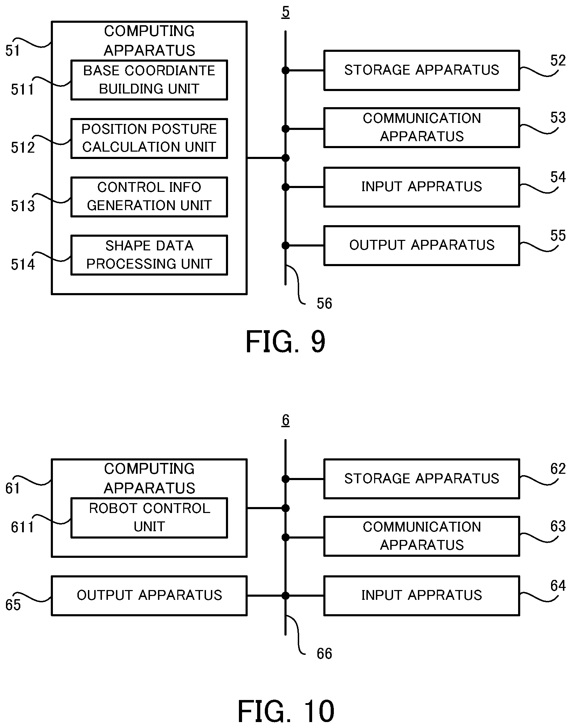

Next, with reference to FIG. 9, the tracker control apparatus 5 in the present example embodiment will be described. FIG. 9 is a block diagram that illustrates a configuration of the tracker control apparatus 5 in the present example embodiment.

As illustrated in FIG. 6, the tracker control apparatus 5 includes a computing apparatus 51, a storage apparatus 52, a communication apparatus 53, an input apparatus 54, and a output apparatus 55. The computing apparatus 51, the storage apparatus 52, the communication apparatus 53, the input apparatus 54, and the output apparatus 55 may be connected through a data bus 56.

The computing apparatus 51 includes at least one of a CPU (Central Processing unit) and a GPU (Graphic Processing unit), for example. The computing apparatus 51 read a computer program. For example, the computing apparatus 51 may read the computer program recorded in the storage apparatus 52. For example, the computing apparatus 51 may read the computer program recorded in a non-transitory computer-readable recording medium by using a non-illustrated recording medium reading apparatus. The computing apparatus 51 may acquire (namely, download or read) the computer program from a non-illustrated apparatus that is external to the tracker control apparatus 5 through the communication apparatus 53. The computing apparatus 51 executes the read computer program. As a result, a logical functional block for performing an operation that should be performed by the tracker control apparatus 5 is implemented in the computing apparatus 51. Namely, the computing apparatus 51 is configured to serve as a controller for implementing the logical functional block for performing the operation that should be performed by the tracker control apparatus 5.

An arithmetic model that is buildable by a machine learning may be implemented in the computing apparatus 51 by the computing apparatus 51 executing the computer program. One example of the arithmetic model that is buildable by the machine learning is an arithmetic model including a neural network (so-called Artificial Intelligence (AI)), for example. In this case, the learning of the arithmetic model may include a learning of parameters of the neural network (for example, at least one of weights and biases). The computing apparatus 51 may perform the operation, which should be performed by the tracker control apparatus 5, by using the arithmetic model. Note that the arithmetic model that has been built by off-line machine learning using training data may be implemented in the computing apparatus 51. Moreover, the arithmetic model implemented in the computing apparatus 51 may be updated by online machine learning on the computing apparatus 51. Alternatively, the computing apparatus 51 may perform the operation, which should be performed by the tracker control apparatus 5, by using the arithmetic model implemented in an apparatus that is external to the computing apparatus 51 (namely, an apparatus that is positioned separately from the tracker control apparatus 5), in addition to or instead of the arithmetic model implemented on the computing apparatus 51.

FIG. 9 illustrates one example of the logical functional block implemented in the computing apparatus 51. As illustrated in FIG. 9, a base coordinate building unit 511, a position-posture calculation unit 512, a control information generation unit 513, and a shape data processing unit 514 are implemented in the computing apparatus 51. Incidentally, operations of the base coordinate building unit 511, the position-posture calculation unit 512, the control information generation unit 513, and the shape data processing unit 514 will be described in detail later, however, an overview thereof will be described briefly here. The base coordinate building unit 511 build the base coordinate system based on the light reception information acquired from the laser tracker 4. The position-posture calculation unit 512 calculates at least one of the position and posture of at least one of the processing head 13, the measurement head 23, the workpiece transport apparatus 3, and the workpiece W based on the light reception information acquired from the laser tracker 4. The control information generation unit 513 generates the robot control information, which is usable by the robot control apparatus 6 to control at least one of the processing robot 1 and the measurement robot 2, based on at least one of the position and the posture of at least one of the processing head 13, the measurement head 23, the workpiece transport apparatus 3, and the workpiece W. The shape data processing unit 514 performs a predetermined data processing on the three-dimensional shape data that indicates the measured result of the three-dimensional shape of the workpiece W by the measurement head 23.

The storage apparatus 52 is configured to store desired data. For example, the storage apparatus 52 may temporarily store the computer program that is executed by the computing apparatus 51. The storage apparatus 52 may temporarily store data temporarily used by the computing apparatus 51 when the computing apparatus 51 executes the computer program. The storage apparatus 52 may store data stored for a long term by the tracker control apparatus 5. Incidentally, the storage apparatus 52 may include at least one of a RAM (Random Access Memory), a ROM (Read Only Memory), a hard disk apparatus, a magneto-optical disc, a SSD (Solid State Drive), and a disk array apparatus. Namely, the storage apparatus 52 may include a non-transitory recording medium.

The communication apparatus 53 is configured to communicate with an apparatus external to the tracker control apparatus 5 through a communication network. In the present example embodiment, the communication apparatus 53 is configured to communicate with at least the laser tracker 4 and the robot control apparatus 6 through the communication network. For example, the communication apparatus 53 may acquire (namely, receive) the light reception information, which indicates the received result of the reflected light RL from the reflector 14, 24 or 34, from the laser tracker 4 by communicating with the laser tracker 4. For example, the communication apparatus 53 may output (namely, transmit) the robot control information described above to the robot control apparatus 6 by communicating with the robot control apparatus 6.

The input apparatus 54 is an apparatus that receives an input of information from an outside of the tracker control apparatus 5 to the tracker control apparatus 5. For example, the input apparatus 54 may include an operating apparatus (for example, at least one of a keyboard, a mouse, and a touch panel) that is operable by an operator (for example, a user of the processing system PSYS). For example, the input apparatus 54 may include a reading apparatus that is configured to read information recorded as data on a recording medium that is attachable to the tracker control apparatus 5.

The output apparatus 55 is an apparatus that outputs information to an outside of the tracker control apparatus 5. For example, the output apparatus 55 may output the information as an image. Namely, the output apparatus 55 may include a display apparatus (so-called a display) that is configured to display the image indicating the information that should be output. For example, the output apparatus 55 may output the information as sound. Namely, the output apparatus 55 may include a sound apparatus (so-called a speaker) that is configured to output the sound. For example, the output apparatus 55 may output the information on a paper. Namely, the output apparatus 55 may include a printing apparatus (so-called a printer) that is configured to print the desired information on the paper.

### (1-7) Configuration of Robot Control Apparatus 6

Next, with reference to FIG. 10, the robot control apparatus 6 in the present example embodiment will be described. FIG. 10 is a block diagram that illustrates a configuration of the robot control apparatus 6 in the present example embodiment.

As illustrated in FIG. 10, the robot control apparatus 6 includes a computing apparatus 61, a storage apparatus 62, a communication apparatus 63, an input apparatus 64, and a output apparatus 65. The computing apparatus 61, the storage apparatus 62, the communication apparatus 63, the input apparatus 64, and the output apparatus 65 may be connected through a data bus 66.

The computing apparatus 61 includes at least one of a CPU (Central Processing unit) and a GPU (Graphic Processing unit), for example. The computing apparatus 61 read a computer program. For example, the computing apparatus 61 may read the computer program recorded in the storage apparatus 62. For example, the computing apparatus 61 may read the computer program recorded in a non-transitory computer-readable recording medium by using a non-illustrated recording medium reading apparatus. The computing apparatus 61 may acquire (namely, download or read) the computer program from a non-illustrated apparatus that is external to the robot control apparatus 6 through the communication apparatus 63. The computing apparatus 61 executes the read computer program. As a result, a logical functional block for performing an operation that should be performed by the robot control apparatus 6 is implemented in the computing apparatus 61. Namely, the computing apparatus 61 is configured to serve as a controller for implementing the logical functional block for performing the operation that should be performed by the robot control apparatus 6.

An arithmetic model that is buildable by a machine learning may be implemented in the computing apparatus 61 by the computing apparatus 61 executing the computer program. One example of the arithmetic model that is buildable by the machine learning is an arithmetic model including a neural network (so-called Artificial Intelligence (AI)), for example. In this case, the learning of the arithmetic model may include a learning of parameters of the neural network (for example, at least one of weights and biases). The computing apparatus 61 may perform the operation, which should be performed by the robot control apparatus 6, by using the arithmetic model. Note that the arithmetic model that has been built by off-line machine learning using training data may be implemented in the computing apparatus 61. Moreover, the arithmetic model implemented in the computing apparatus 61 may be updated by online machine learning on the computing apparatus 61. Alternatively, the computing apparatus 61 may perform the operation, which should be performed by the robot control apparatus 6, by using the arithmetic model implemented in an apparatus that is external to the computing apparatus 61 (namely, an apparatus that is positioned separately from the robot control apparatus 6), in addition to or instead of the arithmetic model implemented on the computing apparatus 61.

FIG. 10 illustrates one example of the logical functional block implemented in the computing apparatus 61. As illustrated in FIG. 10, a robot control unit 611 is implemented in the computing apparatus 61. The robot control unit 611 is configured to control at least one of the processing robot 1 and the measurement robot 2. Specifically, the robot control unit 611 may generate the robot control signal for controlling at least one of the processing robot 1 and the measurement robot 2. For example, the robot control unit 611 may generate the robot control signal based on the robot control information acquired from the tracker control apparatus 5. Then, the robot control unit 611 may control at least one of the processing robot 1 and the measurement robot 2 by outputting the generated robot control signal to at least one of the processing robot 1 and the measurement robot 2.

The storage apparatus 62 is configured to store desired data. For example, the storage apparatus 62 may temporarily store the computer program that is executed by the computing apparatus 61. The storage apparatus 62 may temporarily store data temporarily used by the computing apparatus 61 when the computing apparatus 61 executes the computer program. The storage apparatus 62 may store data stored for a long term by the robot control apparatus 6. Incidentally, the storage apparatus 62 may include at least one of a RAM (Random Access Memory), a ROM (Read Only Memory), a hard disk apparatus, a magneto-optical disc, a SSD (Solid State Drive), and a disk array apparatus. Namely, the storage apparatus 62 may include a non-transitory recording medium.

The communication apparatus 63 is configured to communicate with an apparatus external to the robot control apparatus 6 through a communication network. In the present example embodiment, the communication apparatus 63 is configured to communicate with at least the processing robot 1, the measurement robot 2, and the tracker control apparatus 5 through the communication network. For example, the communication apparatus 63 may acquire (namely, receive) the robot control information described above from the tracker control apparatus 5 by communicating with the tracker control apparatus 5. For example, the communication apparatus 63 may output (namely, transmit) the robot control signal described above to the processing robot 1 by communicating with the processing robot 1. For example, the communication apparatus 63 may output (namely, transmit) the robot control signals described above to the measurement robot 2 by communicating with the measurement robot 2.

The input apparatus 64 is an apparatus that receives an input of information from an outside of the robot control apparatus 6 to the robot control apparatus 6. For example, the input apparatus 64 may include an operating apparatus (for example, at least one of a keyboard, a mouse, and a touch panel) that is operable by the operator (for example, the user of the processing system PSYS). For example, the input apparatus 64 may include a reading apparatus that is configured to read information recorded as data on a recording medium that is attachable to the robot control apparatus 6.

The output apparatus 65 is an apparatus that outputs information to an outside of the robot control apparatus 6. For example, the output apparatus 65 may output the information as an image. Namely, the output apparatus 65 may include a display apparatus (so-called a display) that is configured to display the image indicating the information that should be output. For example, the output apparatus 65 may output the information as sound. Namely, the output apparatus 65 may include a sound apparatus (so-called a speaker) that is configured to output the sound. For example, the output apparatus 65 may output the information on a paper. Namely, the output apparatus 65 may include a printing apparatus (so-called a printer) that is configured to print the desired information on the paper.

### (2) Operation of Processing System PSYS in Present Example Embodiment

Next, with reference to FIG. 11, the operation of the processing system PSYS, which includes the robot system RSYS and the position measurement system MSYS, in the present example embodiment will be described. FIG. 11 is a flowchart that illustrates a flow of the operation performed in cooperation by the robot system RSYS and the position measurement system MSYS in the present example embodiment.

### (2-1) Building of Base Coordinate System : Step S101

As illustrated in FIG. 11, the tracker control apparatus 5 of the position measurement system MSYS first build the base coordinate system that is used as the base in the first process space SP (a step S101). In the present example embodiment, an example in which the base coordinate system is built by using the reflector 34 positioned at the workpiece transport apparatus 3 will be described. Specifically, the base coordinate building unit 511 of the tracker control apparatus 5 builds the base coordinate system after the workpiece transport apparatus 3, on which the workpiece W is placed, moves into the first process space SP. The base coordinate system that is built in a case where the workpiece transport apparatus 3 moves into the first process space SP is a coordinate system that is used as the base in the processing system PSYS in a period during which the workpiece transport apparatus 3 is positioned in the first process space SP. The base coordinate system that is built in a case where the workpiece transport apparatus 3 moves into the first process space SP is a coordinate system that is used as the base in the processing system PSYS in a period during which the workpiece W is positioned in the first process space SP. The base coordinate system that is built in a case where the workpiece transport apparatus 3 moves into the first process space SP is a coordinate system that is used as the base in the processing system PSYS in a period during which the processing robot 1 positioned in the first process space SP processes the workpiece W positioned in the first process space SP. The base coordinate system that is built in a case where the workpiece transport apparatus 3 moves into the first process space SP is a coordinate system that is used as the base in the processing system PSYS in a period during which the measurement robot 2 positioned in the first process space SP measures the workpiece W positioned in the first process space SP.

Especially in the present example embodiment, the base coordinate building unit 511 may build the base coordinate system after the workpiece transport apparatus 3, which has moved into the first process space SP, stops in the first process space SP. Namely, the base coordinate building unit 511 may start building the base coordinate system after the workpiece transport apparatus 3, which has moved into the first process space SP, stops in the first process space SP. In this case, the base coordinate system that is built in a case where the workpiece transport apparatus 3 stops at one position in the first process space SP may be the coordinate system that is used as the base in the processing system PSYS in a period during which the workpiece transport apparatus 3 is positioned at the one position in the first process space SP. The base coordinate system that is built in a case where the workpiece transport apparatus 3 stops at one position in the first process space SP may be the coordinate system that is used as the base in the processing system PSYS in a period during which the workpiece W is positioned at the one position in the first process space SP. The base coordinate system that is built in a case where the workpiece transport apparatus 3 stops at one position in the first process space SP may be the coordinate system that is used as the base in the processing system PSYS in a period during which the processing robot 1 positioned in the first process space SP processes the workpiece W positioned at the one position in the first process space SP. The base coordinate system that is built in a case where the workpiece transport apparatus 3 stops at one position in the first process space SP is the coordinate system that is used as the base in the processing system PSYS in a period during which the measurement robot 2 positioned in the first process space SP measures the workpiece W positioned at the one position in the first process space SP.

Alternatively, as described in detail in a modified example below, the base coordinate building unit 511 may build the base coordinate system in a period during which the workpiece transport apparatus 3 is moving in the first process space SP.

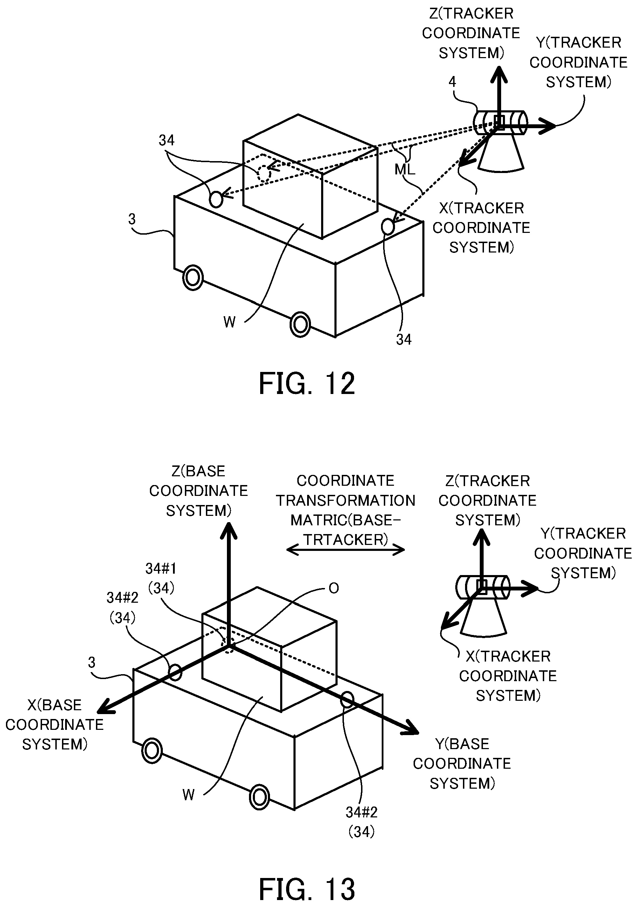

In order to build the base coordinate system, the base coordinate building unit 511 controls the laser tracker 4 to irradiate the measurement light ML onto each of the plurality of reflectors 34 positioned at the workpiece transport apparatus 3, as illustrated in FIG. 12. As a result, the laser tracker 4 optically receives the reflected light RL from each of the plurality of reflectors 34. The position-posture calculation unit 512 of the tracker control apparatus 5 calculates the position of each of the plurality of reflectors 34 based on the light reception information indicating the optical received result of the reflected light RL from each of the plurality of reflectors 34. Incidentally, as illustrated in FIG. 12, here, the position-posture calculation unit 512 calculates the position of each of the plurality of reflectors 34 in the tracker coordinate system that is determined with respect to the laser tracker 4. For example, the position-posture calculation unit 512 may calculate the position of each of the plurality of reflectors 34 along the X-axis of the tracker coordinate system, the position of each of the plurality of reflectors 34 along the Y-axis of the tracker coordinate system, which is orthogonal to the X-axis of the tracker coordinate system, and the position of each of the plurality of reflectors 34 along the Z-axis of the tracker coordinate system, which is orthogonal to the X-axis and the Y-axis of the tracker coordinate system. The tracker coordinate system may be a polar coordinate system whose origin is the laser tracker 4.

Then, the base coordinate building unit 511 builds the base coordinate system based on the position of each of the plurality of reflectors 34. For example, the base coordinate building unit 511 may build the base coordinate system by specifying an origin O of the base coordinate system based on the position of at least one of the plurality of reflectors 34. For example, the base coordinate building unit 511 may build the base coordinate system by specifying the X-axis of the base coordinate system based on the position of at least one of the plurality of reflectors 34. For example, the base coordinate building unit 511 may build the base coordinate system by specifying the Y-axis of the base coordinate system based on the position of at least one of the plurality of reflectors 34. For example, the base coordinate building unit 511 may build the base coordinate system by specifying the Z-axis of the base coordinate system based on the position of at least one of the plurality of reflectors 34.

FIG. 13 illustrates one example of an operation for building the base coordinate system. As illustrated in FIG. 13, the base coordinate building unit 511 specifies the position of a first reflector 34#1 of the plurality of reflectors 34 as the origin O of the base coordinate system. Next, as illustrated in FIG. 13, the base coordinate building unit 511 specifies a straight line axis, which extends from the first reflector 34#1 to a second reflector 34#2 of the plurality of reflectors 34, as the X-axis (alternatively, a first axis) of the base coordinate system. Next, as illustrated in FIG. 13, the base coordinate building unit 511 specifies a straight line axis, which is orthogonal to the specified X-axis, which passes through the origin O, and which is along a plane including the first reflector 34#1, the second reflector 34#2, and a third reflector 34#3 of the plurality of reflectors 34, as the Y-axis (alternatively, a second axis) of the base coordinate system. Next, as illustrated in FIG. 13, the base coordinate building unit 511 specifies a straight line axis, which is orthogonal to both of the X-axis and the Y-axis already specified, as the Z-axis (alternatively, a third axis) of the base coordinate system. As a result, as illustrated in FIG. 13, the base coordinate building unit 511 builds the base coordinate system.

Since each of the plurality of reflectors 34, which is used to build the base coordinate system, is positioned at the position that is fixed to the workpiece W, the base coordinate system may be regarded as a coordinate system that is determined with respect to the workpiece W. The base coordinate system may be regarded as a coordinate system that is fixed to the workpiece W. The base coordinate system may be regarded as a coordinate system satisfying a condition that a positional relationship between the workpiece W and the base coordinate system is fixed.

The plurality of reflectors 34, which are used to build the base coordinate system, may be positioned at any position of the workpiece transport apparatus 3. However, the plurality of reflectors 34 should be positioned so as to satisfy a condition that the first reflector 34#1 is distant from the second reflector 34#2 along a first direction, and at least one of the first reflector 34#1 and the second reflector 34#2 is distant from the third reflector 34#3 along a third direction that intersects the first direction. Namely, the plurality of reflectors 34 should be positioned so as to satisfy a condition that all of the plurality of reflectors 34 are not positioned in a straight line.

The plurality of reflectors 34, which are used to build the base coordinate system, may be positioned at the workpiece transport apparatus 3 in a predetermined arrangement pattern that is set in advance from a viewpoint of achieving a purpose of building the base coordinate system. For example, the plurality of reflectors 34 may be positioned so as to satisfy a condition that the first reflector 34#1 is distant from the second reflector 34#2 along a first direction, and the first reflector 34#1 is distant from the third reflector 34#3 along a second direction that is orthogonal to the first direction. Namely, the plurality of reflectors 34 may be positioned so as to satisfy a condition that a straight line axis extending from the first reflector 34#1 to the second reflector 34#2 is orthogonal to a straight line axis extending from the first reflector 34#1 to the third reflector 34#3. In this case, the base coordinate building unit 511 may specify the straight line axis extending from the first reflector 34#1 to the second reflector 34#2 as the X-axis of the base coordinate system, and specify the straight line axis extending from the first reflector 34#1 to the third reflector 34#3 as the Y-axis of the base coordinate system. In this case, the base coordinate building unit 511 may build the base coordinate system without determining the plane including the first reflector 34#1 to the third reflector 34#3. Therefore, in a case where the plurality of reflectors 34 are positioned in the predetermined arrangement pattern, the base coordinate building unit 511 can build the base coordinate system more easily, compared to a case where the plurality of reflectors 34 are positioned in a random arrangement pattern.

In a case where the plurality of reflectors 34 are positioned in the predetermined arrangement pattern, information related to the arrangement pattern of the plurality of reflectors 34 may be known information for the base coordinate building unit 511. In this case, the base coordinate building unit 511 can build the base coordinate system easily based on the information related to the arrangement pattern of the plurality of reflectors 34.

The plurality of reflectors 34 may be positioned at positions satisfying a condition that the measurement light ML emitted by the laser tracker 4 is not blocked by the workpiece W. In this case, the laser tracker 4 can irradiate the measurement light ML onto the reflector 34 properly and optically receive the reflected light RL from the reflector 34 properly even in a case where the workpiece W is placed on the workpiece transport apparatus 3. Therefore, even in a case where the workpiece W is placed on the workpiece transport apparatus 3, the base coordinate building unit 511 can build the base coordinate system properly.

Since the base coordinate system is built based on the position of each of the plurality of reflectors 34 in the tracker coordinate system, the position of each of the plurality of reflectors 34 in the base coordinate system is determined at a timing at which the base coordinate system has been built. In this case, the base coordinate building unit 511 may generate a coordinate transformation matrix (base-tracker) for converting a position in one of the tracker coordinate system and the base coordinate system to a position in the other of the tracker coordinate system and the base coordinate system, based on the position of each of the plurality of reflectors 34 in the tracker coordinate system and the position of each of the plurality of reflectors 34 in the base coordinate system. In this case, the operation for building the base coordinate system may include an operation for generating the coordinate transformation matrix (base-tracker).

At the step S101, the position-posture calculation unit 512 may further calculate at least one of the position and the posture of the workpiece transport apparatus 3 based on the position of each of the plurality of reflectors 34. Specifically, the position-posture calculation unit 512 may calculate at least one of the position and the posture of the workpiece transport apparatus 3 in the tracker coordinate system based on the position of each of the plurality of reflectors 34 in the tracker coordinate system. Then, the position-posture calculation unit 512 may convert at least one of the position and the posture of the workpiece transport apparatus 3 in the tracker coordinate system to at least one of the position and the posture of the workpiece transport apparatus 3 in the base coordinate system by using the coordinate transformation matrix (base-tracker). As a result, the position-posture calculation unit 512 may calculate at least one of the position and the posture of the workpiece transport apparatus 3 in the base coordinate system. Alternatively, the position-posture calculation unit 512 may convert the position of each of the plurality of reflectors 34 in the tracker coordinate system to the position of each of the plurality of reflectors 34 in the base coordinate system by using the coordinate transformation matrix (base-tracker). Then, the position-posture calculation unit 512 may calculate at least one of the position and the posture of the workpiece transport apparatus 3 in the base coordinate system based on the position of each of the plurality of reflectors 34 in the base coordinate system.

However, in a case where the workpiece transport apparatus 3, which transports the workpiece W, moves so as to stop at a predetermined position in the process space SP in a predetermined posture, information related to the position and the posture of the workpiece transport apparatus 3 may be regarded as known information for the tracker control apparatus 5. In this case, the position-posture calculation unit 512 may not calculate at least one of the position and the posture of the workpiece transport apparatus 3 at the step S101.

At the step S101, the position-posture calculation unit 512 may further calculate at least one of the position and the posture of the workpiece W based on the position of each of the plurality of reflectors 34. Specifically, the position-posture calculation unit 512 may calculate at least one of the position and the posture of the workpiece W in the tracker coordinate system based on the position of each of the plurality of reflectors 34 in the tracker coordinate system. Then, the position-posture calculation unit 512 may convert at least one of the position and the posture of the workpiece W in the tracker coordinate system to at least one of the position and the posture of the workpiece W in the base coordinate system by using the coordinate transformation matrix (base-tracker). As a result, the position-posture calculation unit 512 may calculate at least one of the position and the posture of the workpiece W in the base coordinate system. Alternatively, the position-posture calculation unit 512 may convert the position of each of the plurality of reflectors 34 in the tracker coordinate system to the position of each of the plurality of reflectors 34 in the base coordinate system by using the coordinate transformation matrix (base-tracker). Then, the position-posture calculation unit 512 may calculate at least one of the position and the posture of the workpiece W in the base coordinate system based on the position of each of the plurality of reflectors 34 in the base coordinate system.

In a case where at least one of the position and the posture of the workpiece W is calculated, the plurality of reflectors 34 may be positioned at the workpiece transport apparatus 3 so as to surround the workpiece W placed on the workpiece transport apparatus 3. In this case, the position-posture calculation unit 512 can calculate at least one of the position and the posture of the workpiece W with higher accuracy, compared to a case where the plurality of reflectors 34 are not positioned so as to surround the workpiece W.

However, in a case where the workpiece transport apparatus 3, which transports the workpiece W, moves so as to stop at a predetermined position in the process space SP in a predetermined posture, information related to the position and the posture of the workpiece W, which is transported by the workpiece transport apparatus 3, may be regarded as known information for the tracker control apparatus 5. In this case, the position-posture calculation unit 512 may not calculate at least one of the position and the posture of the workpiece W at the step S101.

### (2-2) Control of At Least One of Position and Posture of Processing Head 13 : Step S102

Again in FIG. 11, then, the tracker control apparatus 5 calculates at least one of the position and the posture of the processing head 13 attached to the processing robot 1 positioned in the first process space SP, and the robot control apparatus 6 controls the position and the posture of the processing robot 1 based on at least one of the position and the posture of the processing head 13 generated (a step S102). Specifically, the robot control apparatus 6 controls at least one of the position and the posture of the processing head 13 so that the processing head 13 processes the workpiece W. For example, the robot control apparatus 6 may move and position the processing head 13 so that the processing head 13 is positioned at a desired processing start position for starting processing the workpiece W, from a predetermined standby position. Namely, the robot control apparatus 6 may control the position of the processing head 13 so that the position of the processing head 13 is the desired processing start position that allows the processing head 13 to process the workpiece W. For example, the robot control apparatus 6 may control the posture of the processing head 13 so that the processing head 13 takes a desired processing posture for starting processing the workpiece W. Namely, the robot control apparatus 6 may control the posture of the processing head 13 so that the posture of the processing head 13 is the desired processing posture that allows the processing head 13 to process the workpiece W.

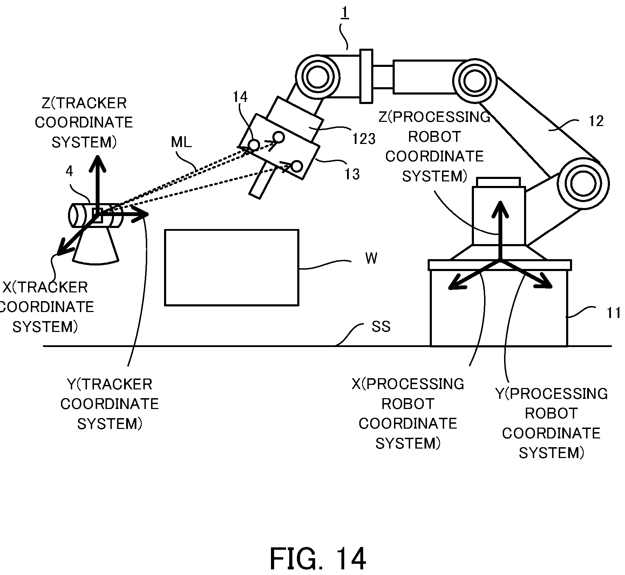

In order to calculate the position and the posture of the processing head 13, the position-posture calculation unit 512 of the tracker control apparatus 5 controls the laser tracker 4 to irradiate the measurement light ML onto each of the plurality of reflectors 14 positioned at the processing head 13, as illustrated in FIG. 14. As a result, the laser tracker 4 optically receives the reflected light RL from each of the plurality of reflectors 14. Then, the position-posture calculation unit 512 calculates the position of each of the plurality of reflectors 14 based on the light reception information indicating the optical received result of the reflected light RL from each of the plurality of reflectors 14. Incidentally, as illustrated in FIG. 14, here, the position-posture calculation unit 512 calculates the position of each of the plurality of reflectors 14 in the tracker coordinate system that is determined with respect to the laser tracker 4. For example, the position-posture calculation unit 512 may calculate the position of each of the reflectors 14 along the X-axis of the tracker coordinate system, the position of each of the reflectors 14 along the Y-axis of the tracker coordinate system, and the position of each of the reflectors 14 along the Z-axis of the tracker coordinate system.

Then, the position-posture calculation unit 512 may calculate at least one of the position and the posture of the processing head 13 based on the position of each of the plurality of reflectors 14. Specifically, the position-posture calculation unit 512 may calculate at least one of the position and the posture of the processing head 13 in the tracker coordinate system based on the position of each of the plurality of reflectors 14 in the tracker coordinate system. Then, the position-posture calculation unit 512 may convert at least one of the position and the posture of the processing head 13 in the tracker coordinate system to at least one of the position and the posture of the processing head 13 in the base coordinate system by using the coordinate transformation matrix (base-tracker). As a result, the position-posture calculation unit 512 may calculate at least one of the position and the posture of the processing head 13 in the base coordinate system. Alternatively, the position-posture calculation unit 512 may convert the position of each of the plurality of reflectors 14 in the tracker coordinate system to the position of each of the plurality of reflectors 14 in the base coordinate system by using the coordinate transformation matrix (base-tracker). Then, the position-posture calculation unit 512 may calculate at least one of the position and the posture of the processing head 13 in the base coordinate system based on the position of each of the plurality of reflectors 14 in the base coordinate system.

Then, the control information generation unit 513 may determine whether or not the position of the processing head 13 is a desired processing position based on processing position posture information that indicates at least one of the position and the posture of the processing head 13 calculated by the position-posture calculation unit 512. The desired processing position may be set by the control information generation unit 513 based on at least one of the position and the posture of the workpiece W in the base coordinate system calculated at the step S101 described above. Alternatively, the desired processing position may be set by the user of the processing system PSYS. Alternatively, in a case where the workpiece transport apparatus 3, which transports the workpiece W, moves so as to stop at a predetermined position in the process space SP in a predetermined posture, the desired processing position may be set in advance. In any case, since the position-posture calculation unit 512 calculates at least one of the position and the posture of the processing head 13 in the base coordinate system, the control information generation unit 513 uses the desired processing position in the base coordinate system as the desired processing position.

Furthermore, the control information generation unit 513 may determine whether or not the posture of the processing head 13 is the desired processing posture based on the processing position posture information, in addition to or instead of determining whether or not the position of the processing head 13 is the desired processing position. The desired processing posture may be set by the control information generation unit 513 based on at least one of the posture and the posture of the workpiece W in the base coordinate system calculated at the step S101 described above. Alternatively, the desired processing posture may be set by the user of the processing system PSYS. Alternatively, in a case where the workpiece transport apparatus 3, which transports the workpiece W, moves so as to stop at a predetermined posture in the process space SP in a predetermined posture, the desired processing posture may be set in advance. In any case, since the position-posture calculation unit 512 calculates at least one of the posture and the posture of the processing head 13 in the base coordinate system, the control information generation unit 513 uses the desired processing posture in the base coordinate system as the desired processing posture.

In a case where it is determined that the position of the processing head 13 is not the desired processing position, the control information generation unit 513 may calculate a correction amount of the position of the processing head 13, which is required to change the position of the processing head 13 from the current position to the desired processing position in the base coordinate system, based on the processing position posture information. Specifically, the control information generation unit 513 may calculate at least one of a moving distance and a moving direction of the processing head 13, which is required to change the position of the processing head 13 from the current position to the desired processing position in the base coordinate system, as the correction amount of the position of the processing head 13.

Information related to the correction amount of the position of the processing head 13 may be output from the tracker control apparatus 5 to the robot control apparatus 6 as at least a part of the robot control information that is usable by the robot control apparatus 6 to control the processing robot 1. The information related to the correction amount of the position of the processing head 13 may be output from the tracker control apparatus 5 to the robot control apparatus 6 as position information for driving the processing robot 1 to position the processing head 13.

However, the robot control apparatus 6 uses a processing robot coordinate system, which is determined with respect to the processing robot, 1 in order to control the position of the processing head 13. On the other hand, the control information generation unit 513 calculates the correction amount of the position of the processing head 13 in the base coordinate system. Therefore, the control information generation unit 513 may convert the correction amount of the position of the processing head 13 in the base coordinate system to the correction amount of the position of the processing head 13 in the processing robot coordinate system. Namely, a coordinate transformation matrix (processing robot - base) that is usable to convert a position in one of the processing robot coordinate system and the base coordinate system to a position in the other one of the processing robot coordinate system and the base coordinate system may be generated. Specifically, the coordinate transformation matrix (processing robot - base) may be generated as follows. First, as described above, the coordinate transformation matrix (base-tracker) that is usable to convert the position in one of the tracker coordinate system and the base coordinate system to the position in the other one of the tracker coordinate system and the base coordinate system may be generated in a case where the base coordinate system is built. Next, a coordinate transformation matrix (processing robot - tracker) that is usable to convert a position in one of the processing robot coordinate system and the tracker coordinate system to a position in the other one of the processing robot coordinate system and the tracker coordinate system is generated. For example, the robot control apparatus 6 positions the processing head 13 at a predetermined standby position in the processing robot coordinate system, and the tracker control apparatus 5 controls the laser tracker 4 to calculate the position and the posture of the processing head 13, which is positioned at the predetermined standby position, in the tracker coordinate system. Then, the robot control apparatus 6 moves and positions the processing head 13 at the desired processing start position and in the desired processing posture in the processing robot coordinate system, based on a predetermined control signal (namely, driving information for moving the processing head 13), and the tracker control apparatus 5 controls the laser tracker 4 to calculate the position and the posture of the processing head 13, which is at the desired processing start position and in the desired processing posture, in the tracker coordinate system. The coordinate transformation matrix (processing robot - tracker) may be generated based on at least one pair of two pairs of information of the position and the posture in the processing robot coordinate system and those in the tracker coordinate system acquired as described above. Therefore, the coordinate transformation matrix (base-tracker) and the coordinate transformation matrix (processing robot - tracker) are now known, so, the coordinate transformation matrix (processing robot - base) may be acquired based on the tracker coordinate system. The control information generation unit 513 convert the correction amount for the position and the posture of the processing head 13 in the base coordinate system to the correction amount for the position and the posture of the processing head 13 in the processing robot coordinate system by using this coordinate transformation matrix (processing robot - base).

Alternatively, even in a case where at least one of the processing robot 1 and the laser tracker 4 moves, the tracker control apparatus 5 may determine a relative positional relationship between the processing robot 1 and the laser tracker 4 based on a moving distance of at least one of the processing robot 1 and the laser tracker 4. Incidentally, the moving distance of at least one of the processing robot 1 and the laser tracker 4 may be measured by an encoder or the like of at least one of the processing robot 1 and the laser tracker 4, for example. Alternatively, in a case where at least one of the processing robot 1 and the laser tracker 4 is positioned on the automatic transport vehicle, the moving distance of the automatic transport vehicle that transports at least one of the processing robot 1 and the laser tracker 4 may be used as the moving distance of at least one of the processing robot 1 and the laser tracker 4. Therefore, the tracker control apparatus 5 may generate the coordinate transformation matrix (processing robot - tracker) that is usable to convert the position in one of the processing robot coordinate system and the tracker coordinate system to the position in the other one of the processing robot coordinate system and the tracker coordinate system, based on information related to the relative positional relationship between the processing robot 1 and the laser tracker 4. As a result, the tracker control apparatus 5 may generate the coordinate transformation matrix (processing robot - base), which is usable to convert the position in one of the processing robot coordinate system and the base coordinate system to the position in the other one of the processing robot coordinate system and the base coordinate system, by using the coordinate transformation matrix (base - tracker) and the coordinate transformation matrix (processing robot - tracker). Therefore, the control information generation unit 513 convert the correction amount for the position and the posture of the processing head 13 in the base coordinate system to the correction amount for the position and the posture of the processing head 13 in the processing robot coordinate system by using this coordinate transformation matrix (processing robot - base).

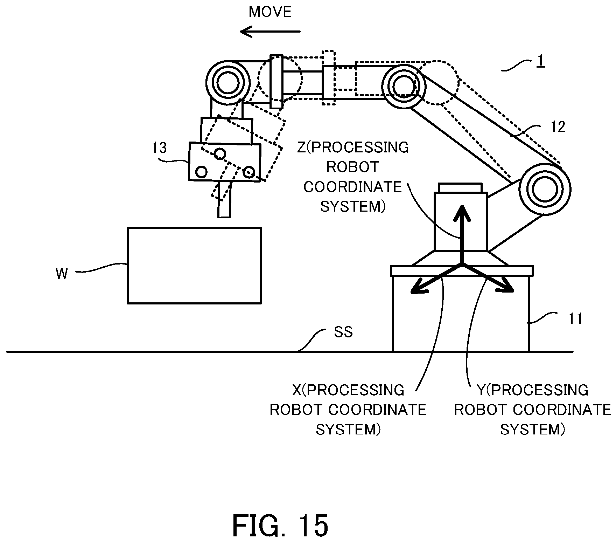

Then, the tracker control apparatus 5 may output the information related to the correction amount of the position of the processing head 13 in the processing robot coordinate system to the robot control apparatus 6 as at least a part of the robot control information that is usable by the robot control apparatus 6 to control the processing robot 1. Namely, the tracker control apparatus 5 may output the information related to the moving distance of the processing head 13 in the processing robot coordinate system, which is required to change the position of the processing head 13 from the current position to the desired processing position in the processing robot coordinate system, to the robot control apparatus 6 as at least a part of the robot control information. The tracker control apparatus 5 may output the information related to the moving direction of the processing head 13 in the processing robot coordinate system, which is required to change the position of the processing head 13 from the current position to the desired processing position in the processing robot coordinate system, to the robot control apparatus 6 as at least a part of the robot control information. As a result, as illustrated in FIG. 15 that illustrates the processing head 13 moving in the processing robot coordinate system based on the robot control information, the robot control apparatus 6 may move the processing head 13 so as to change the position of the processing head 13 from the current position to the desired processing position. Specifically, the robot control apparatus 6 may move the processing head 13 along the moving direction indicated by the robot control information by the moving distance indicated by the robot control information.

In a case where it is determined that the posture of the processing head 13 is not the desired processing posture, the control information generation unit 513 may calculate a correction amount of the posture of the processing head 13, which is required to change the posture of the processing head 13 from the current posture to the desired processing posture in the base coordinate system, based on the processing position posture information. Specifically, the control information generation unit 513 may calculate at least one of a moving distance and a moving direction of the processing head 13, which is required to change the posture of the processing head 13 from the current posture to the desired processing posture in the base coordinate system, as the correction amount of the posture of the processing head 13.

Information related to the correction amount of the posture of the processing head 13 may be output from the tracker control apparatus 5 to the robot control apparatus 6 as at least a part of the robot control information that is usable by the robot control apparatus 6 to control the processing robot 1. The information related to the correction amount of the posture of the processing head 13 may be output from the tracker control apparatus 5 to the robot control apparatus 6 as the position information for driving the processing robot 1 to position the processing head 13.

However, the robot control apparatus 6 uses the processing robot coordinate system, which is determined with respect to the processing robot, 1 in order to control the posture of the processing head 13. On the other hand, the control information generation unit 513 calculates the correction amount of the posture of the processing head 13 in the base coordinate system. Therefore, the control information generation unit 513 may first convert the correction amount of the posture of the processing head 13 in the base coordinate system to the correction amount of the posture of the processing head 13 in the processing robot coordinate system. Specifically, the control information generation unit 513 may convert the correction amount of the posture of the processing head 13 in the base coordinate system to the correction amount of the posture of the processing head 13 in the processing robot coordinate system by using the coordinate transformation matrix (processing robot - base).

Then, the tracker control apparatus 5 may output the information related to the correction amount of the posture of the processing head 13 in the processing robot coordinate system to the robot control apparatus 6 as at least a part of the robot control information. Namely, the tracker control apparatus 5 may output the information related to the moving distance of the processing head 13 in the processing robot coordinate system, which is required to change the posture of the processing head 13 from the current posture to the desired processing posture in the processing robot coordinate system, to the robot control apparatus 6 as at least a part of the robot control information. As a result, as illustrated in FIG. 15 that illustrates the processing head 13 moving in the processing robot coordinate system based on the robot control information, the robot control apparatus 6 may move the processing head 13 so as to change the posture of the processing head 13 from the current posture to the desired processing posture. Specifically, the robot control apparatus 6 may move the processing head 13 along the moving direction indicated by the robot control information by the moving distance indicated by the robot control information.

After the processing head 13 is moved, the position-posture calculation unit 512 may control the laser tracker 4 to re-irradiate the measurement light ML onto each of the plurality of reflectors 14 positioned at the processing head 13. Then, the position-posture calculation unit 512 may re-calculate at least one of the position and the posture of the processing head 13 based on the light reception information indicating the optical received result of the reflected light RL from each of the plurality of reflectors 14. Then, the position-posture calculation unit 512 may re-determine at least one of whether or not the position of the processing head 13 is the desired processing position and whether or not the posture of the processing head 13 is the desired processing posture, based on the processing position posture information indicating the re-calculated result of at least one of the position and the posture of the processing head 13. Thereafter, the tracker control apparatus 5 may repeat the same operation until it is determined that the position of the processing head 13 is the desired processing position and that the posture of the processing head 13 is the desired processing posture. As a result, the processing head 13 is positioned at the desired processing position in the desired processing posture.

### (2-3) Processing of Workpiece W : Step S103

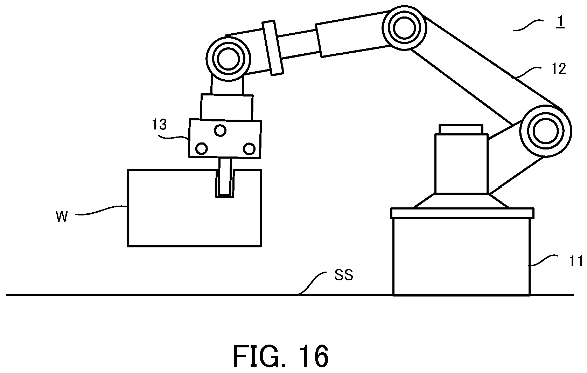

Again in FIG. 11, then, the robot control apparatus 6 controls the processing robot 1 positioned in the first process space SP so as to process the workpiece W positioned in the first process space SP (a step S103). For example, as illustrated in FIG. 16 that illustrates one example of the processing robot 1 processing the workpiece W, the robot control apparatus 6 may control the processing robot 1 so as to process the workpiece W and form a hole. As a result, the processing robot 1 positioned in the first process space SP processes the workpiece W positioned in the first process space SP. Namely, the processing robot 1 positioned in the first process space SP performs the processing operation corresponding to a first process stage assigned to the processing robot 1. The processing robot 1 positioned in the first process space SP performs the processing operation corresponding to the first process stage that should be performed in the first process space SP.

### (2-4) Control of At Least One of Position and Posture of Measurement Head 23 : Step S104

Again in FIG. 11, after the processing robot 1 positioned in the first process space SP completes the processing of the workpiece W positioned in the first process space SP, the tracker control apparatus 5 calculates the position and the posture of the measurement robot 2 positioned in the first process space SP, and the robot control apparatus 6 controls at least one of the position and the posture of the measurement robot 2 (a step S104). Namely, the tracker control apparatus 5 calculates the position and the posture of the measurement head 23, and the robot control apparatus 6 controls at least one of the position and the posture of the measurement robot 2 (the step S104). Specifically, the robot control apparatus 6 controls at least one of the position and the posture of the measurement head 23 so that the measurement head 23 measures the workpiece W. For example, the robot control apparatus 6 may control the position of the measurement head 23 so that the measurement head 23 is positioned at a desired measurement position for measuring the workpiece W. Namely, the robot control apparatus 6 may control the position of the measurement head 23 so that the position of the measurement head 23 is the desired measurement position that allows the measurement head 23 to measure the workpiece W. For example, the robot control apparatus 6 may control the posture of the measurement head 23 so that the measurement head 23 takes a desired measurement posture for measuring the workpiece W. Namely, the robot control apparatus 6 may control the posture of the measurement head 23 so that the posture of the measurement head 23 is the desired measurement posture that allows the measurement head 23 to measure the workpiece W.

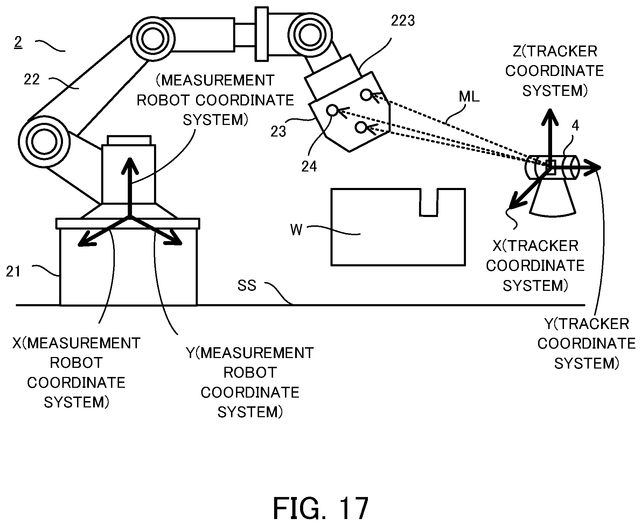

In order to calculate the position and the posture of the measurement head 23, the position-posture calculation unit 512 controls the laser tracker 4 to irradiate the measurement light ML onto each of the plurality of reflectors 24 positioned at the measurement head 23, as illustrated in FIG. 17. As a result, the laser tracker 4 optically receives the reflected light RL from each of the plurality of reflectors 24. Then, the position-posture calculation unit 512 calculates the position of each of the plurality of reflectors 24 based on the light reception information indicating the optical received result of the reflected light RL from each of the plurality of reflectors 24. Incidentally, as illustrated in FIG. 17, here, the position-posture calculation unit 512 calculates the position of each of the plurality of reflectors 24 in the tracker coordinate system that is determined with respect to the laser tracker 4. For example, the position-posture calculation unit 512 may calculate the position of each of the reflectors 24 along the X-axis of the tracker coordinate system, the position of each of the reflectors 24 along the Y-axis of the tracker coordinate system, and the position of each of the reflectors 24 along the Z-axis of the tracker coordinate system.

Then, the position-posture calculation unit 512 may calculate at least one of the position and the posture of the measurement head 23 based on the position of each of the plurality of reflectors 24. Specifically, the position-posture calculation unit 512 may calculate at least one of the position and the posture of the measurement head 23 in the tracker coordinate system based on the position of each of the plurality of reflectors 24 in the tracker coordinate system. Then, the position-posture calculation unit 512 may convert at least one of the position and the posture of the measurement head 23 in the tracker coordinate system to at least one of the position and the posture of the measurement head 23 in the base coordinate system by using the coordinate transformation matrix (base-tracker). As a result, the position-posture calculation unit 512 may calculate at least one of the position and the posture of the measurement head 23 in the base coordinate system. Alternatively, the position-posture calculation unit 512 may convert the position of each of the plurality of reflectors 24 in the tracker coordinate system to the position of each of the plurality of reflectors 24 in the base coordinate system by using the coordinate transformation matrix (base-tracker). Then, the position-posture calculation unit 512 may calculate at least one of the position and the posture of the measurement head 23 in the base coordinate system based on the position of each of the plurality of reflectors 24 in the base coordinate system.

Then, the control information generation unit 513 may determine whether or not the position of the measurement head 23 is the desired measurement position based on measurement position posture information that indicates at least one of the position and the posture of the measurement head 23 calculated by the position-posture calculation unit 512. The desired measurement position may be set by the control information generation unit 513 based on at least one of the position and the posture of the workpiece W in the base coordinate system calculated at the step S101 described above. Alternatively, the desired measurement position may be set by the user of the processing system PSYS. Alternatively, in a case where the workpiece transport apparatus 3, which transports the workpiece W, moves so as to stop at a predetermined position in the process space SP in a predetermined posture, the desired measurement position may be set in advance. In any case, since the position-posture calculation unit 512 calculates at least one of the position and the posture of the measurement head 23 in the base coordinate system, the control information generation unit 513 uses the desired measurement position in the base coordinate system as the desired measurement position.

Furthermore, the control information generation unit 513 may determine whether or not the posture of the measurement head 23 is the desired measurement posture based on the measurement position posture information, in addition to or instead of determining whether or not the position of the measurement head 23 is the desired measurement position. The desired measurement posture may be set by the control information generation unit 513 based on at least one of the posture and the posture of the workpiece W in the base coordinate system calculated at the step S101 described above. Alternatively, the desired measurement posture may be set by the user of the processing system PSYS. Alternatively, in a case where the workpiece transport apparatus 3, which transports the workpiece W, moves so as to stop at a predetermined posture in the process space SP in a predetermined posture, the desired measurement posture may be set in advance. In any case, since the position-posture calculation unit 512 calculates at least one of the posture and the posture of the measurement head 23 in the base coordinate system, the control information generation unit 513 uses the desired measurement posture in the base coordinate system as the desired measurement posture.

In a case where it is determined that the position of the measurement head 23 is not the desired measurement position, the control information generation unit 513 may calculate a correction amount of the position of the measurement head 23, which is required to change the position of the measurement head 23 from the current position to the desired measurement position in the base coordinate system, based on the measurement position posture information. Specifically, the control information generation unit 513 may calculate at least one of a moving distance and a moving direction of the measurement head 23, which is required to change the position of the measurement head 23 from the current position to the desired measurement position in the base coordinate system, as the correction amount of the position of the measurement head 23.

Information related to the correction amount of the position of the measurement head 23 may be output from the tracker control apparatus 5 to the robot control apparatus 6 as at least a part of the robot control information that is usable by the robot control apparatus 6 to control the measurement robot 2. The information related to the correction amount of the position of the measurement head 23 may be output from the tracker control apparatus 5 to the robot control apparatus 6 as position information for driving the measurement robot 2 to position the measurement head 23.

However, the robot control apparatus 6 uses a measurement robot coordinate system, which is determined with respect to the measurement robot 2, in order to control the position of the measurement head 23. On the other hand, the control information generation unit 513 calculates the correction amount of the position of the measurement head 23 in the base coordinate system. Therefore, the control information generation unit 513 may convert the correction amount of the position of the measurement head 23 in the base coordinate system to the correction amount of the position of the measurement head 23 in the measurement robot coordinate system. Namely, a coordinate transformation matrix (measurement robot - base) that is usable to convert a position in one of the measurement robot coordinate system and the base coordinate system to a position in the other one of the measurement robot coordinate system and the base coordinate system may be generated. Specifically, the coordinate transformation matrix (measurement robot - base) may be generated as follows. First, as described above, the coordinate transformation matrix (base-tracker) that is usable to convert the position in one of the tracker coordinate system and the base coordinate system to the position in the other one of the tracker coordinate system and the base coordinate system may be generated in a case where the base coordinate system is built. Next, a coordinate transformation matrix (measurement robot - tracker) that is usable to convert a position in one of the measurement robot coordinate system and the tracker coordinate system to a position in the other one of the measurement robot coordinate system and the tracker coordinate system is generated. For example, the robot control apparatus 6 positions the measurement head 23 at a predetermined standby position in the measurement robot coordinate system, and the tracker control apparatus 5 controls the laser tracker 4 to calculate the position and the posture of the measurement head 23, which is positioned at the predetermined standby position, in the tracker coordinate system. Then, the robot control apparatus 6 moves and positions the measurement head 23 at a desired measurement start position and in the desired measurement posture in the measurement robot coordinate system, based on a predetermined control signal (namely, driving information for moving the measurement head 23), and the tracker control apparatus 5 controls the laser tracker 4 to calculate the position and the posture of the measurement head 23, which is at the desired measurement start position and in the desired measurement posture, in the tracker coordinate system. The coordinate transformation matrix (measurement robot - tracker) may be generated based on at least one pair of two pairs of information of the position and the posture in the measurement robot coordinate system and those in the tracker coordinate system acquired as described above. Therefore, the coordinate transformation matrix (base-tracker) and the coordinate transformation matrix (measurement robot - tracker) are now known, so, the coordinate transformation matrix (measurement robot - base) may be acquired based on the tracker coordinate system. The control information generation unit 513 convert the correction amount for the position and the posture of the measurement head 23 in the base coordinate system to the correction amount for the position and the posture of the measurement head 23 in the measurement robot coordinate system by using this coordinate transformation matrix (measurement robot - base).

Alternatively, even in a case where at least one of the measurement robot 2 and the laser tracker 4 moves, the tracker control apparatus 5 may determine a relative positional relationship between the measurement robot 2 and the laser tracker 4 based on a moving distance of at least one of the measurement robot 2 and the laser tracker 4. Incidentally, the moving distance of at least one of the measurement robot 2 and the laser tracker 4 may be measured by an encoder or the like of at least one of the measurement robot 2 and the laser tracker 4, for example. Alternatively, in a case where at least one of the measurement robot 2 and the laser tracker 4 is positioned on the automatic transport vehicle, the moving distance of the automatic transport vehicle that transports at least one of the measurement robot 2 and the laser tracker 4 may be used as the moving distance of at least one of the measurement robot 2 and the laser tracker 4. Therefore, the tracker control apparatus 5 may generate the coordinate transformation matrix (measurement robot - tracker) that is usable to convert the position in one of the measurement robot coordinate system and the tracker coordinate system to the position in the other one of the measurement robot coordinate system and the tracker coordinate system, based on information related to the relative positional relationship between the measurement robot 2 and the laser tracker 4. As a result, the tracker control apparatus 5 may generate the coordinate transformation matrix (measurement robot - base), which is usable to convert the position in one of the measurement robot coordinate system and the base coordinate system to the position in the other one of the measurement robot coordinate system and the base coordinate system, by using the coordinate transformation matrix (base - tracker) and the coordinate transformation matrix (measurement robot - tracker). Therefore, the control information generation unit 513 convert the correction amount for the position and the posture of the measurement head 23 in the base coordinate system to the correction amount for the position and the posture of the measurement head 23 in the measurement robot coordinate system by using this coordinate transformation matrix (measurement robot - base).

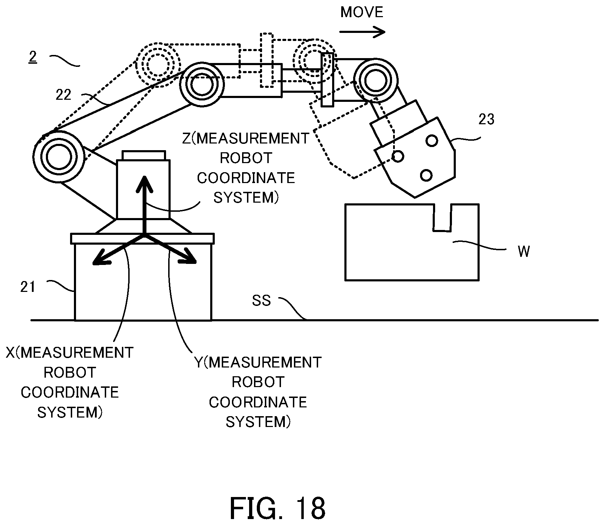

Then, the tracker control apparatus 5 may output the information related to the correction amount of the position of the measurement head 23 in the measurement robot coordinate system to the robot control apparatus 6 as at least a part of the robot control information that is usable by the robot control apparatus 6 to control the measurement robot 2. Namely, the tracker control apparatus 5 may output the information related to the moving distance of the measurement head 23 in the measurement robot coordinate system, which is required to change the position of the measurement head 23 from the current position to the desired measurement position in the measurement robot coordinate system, to the robot control apparatus 6 as at least a part of the robot control information. The tracker control apparatus 5 may output the information related to the moving direction of the measurement head 23 in the measurement robot coordinate system, which is required to change the position of the measurement head 23 from the current position to the desired measurement position in the measurement robot coordinate system, to the robot control apparatus 6 as at least a part of the robot control information. As a result, as illustrated in FIG. 18 that illustrates the measurement head 23 moving in the measurement robot coordinate system based on the robot control information, the robot control apparatus 6 may move the measurement head 23 so as to change the position of the measurement head 23 from the current position to the desired measurement position. Specifically, the robot control apparatus 6 may move the measurement head 23 along the moving direction indicated by the robot control information by the moving distance indicated by the robot control information.

In a case where it is determined that the posture of the measurement head 23 is not the desired measurement posture, the control information generation unit 513 may calculate a correction amount of the posture of the measurement head 23, which is required to change the posture of the measurement head 23 from the current posture to the desired measurement posture in the base coordinate system, based on the measurement position posture information. Specifically, the control information generation unit 513 may calculate at least one of a moving distance and a moving direction of the measurement head 23, which is required to change the posture of the measurement head 23 from the current posture to the desired measurement posture in the base coordinate system, as the correction amount of the posture of the measurement head 23.

Information related to the correction amount of the posture of the measurement head 23 may be output from the tracker control apparatus 5 to the robot control apparatus 6 as at least a part of the robot control information that is usable by the robot control apparatus 6 to control the measurement robot 2. The information related to the correction amount of the posture of the measurement head 23 may be output from the tracker control apparatus 5 to the robot control apparatus 6 as the position information for driving the measurement robot 2 to position the measurement head 23.

However, the robot control apparatus 6 uses the measurement robot coordinate system, which is determined with respect to the measurement robot 2, in order to control the posture of the measurement head 23. On the other hand, the control information generation unit 513 calculates the correction amount of the posture of the measurement head 23 in the base coordinate system. Therefore, the control information generation unit 513 may first convert the correction amount of the posture of the measurement head 23 in the base coordinate system to the correction amount of the posture of the measurement head 23 in the measurement robot coordinate system.
Specifically, the control information generation unit 513 may convert the correction amount of the posture of the measurement head 23 in the base coordinate system to the correction amount of the posture of the measurement head 23 in the measurement robot coordinate system by using the coordinate transformation matrix (measurement robot - base).

Then, the tracker control apparatus 5 may output the information related to the correction amount of the posture of the measurement head 23 in the measurement robot coordinate system to the robot control apparatus 6 as at least a part of the robot control information. Namely, the tracker control apparatus 5 may output the information related to the moving distance of the measurement head 23 in the measurement robot coordinate system, which is required to change the posture of the measurement head 23 from the current posture to the desired measurement posture in the measurement robot coordinate system, to the robot control apparatus 6 as at least a part of the robot control information. As a result, as illustrated in FIG. 18 that illustrates the measurement head 23 moving in the measurement robot coordinate system based on the robot control information, the robot control apparatus 6 may move the measurement head 23 so as to change the posture of the measurement head 23 from the current posture to the desired measurement posture. Specifically, the robot control apparatus 6 may move the measurement head 23 along the moving direction indicated by the robot control information by the moving distance indicated by the robot control information.

After the measurement head 23 is moved, the position-posture calculation unit 512 may control the laser tracker 4 to re-irradiate the measurement light ML onto each of the plurality of reflectors 24 positioned at the measurement head 23. Then, the position-posture calculation unit 512 may re-calculate at least one of the position and the posture of the measurement head 23 based on the light reception information indicating the optical received result of the reflected light RL from each of the plurality of reflectors 24. Then, the position-posture calculation unit 512 may re-determine at least one of whether or not the position of the measurement head 23 is the desired measurement position and whether or not the posture of the measurement head 23 is the desired measurement posture, based on the measurement position posture information indicating the re-calculated result of at least one of the position and the posture of the measurement head 23. Thereafter, the tracker control apparatus 5 may repeat the same operation until it is determined that the position of the measurement head 23 is the desired measurement position and that the posture of the measurement head 23 is the desired measurement posture. As a result, the measurement head 23 is positioned at the desired measurement position in the desired measurement posture.

Incidentally, at the step S104, the robot control apparatus 6 may move the measurement head 23 roughly so that at least a part of the workpiece W is included in a measurement field of view of the measurement head 23, without using the robot control information output by the tracker control apparatus 5. In this case, the laser tracker 4 may not irradiate the measurement light ML onto each of the plurality of reflectors 24, and the tracker control apparatus 5 may not calculate at least one of the position and the posture of the measurement head 23 based on the light reception information indicating the optical received result of the reflected light RL from each of the plurality of reflectors 24. As a result, a cost required to perform the operation at the step S104 can be reduced.

### (2-5) Measurement of Three-Dimensional Shape of Workpiece W : Step S105 to Step S107

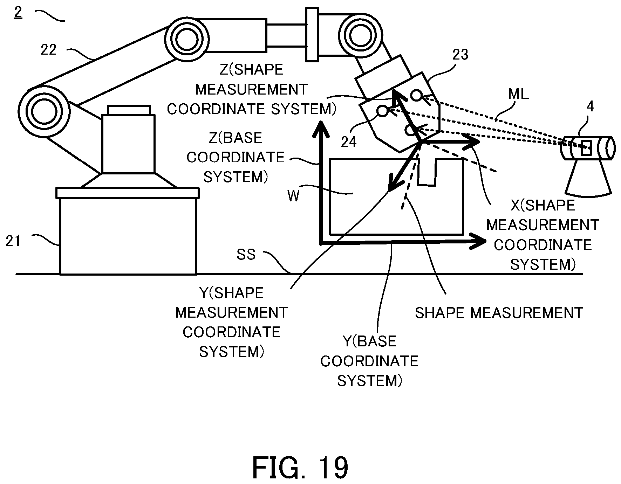

Again in FIG. 11 then, the robot control apparatus 6 controls the measurement robot 2 positioned in the first process space SP so as to measure the workpiece W positioned in the first process space SP (a step S105). For example, as illustrated in FIG. 19, which illustrates one example of the measurement robot 2 measuring the workpiece W, the robot control apparatus 6 controls the measurement robot 2 positioned in the first process space SP so as to measure the three-dimensional shape of the workpiece W positioned in the first process space SP. As a result, the measurement robot 2 positioned in the first process space SP measures the workpiece W positioned in the first process space SP. Namely, the measurement robot 2 positioned in the first process space SP performs the measurement operation corresponding to the first process stage assigned to the measurement robot 2. The measurement robot 2 positioned in the first process space SP performs the measurement operation corresponding to the first process stage that should be performed in the first process space SP.

In parallel with, before, or after the operation at the step S105, the tracker control apparatus 5 calculates at least one of the position and the posture of the measurement head 23 that measures the three-dimensional shape of the workpiece W at the step S105 (a step S106). Namely, the tracker control apparatus 5 calculates at least one of the position and the posture of the measurement head 23 at a timing at which the measurement head 23 measures the three-dimensional shape of the workpiece W (the step S106). Specifically, the position-posture calculation unit 512 controls the laser tracker 4 to irradiate the measurement light ML onto each of the plurality of reflectors 24 positioned at the measurement head 23, as illustrated in FIG. 19. As a result, the laser tracker 4 optically receives the reflected light RL from each of the plurality of reflectors 24. Then, the position-posture calculation unit 512 calculates the position of each of the plurality of reflectors 24 in the tracker coordinate system based on the light reception information indicating the optical received result of reflected light RL from each of the plurality of reflectors 24. Then, the position-posture calculation unit 512 calculates at least one of the position and the posture of the measurement head 23 in the base coordinate system based on the position of each of the reflectors 24.

However, in a case where the measurement head 23 does not move after at least one of the position and the posture of the measurement head 23 is calculated at the step S104, the tracker control apparatus 5 may use at least one of the position and the posture of the measurement head 23 calculated at the step S104 as at least one of the position and the posture of the measurement head 23 calculated at the step S106. In this case, the tracker control apparatus 5 may not calculate at least one of the position and the posture of the measurement head 23 again at the step S106. On the other hand, in order to increase an amount of information in the three-dimensional shape data, the steps S104 to S106 may be repeated the plurality of number of times. In this case, an influence of an environment in the process space SP, for example, an influence of an air fluctuations in the process space SP, a temperature fluctuation in the process space SP, a humidity fluctuations in the process space SP, a pressure fluctuations in the process space SP, and a vibration occurring in the process space SP can be averaged, and more accurate information can be acquired.

Again in FIG. 11, then, the shape data processing unit 514 performs a data conversion processing, which is one example of the predetermined data processing, on the three-dimensional shape data indicating the three-dimensional shape of the workpiece W measured at the step S105 (a step S107). Specifically, the three-dimensional shape data indicates the three-dimensional shape of the workpiece W in a shape measurement coordinate system that is determined with respect to the measurement head 23. On the other hand, the base coordinate system built at the step S101 is the coordinate system that is used as the base in the processing system PSY in the present example embodiment as described above. Therefore, at the step S107, the shape data processing unit 514 performs the data conversion processing for converting the three-dimensional shape data indicating the three-dimensional shape of the workpiece W in the shape measurement coordinate system to the three-dimensional shape data indicating the three-dimensional shape of the workpiece W in the base coordinate system. The data conversion processing may also be referred to as a coordinate conversion processing, because the data conversion processing is a processing for converting the coordinates of the three-dimensional shape data.

Specifically, since at least one of the position and the posture of the measurement head 23 in the base coordinate system is calculated at the step S106, the tracker control apparatus 5 may determine a relative positional relationship between the base coordinate system and the shape measurement coordinate system, which is determined with respect to the measurement head 23, based on at least one of the position and the posture of the measurement head 23 in the base coordinate system. As a result, the tracker control apparatus 5 may generate a coordinate transformation matrix (shape measurement - base) that is usable to convert a position in one of the shape measurement coordinate system and the base coordinate system to a position in the other one of the shape measurement coordinate system and the base coordinate system, based on at least one of the position and the posture of the measurement head 23 in the base coordinate system calculated at the step S106. Therefore, the shape data processing unit 514 may perform the data conversion processing for converting the three-dimensional shape data indicating the three-dimensional shape of the workpiece W in the shape measurement coordinate system to the three-dimensional shape data indicating the three-dimensional shape of the workpiece W in the base coordinate system by using this coordinate transformation matrix (shape measurement - base).

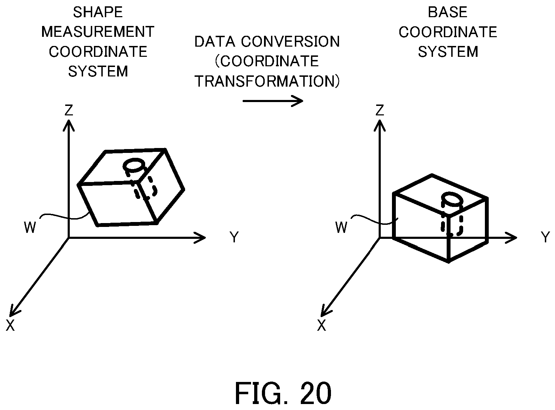

FIG. 20 schematically illustrates one example of the data conversion processing. A left side of FIG. 20 illustrates the three-dimensional shape data on which the data conversion processing is not performed, and a right side of FIG. 20 illustrates the three-dimensional shape data on which the data conversion processing has been performed.

In this manner, the tracker control apparatus 5 manages the three-dimensional shape data indicating the three-dimensional shape of the workpiece W as the three-dimensional shape data indicating the three-dimensional shape of the workpiece W in the base coordinate system in the present example embodiment. Namely, the tracker control apparatus 5 may manage, as the measured result in the base coordinate system, the measured result of the three-dimensional shape of the workpiece W as well as the measured result of at least one of the position and the posture of the processing head 13, the measured result of the position and the posture of the measurement head 23, the measured result of the position and the posture of the workpiece transport apparatus 3, and the measured result of the position and the posture of the workpiece W.

### (2-6) Movement of Measurement Head 23 : Step S108

Again in FIG. 11, then, the tracker control apparatus 5 determines whether or not the measurement head 23 should be moved (a step S108). For example, in a case where the measurement head 23 is scheduled to measure the three-dimensional shape of the workpiece W at a position and/or a posture different from the current one, the tracker control apparatus 5 may determine that the measurement head 23 should be moved. For example, in a case where information related to the three-dimensional shape of the workpiece W measured by the measurement head 23 at its current position and posture is insufficient or defective, the tracker control apparatus 5 may determine that the measurement head 23 should be moved.

The movement of the measurement head 23 may be performed for the purpose of reducing a blind spot of the workpiece W that is not included in the measurement field of view. In this case, it is more likely that the blind spot of the workpiece W that is not included in the measurement field of view is reduced, as the measurement head 23 changes its position more often in order to measure the three-dimensional shape of the workpiece W. Similarly, it is more likely that the blind spot of the workpiece W that is not included in the measurement field of view is reduced, as the measurement head 23 changes its posture more often in order to measure the three-dimensional shape of the workpiece W.

In a case where it is determined as a result of the determination at the step S108 that the measurement head 23 should be moved (the step S108: Yes), the operation from the step S104 to the step S107 is performed again.

Specifically, the robot control apparatus 6 controls at least one of the position and the posture of the measurement head 23 so that at least one of the position and the posture of the measurement head 23 positioned in the first process space SP changes in the first process space SP (the step S104). Namely, the robot control apparatus 6 controls at least one of the position and the posture of the measurement head 23 so that the measurement robot 2 positioned in the first process space SP moves in the first process space SP (the step S104). Specifically, as described above, the position-posture calculation unit 512 controls the laser tracker 4 to irradiate the measurement light ML onto each of the plurality of reflectors 24 positioned at the measurement head 23, and the position-posture calculation unit 512 calculates at least one of the current position and posture of the measurement head 23 based on the light reception information indicating the optical received result of the reflected light RL from the reflectors 24. Then, the robot control apparatus 6 controls the measurement robot 2 to move the measurement head 23 and position the measurement head 23 at a next scheduled measurement position and posture. The tracker control apparatus 5 controls the laser tracker 4 to irradiate the measurement light ML onto each of the plurality of reflectors 24 positioned at the measurement head 23, and calculates at least one of the position and the posture of the measurement head 23, which has moved, based on the light reception information indicating the optical received result of the reflected light RL from the reflectors 24. In this case, in a case where the position and the posture of the measurement head 23 are different from the scheduled position and posture of the measurement head 23, the robot control apparatus 6 controls the measurement robot 2 to correct at least one of the position and the posture of the measurement head 23 based on the measurement position posture information indicating at least one of the position and the posture of the measurement head 23 calculated by the position-posture calculation unit 512.

The correction of at least one of the position and the posture of the measurement head 23, which is performed by the robot control apparatus 6 controlling the measurement robot 2, may be omitted. In a case where the accurate position and posture of the measurement head 23 at a timing at which the three-dimensional shape of the workpiece W is being measured or has been measured is acquired and a slight difference between the acquired position and posture and the predetermined measurement position and posture arises no problem, a correction operation may be omitted. In this case, the robot control apparatus 6 may move the measurement head 23 roughly. For example, the robot control apparatus 6 may move the measurement head 23 roughly along a predetermined moving direction. For example, the robot control apparatus 6 may move the measurement head 23 roughly by a predetermined moving distance. The tracker control apparatus 5 may control the laser tracker 4 to accurately measure the position and the posture of the measurement head 23 at a movement destination.

Then, the robot control apparatus 6 controls the measurement robot 2 to measure the workpiece W (the step S105). Furthermore, the tracker control apparatus 5 calculates at least one of the position and the posture of the measurement head 23 that measures the three-dimensional shape of the workpiece W at the step S105 (the step S106). The tracker control apparatus 5 performs the data conversion processing, which is one example of the predetermined data processing, on the three-dimensional shape data that indicates the three-dimensional shape of the workpiece W measured at the step S105, based on at least one of the position and the posture of the measurement head 23 (the step S107).

Incidentally, when the measurement head 23 moves, the positional relationship between the measurement head 23 and the workpiece W changes. Therefore, an operation for determining whether or not the measurement head 23 should be moved at the step S108 may be considered to be equivalent to an operation for determining whether or not the positional relationship between the measurement head 23 and the workpiece W should be changed. An operation for controlling at least one of the position and the posture of the measurement head 23 (namely, an operation for moving the measurement head 23) at the step S104 may be considered to be equivalent to an operation for changing the positional relationship between the measurement head 23 and the workpiece W.

In a case where the measurement head 23 moves in the process space SP and measures the three-dimensional shape of the workpiece W at the plurality of positions and/or postures, the tracker control apparatus 5 performs the data conversion processing on each of a plurality of three-dimensional shape data.

As one example, an example in which the measurement head 23, which is positioned at a first position, measures the workpiece W in a first measurement period and the measurement head 23, which is positioned at a second position that is different from the first position, measures the workpiece W in a second measurement period that is different from the first measurement period will be described. Incidentally, the first measurement period may be regarded as a period during which the positional relationship between the measurement head 23 and the workpiece W is a first positional relationship. The second measurement period may be regarded as a period during which the positional relationship between the measurement head 23 and the workpiece W is a second positional relationship that is different from the first positional relationship. In this case, the tracker control apparatus 5 may calculate at least one of the position and the posture of the measurement head 23 in the first measurement period based on the light reception information indicating the optical received result of the reflected light RL from the reflectors 24 of the measurement head 23 in the first measurement period. Then, the tracker control apparatus 5 may perform the data conversion processing on the three-dimensional shape data that indicates the measured results of the three-dimensional shape of the workpiece W in the first measurement period, based on the calculated result of at least one of the position and the posture of the measurement head 23 in the first measurement period. Similarly, the tracker control apparatus 5 may calculate at least one of the position and the posture of the measurement head 23 in the second measurement period based on the light reception information indicating the optical received result of the reflected light RL from the reflectors 24 of the measurement head 23 in the second measurement period. Then, the tracker control apparatus 5 may perform the data conversion processing on the three-dimensional shape data that illustrates the measured result of the three-dimensional shape of the workpiece W in the second measurement period, based on the calculated result of at least one of the position and the posture of the measurement head 23 in the second measurement period.

As another example, an example in which the measurement head 23, which takes a first posture, measures the workpiece W in a third measurement period and the measurement head 23, which takes a second posture that is different from the first posture, measures the workpiece W in a fourth measurement period that is different from the third measurement period will be described. Incidentally, the third measurement period may be regarded as a period during which the positional relationship (especially, the positional relationship including a posture relationship) between the measurement head 23 and the workpiece W is a third positional relationship. The fourth measurement period may be regarded as a period during which the positional relationship between the measurement head 23 and the workpiece W is a fourth positional relationship that is different from the third positional relationship. In this case, the tracker control apparatus 5 may calculate at least one of the position and the posture of the measurement head 23 in the third measurement period based on the light reception information indicating the optical received result of the reflected light RL from the reflectors 24 of the measurement head 23 in the third measurement period. Then, the tracker control apparatus 5 may perform the data conversion processing on the three-dimensional shape data that indicates the measured results of the three-dimensional shape of the workpiece W in the third measurement period, based on the calculated result of at least one of the position and the posture of the measurement head 23 in the third measurement period. Similarly, the tracker control apparatus 5 may calculate at least one of the position and the posture of the measurement head 23 in the fourth measurement period based on the light reception information indicating the optical received result of the reflected light RL from the reflectors 24 of the measurement head 23 in the fourth measurement period. Then, the tracker control apparatus 5 may perform the data conversion processing on the three-dimensional shape data that illustrates the measured result of the three-dimensional shape of the workpiece W in the fourth measurement period, based on the calculated result of at least one of the position and the posture of the measurement head 23 in the fourth measurement period.

On the other hand, in a case where it is determined as a result of the determination at the step S108 that the measurement head 23 should not be moved (the step S108: No), the operation from the step S104 to the step S107 may not be performed again.

### (2-7) Coupling of Measurement Data of Three-Dimensional Shape of Workpiece W : Step S109

Then, in a case where the shape data processing unit 514 acquires the plurality of three-dimensional shape data at the step S107, the shape data processing unit 514 performs a data coupling processing, which is one example of the predetermined data processing, on the plurality of three-dimensional shape data (a step S109). The data coupling processing is a data processing for coupling (in other words, combining or merging) the plurality of three-dimensional shape data. The data coupling processing is a data processing for coupling (in other words, combining or merging) the plurality of three-dimensional shape data to generate single three-dimensional shape data.

Each of the plurality of three-dimensional shape data indicates the three-dimensional shape of the workpiece W in the base coordinate system. Namely, the coordinate systems of the plurality of three-dimensional shape data are already the same. Therefore, the shape data processing unit 514 can easily couple the plurality of three-dimensional shape data. Moreover, since the position and the posture of the measurement head 23 during the measurement of the three-dimensional shape of the workpiece W are accurately measured by the laser tracker 4 and the tracker control apparatus 5 (namely, the position measurement system MSYS), a marker (for example, an AR marker), which is used for a position alignment in coupling (combining) the plurality of three-dimensional shape data, may not be required.

The shape data processing unit 514 may couple the plurality of three-dimensional shape data so that a feature part of the three-dimensional shape of the workpiece W indicated by first three-dimensional shape data of the plurality of three-dimensional shape data coincides with the same feature part of the three-dimensional shape of the workpiece W indicated by second three-dimensional shape data of the plurality of three-dimensional shape data. A vertex, a corner, an edge, a surface, and a part having a distinctive shape of the workpiece W, and an example of the processed part by the processing head 13 are examples of the feature point.

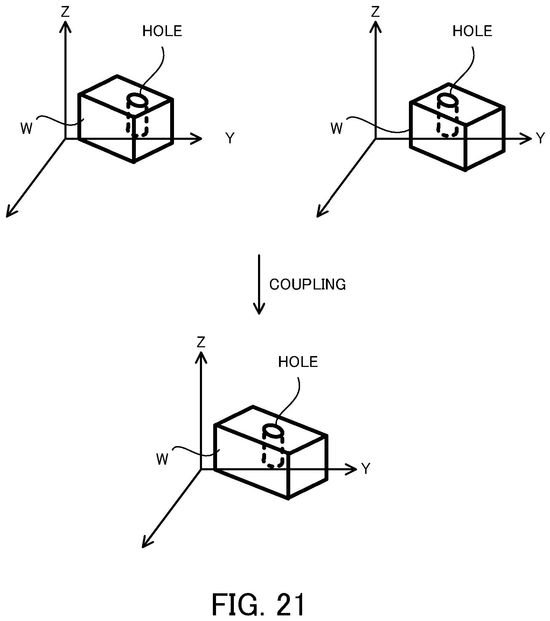

As one example, FIG. 21 illustrates two three-dimensional shape data schematically. As illustrated in FIG. 21, the shape data processing unit 514 may couple the plurality of three-dimensional shape data so that the processed part (the hole), which is processed by the processing head 13, of the three-dimensional shape of the workpiece W indicated by the first three-dimensional shape data on a left side of FIG. 21 coincides with the processed part (the hole), which is processed by the processing head 13, of the three-dimensional shape of the workpiece W indicated by the second three-dimensional shape data on a right side of FIG. 21. As a result, the shape data processing unit 514 may generate a single three-dimensional shape data that is newly generated by coupling the plurality of three-dimensional shape data, as illustrated in a lower part of FIG. 21.

The robot control apparatus 6 may determine whether or not the three-dimensional shape of the workpiece W is a desired shape based on the three-dimensional shape data generated at the step S109. In a case where it is determined that the three-dimensional shape of the workpiece W is not the desired shape, the processing robot 1 may further process the workpiece W so that the three-dimensional shape of the workpiece W is the desired shape under the control of the tracker control apparatus 5 and the robot control apparatus 6. Namely, the operation at the step S103 described above may be performed again.

### (2-8) Movement of Workpiece W : Step S1010

Then, the tracker control apparatus 5 may determine whether or not the workpiece W moves (a step S110). Namely, the tracker control apparatus 5 may determine whether or not the workpiece transport apparatus 3 on which the workpiece W is placed moves (the step S110). Especially at the step S110, the tracker control apparatus 5 may determine whether or not the workpiece W positioned in the first process space SP moves from the first process space SP to the second process space SP that is different from the first process space SP. Namely, the tracker control apparatus 5 may determine whether or not the workpiece W moves from the first process space SP, in which the first process stage is performed, to the second process space SP, in which the second process stage is performed.

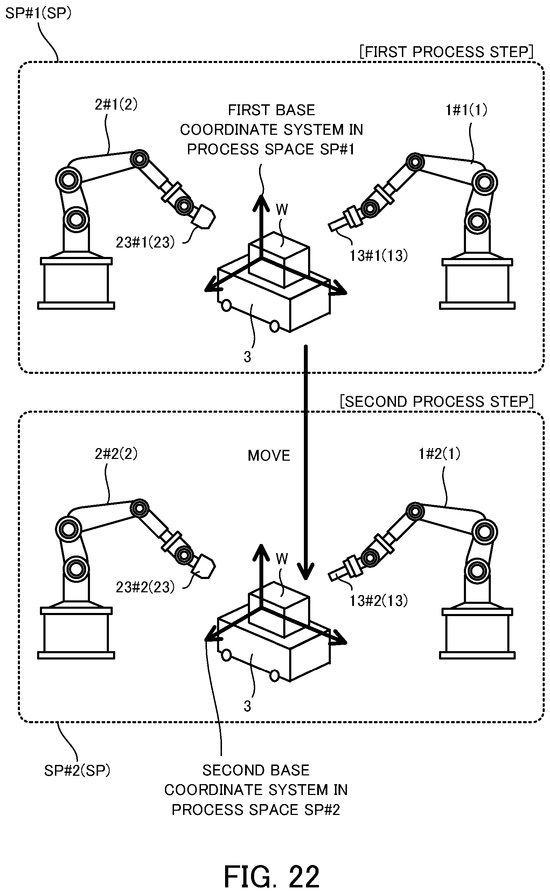

One example of a scene in which the workpiece W positioned in the first process space SP moves from the first process space SP to the second process space SP will be described with reference to FIG. 22. Incidentally, FIG. 22 illustrates an example in which a processing robot 1#1 to which a processing head 13#1 is attached and a measurement robot 2#1 to which a measurement head 23#1 is attached are positioned in the first process space SP#1, and a processing robot 1#2 to which a processing head 13#2 is attached and a measurement robot 2#2 to which a measurement head 23#2 is attached are positioned in the second process space SP#2. In this case, one example of the scene in which the workpiece W positioned in the first process space SP#1 moves from the first process space SP#1 to the second process space SP#2 may include a scene in which the first process stage that should be performed in the first process space SP#1 is completed. Namely, one example of the scene in which the workpiece W positioned in the first process space SP#1 moves from the first process space SP#1 to the second process space SP#2 may include a scene in which the processing operation that should be performed by the processing head 13#1 positioned in the first process space SP#1 is completed and the measurement operation that should be performed by the measurement head 23#1 positioned in the first process space SP#1 is completed. In this case, it is expected that the second process stage that should be performed in the second process space SP#2 is newly performed after the workpiece W moves from the first process space SP#1 to the second process space SP#2. Namely, it is expected that the processing operation that should be performed by the processing head 13#2 positioned in the second process space SP#2 is performed, and that the measurement operation that should be performed by the measurement head 23#2 positioned in the second process space SP#2 is performed.

Incidentally, the first process space SP#1 may be regarded as a first processing process space in which the processing head 13#1 performs the processing operation. The first process space SP#1 may be regarded as a first measurement process space in which the measurement head 23#1 performs the processing operation. The second process space SP#2 may be regarded as a second processing process space in which the processing head 13#2 performs the processing operation. The second process space SP#2 may be regarded as a second measurement process space in which the measurement head 23#2 performs the processing operation. In this case, the movement of the workpiece W from the first process space SP#1 to the second process space SP#2 may be considered to be equivalent to the movement of the workpiece W from at least one of the first processing process space and the first measurement process space to at least one of the second processing process space and the second measurement process space.

After the workpiece W has been moved to the second process space SP#2, the operation at the step S101 is performed again. Namely, the tracker control apparatus 5 builds (re-builds) a new base coordinate system (the step S101). The base coordinate system that is re-built here is a coordinate system that is used as the base in the second process space SP#2 that is a destination of the workpiece W. Specifically, the re-built base coordinate system is a coordinate system used as the base in the processing system PSYS in a period during which the workpiece transport apparatus 3 is positioned in the second process space SP#2. The re-built base coordinate system is a coordinate system used as the base in the processing system PSYS in a period during which the workpiece W is positioned in the second process space SP#2. The re-built base coordinate system is a coordinate system used as the base in the processing system PSYS in a period during which the processing robot 1#2 positioned in the second process space SP#2 processes the workpiece W positioned in the second process space SP#2. The re-built base coordinate system is a coordinate system used as the base in the processing system PSYS in a period during which the measurement robot 2#2 positioned in the second process space SP#2 measures the workpiece W positioned in the second process space SP#2.

Then, the second process stage, which should be performed in the second process space SP, is performed by using the base coordinate system re-built at the step S101. Namely, the robot system RSYS and the position measurement system MSYS perform the operation from the step S102 to the step S109 in cooperation with each other by using the base coordinate system re-built at the step S101. Although the base coordinate system in the second process space SP#2 is re-built at the step S101 after the workpiece transport apparatus 3 moves to the second process space SP#2, the base coordinate system re-built in the second process space SP#2 is the same as the base coordinate system built in the first process space SP#1 from a viewpoint of the relationship between the base coordinate system and the workpiece W. Namely, since the base coordinate system is built in both of the first process space SP#1 and the second process space SP#2 by using the same reflectors 34 (for example, the reflectors 34#1, 34#2 and 34#3 illustrated in FIG. 13), it is possible to perform the process (the measurement process and the processing process) on the workpiece W by using the same base coordinate system even in a case where the workpiece transport apparatus 3 (namely, the workpiece W) moves. For example, the three-dimensional shape data that is measured in the first process space SP#1 and that is converted to the data indicates the three-dimensional shape of the workpiece W in the base coordinate system may be used as it is in the second process space SP#2.

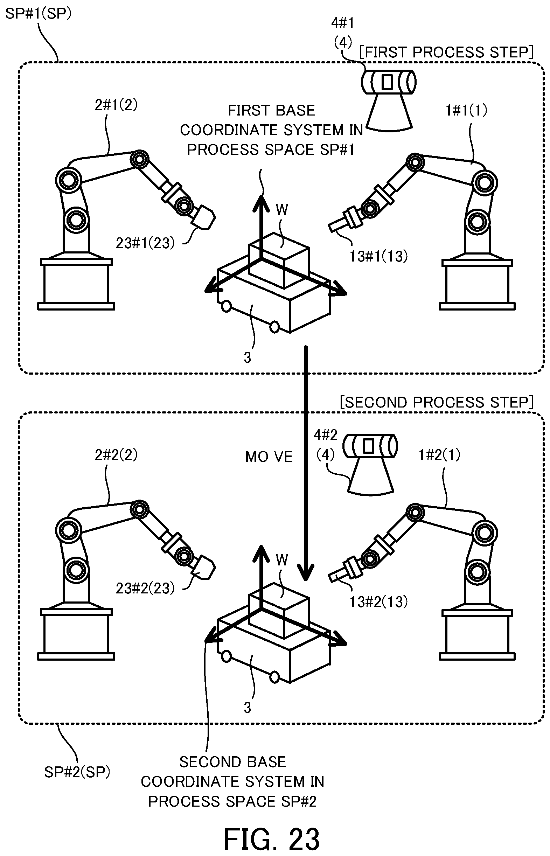

Incidentally, in the example embodiment described above, an example in which a single laser tracker 4 is used in the first process space SP#1 and the second process space SP#2 will be described, however, it is not limited to this. For example, as illustrated in FIG. 23, two or more laser trackers 4 may be positioned in each of the first process space SP#1 and the second process space SP#2. FIG. 23 illustrates an example in which a first laser tracker 4#1 is positioned in the first process space SP#1 and a second laser tracker 4#2, which is different from the first laser tracker 4#1, is positioned in the second process space SP#2. In this case, the first laser tracker #1 may irradiate the measurement light ML onto each of the reflectors 14 of the processing head 13#1, the reflectors 24 of the measurement head 23#1, and the reflectors 34 of the workpiece transport apparatus 3 positioned in the first process space SP#1. The tracker control apparatus 5 may build the base coordinate system, which is used as the in the first process space SP#1, based on the optical received result of the reflected light RL from the reflectors 34 by the first laser tracker 4#1. The tracker control apparatus 5 may calculate at least one of the position and the posture of the processing head 13#1 based on the optical received result of reflected light RL from the reflectors 14 by the first laser tracker 4#1. The tracker control apparatus 5 may calculate at least one of the position and the posture of the measurement head 23#1 based on the optical received result of the reflected light RL from the reflectors 24 by the first laser tracker 4#1. On the other hand, after the workpiece W moves from the first process space SP#1 to the second process space SP#2, the second laser tracker #2 may irradiate the measurement light ML onto each of the reflectors 14 of the processing head 13#2, the reflectors 24 of the measurement head 23#2, and the reflectors 34 of the workpiece transport apparatus 3 positioned in the second process space SP#2. The tracker control apparatus 5 may build the base coordinate system, which is used as the in the second process space SP#2, based on the optical received result of the reflected light RL from the reflectors 34 by the second laser tracker 4#2. The tracker control apparatus 5 may calculate at least one of the position and the posture of the processing head 13#2 based on the optical received result of reflected light RL from the reflectors 14 by the second laser tracker 4#2. The tracker control apparatus 5 may calculate at least one of the position and the posture of the measurement head 23#2 based on the optical received result of the reflected light RL from the reflectors 24 by the second laser tracker 4#2.

Furthermore, one or more laser trackers 4 may be positioned in each of two or more process spaces SP. The laser tracker 4 may be placed on an automatic transport vehicle (for example, an AGV: Automatic Guided Vehicle) and the laser tracker 4 may move between the plurality of process spaces SP. Even in this case, the same base coordinate system is commonly usable by the plurality of laser trackers 4 in a case where the reflectors 34 positioned at the workpiece transport apparatus 3 are commonly used by any of the laser trackers 4 to build the base coordinate system, and the information related to the position and the posture of the measurement target object (for example, the processing head 13 or the measurement head 23), which is measured by any of the laser trackers 4, can be represented on the same base coordinate system.

On the other hand, in a case where it is determined as a result of the determination at the step S110 that the workpiece W does not move (the step S110: No), the processing system PSYS may end the operation illustrated in FIG. 11. Alternatively, the processing system PSYS may continue to determine whether or not the workpiece W moves. Namely, the processing system PSYS may continue to monitor the movement of the workpiece W.

### (3) Technical Effect of Processing System PSYS in Present Example Embodiment

As described above, in the present example embodiment, the position measurement system MSYS is configured to build the base coordinate system. As a result, in the present example embodiment, the position measurement system MSYS may manage all of the measured result of the position of the processing head 13, the measured result of the posture of the processing head 13, the measured result of the position of the measurement head 23, the measured result of the posture of the measurement head 23, the measured result of the position of the workpiece transport apparatus 3, the measured result of the posture of the workpiece transport apparatus 3, the measured result of the position of the workpiece W, the measured result of the posture of the workpiece W, and the measured result of the three-dimensional shape of the workpiece W, as the measured results in the base coordinate system. Namely, the position measurement system MSYS may manage all of the measured result of the position of the processing head 13, the measured result of the posture of the processing head 13, the measured result of the position of the measurement head 23, the measured result of the posture of the measurement head 23, the measured result of the position of the workpiece transport apparatus 3, the measured result of the posture of the workpiece transport apparatus 3, the measured result of the position of the workpiece W, the measured result of the posture of the workpiece W, and the measured result of the three-dimensional shape of the workpiece W, as the measured results in the same coordinate system collectively.

Furthermore, since the single coordinate system that is the base coordinate system is used as the coordinate system used as the base in the processing system PSYS, the position measurement system MSYS can easily couple the plurality of three-dimensional shape data acquired by measuring the workpiece W. As a result, even in a case where the measurement robot 2 performs the plurality of measurements of the three-dimensional shape of the workpiece W, the position measurement system MSYS can easily generate the single three-dimensional shape data, which properly reflects the plurality of measured results, by combining the plurality of three-dimensional shape data acquired by the plurality of measurements, respectively.

Furthermore, in a case where the workpiece W has moved, the position measurement system MSYS re-builds the base coordinate system. For example, FIG. 22 illustrates the workpiece W moving from the first process space SP#1 to the second process space SP#2. As illustrated in FIG. 22, in a case where the workpiece W is positioned in the first process space SP#1 (namely, the workpiece W is positioned at a first desired position in the first process space SP#1), the position measurement system MSYS builds a first base coordinate system that is determined with respect to the workpiece transport apparatus 3 (alternatively, the workpiece W) positioned in the first process space SP#1. In this case, the tracker control apparatus 5 manages the measured result of at least one of the position and the posture of the processing robot 1#1 (especially the processing head 13#1) positioned in the first process space SP#1, the measured result of at least one of the position and the posture of the measurement robot 2#1 (especially the measurement head 23#1) positioned in the first process space SP#1, the measured result of at least one of the position and the posture of the workpiece transport apparatus 3 positioned in the first process space SP#1, the measured result of at least one of the position and the posture of the workpiece W positioned in the first process space SP#1, and the measured result of the three-dimensional shape of the workpiece W positioned in the first process space SP#1, as the measured results in the same first base coordinate system. On the other hand, in a case where the workpiece transport apparatus 3 (alternatively, the workpiece W) is positioned in the second process space SP#2 (namely, the workpiece W is positioned at a second desired position in the second process space SP#2, which is different from the first desired position in the first process space SP#1), the position measurement system MSYS builds a second base coordinate system that is determined with respect to the workpiece transport apparatus 3 (alternatively, the workpiece W) positioned in the second process space SP#2. In this case, the tracker control apparatus 5 manages the measured result of at least one of the position and the posture of the processing robot 1#2 (especially the processing head 13#2) positioned in the second process space SP#2, the measured result of at least one of the position and the posture of the measurement robot 2#2 (especially the measurement head 23#2) positioned in the second process space SP#2, the measured result of at least one of the position and the posture of the workpiece transport apparatus 3 positioned in the second process space SP#2, the measured result of at least one of the position and the posture of the workpiece W positioned in the second process space SP#2, and the measured result of the three-dimensional shape of the workpiece W positioned in the second process space SP#2, as the measured results in the same second base coordinate system.

Here, both of the first base coordinate system and the second base coordinate system are built by using the reflectors 34 positioned at the positions that are fixed relative to the workpiece transport apparatus 3 (alternatively, the workpiece W). Namely, both of the first base coordinate system and the second base coordinate systems are built by using the reflectors 34 that move together with the workpiece transport apparatus 3 (alternatively, the workpiece W). Therefore, it can be said that both of the first base coordinate system and the second base coordinate systems are the coordinate systems that are determined with respect to the same workpiece transport apparatus 3 (alternatively, the workpiece W). Namely, it can be said that both of the first base coordinate system and the second base coordinate systems are the coordinate systems that are built on the same workpiece transport apparatus 3. In this case, it can be said that the second base coordinate system is acquired by re-building the first base coordinate system. In other words, in this case, it can be said that the second base coordinate system is a coordinate system that is acquired by moving the first base coordinate system in accordance with the movement of the workpiece transport apparatus 3. In this case, the position measurement system MSYS may not convert the measured result of the position of the measurement target object in one of the first and second base coordinate systems to the measured result of the position of the measurement target object in the other one of the first and second base coordinate systems in order to compare the measured result of the position of the measurement target object in the first base coordinate system with the measured result of the position of the measurement target object in the second base coordinate system. Similarly, the position measurement system MSYS may not convert the measured result of the posture of the measurement target object in one of the first and second base coordinate systems to the measured result of the posture of the measurement target object in the other one of the first and second base coordinate systems in order to compare the measured result of the posture of the measurement target object in the first base coordinate system with the measured result of the posture of the measurement target object in the second base coordinate system. Similarly, the position measurement system MSYS may not convert the measured result of the three-dimensional shape of the workpiece W in one of the first and second base coordinate systems to the measured result of the three-dimensional shape of the workpiece W in the other one of the first and second base coordinate systems in order to compare the measured result of the three-dimensional shape of the workpiece W in the first base coordinate system with the measured result of the three-dimensional shape of the workpiece W in the second base coordinate system. Therefore, the position measurement system MSYS can compare the measured result in the first base coordinate system with the measured result in the second base coordinate system properly without being affected by an conversion error that occur in converting the measured result in one of the first and second base coordinate systems to the measured result in the other one of the first and second base coordinate systems. As a result, the tracker control apparatus 5 can determine properly whether or not there is a problem in the first process stage, in which the first base coordinate system is used, separately from a problem that occurs in the second process stage in which the second base coordinate system is used. Similarly, the tracker control apparatus 5 can determine properly whether or not there is a problem in the second process stage, in which the second base coordinate system is used, separately from the problem that occurs in the first process stage in which the first base coordinate system is used. Namely, the tracker control apparatus 5 can properly identify the problem that is specific to the measurement target and that occurs in each process stage, while ensuring a traceability of the processing head 13, the measurement head 23, the workpiece transport apparatus 3, and the workpiece W, which are the measurement target objects, between the first base coordinate system and the second base coordinate system.

Furthermore, in the present example embodiment, the position measurement system MSYS may build the base coordinate system by using the reflectors 34 positioned in the vicinity of the workpiece W. Namely, the position measurement system MSYS may build the base coordinate system by using the reflector 34 positioned at the processing position or in the vicinity of the processing position at which the processing robot 1 actually processes the workpiece W and the measurement robot 2 actually measures the workpiece W in the process space SP. Therefore, the robot system RSYS can process and measure the workpiece W while reducing an influence of an environment in the process space SP, compared to a case where the reflectors 34 are positioned at positions distant from the processing position. For example, the robot system RSYS can process and measure the workpiece W while reducing a processing error or a measurement error that occurs due to the influence of the environment in the process space SP. Incidentally, at least one of the influence of the air fluctuations in the process space SP, the temperature fluctuation in the process space SP, the humidity fluctuations in the process space SP, the pressure fluctuations in the process space SP, and the vibration occurring in the process space SP is one example of the influence of the environment in the process space SP. Vibration occurring in at least one of the processing robot 1, the measurement robot 2, the workpiece transport apparatus 3, the laser tracker 4, and the support surface SS is one example of the vibration occurring in the process space SP.

### (4) Modified Example

Next, a modified example of the processing system PSYS will be described.

### (4-1) First Modified Example

In the first modified example, the tracker control apparatus 5 may be configured to control the processing robot 1#2, which processes the workpiece W positioned in the second process space SP#2, based on the three-dimensional shape data indicating the measured result of the three-dimensional shape of the workpiece W positioned in the first process space SP#1, in a case where the workpiece W positioned in the first process space SP#1 moves from the first process space SP#1 to the second process space SP#2 as illustrated in FIG. 22 described above. Namely, the tracker control apparatus 5 may be configured to control the processing robot 1#2, which processes the workpiece W positioned in the second process space SP#2, based on the three-dimensional shape data indicating the measured result of the three-dimensional shape of the workpiece W that has been processed by the processing robot 1#1 positioned in the first process space SP#1. In other words, the tracker control apparatus 5 may be configured to control the processing robot 1#2, which processes the workpiece W positioned in the second process space SP#2, based on the three-dimensional shape data indicating the measured result of the three-dimensional shape of the workpiece W by the measurement robot 2#1 positioned in the first process space SP#1.

In the below-described description, an example in which the tracker control apparatus 5 controls at least one of the position and the posture of the processing head 13#2, which processes the workpiece W positioned in the second process space SP#2, based on the three-dimensional shape data indicating the measured result of the three-dimensional shape of the workpiece W by the measurement robot 2#1 positioned in the first process space SP#1 will be described.

In this case, the processing system PSYS performs the operation from the step S101 to the step S109 in FIG. 11 described above in a period during which the workpiece W is positioned in the first process space SP#1. As a result, the three-dimensional shape data, which indicates the measured result of the three-dimensional shape of the workpiece W by the measurement robot 2#1 positioned in the first process space SP#1, is generated at the step S109 in FIG. 11. Incidentally, in the below-described description, the three-dimensional shape data indicating the measured result of the three-dimensional shape of the workpiece W by the measurement robot 2#1 positioned in the first process space SP#1 is referred to as "already-generated three-dimensional shape data" for convenience of description.

Then, the workpiece W moves from the first process space SP#1 to the second process space SP#2. In this case, the tracker control apparatus 5 first builds the second base coordinate system that is used in the second process space SP#2 (the step S101 in FIG. 11). Then, the tracker control apparatus 5 controls at least one of the position and the posture of the processing head 13#2 positioned in the second process space SP#2 (the step S102 in FIG. 11). In the first modified example, the tracker control apparatus 5 may use the already-generated three-dimensional shape data to control at least one of the position and the posture of the processing head 13#2 positioned in the second process space SP#2 at the step S102.

As one example, the already-generated three-dimensional shape data indicates the three-dimensional shape of the workpiece W processed by the processing robot 1#1 in the first process space SP#1. Therefore, the already-generated three-dimensional shape data includes information related to the processed part of the workpiece W processed by the processing robot 1#1 in the first process space SP#1. In this case, the tracker control apparatus 5 may set a processing target part PT of the workpiece W, which is in a predetermined positional relationship relative to the processed part of the workpiece W processed by the processing robot 1#1 in the first process space SP#1, based on first three-dimensional shape data, and control at least one of the position and the posture of the processing head 13#2 positioned in the second process space SP#2 to process the set processing target part PT. Namely, the tracker control apparatus 5 may generate the robot control information that is used by the robot control apparatus 6 to control at least one of the position and the posture of the processing head 13#2 positioned in the second process space SP#2 to process the processing target part PT of the workpiece W positioned in the second process space SP#2. Especially, the tracker control apparatus 5 may generate the robot control information that is used by the robot control apparatus 6 to correct a default or preset command value, which specify at least one of the position and the posture of the processing head 13#2 positioned in the second process space SP#2, to process the processing target part PT of the workpiece W positioned in the second process space SP#2.

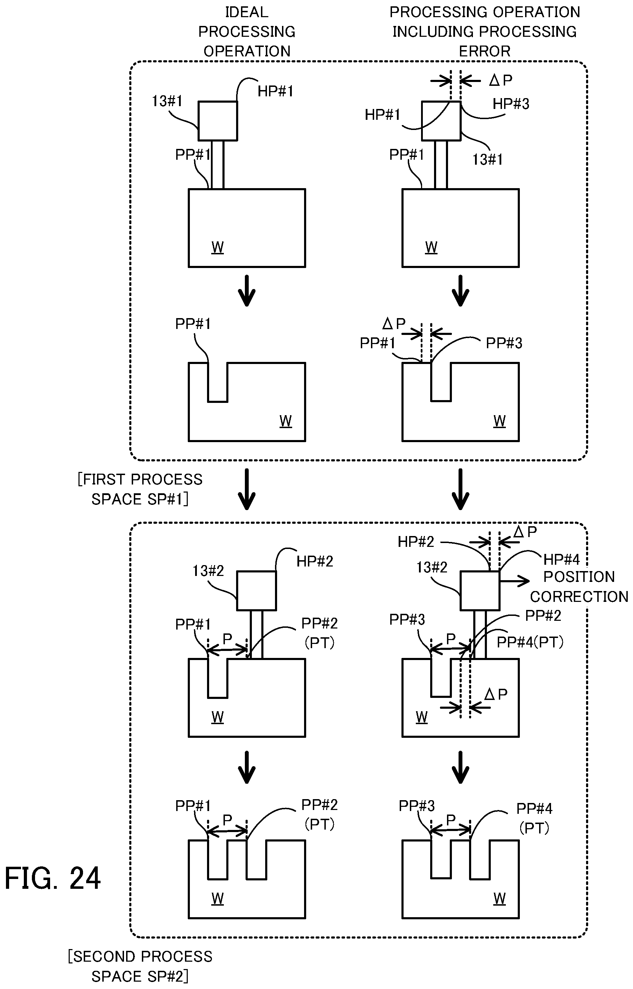

As one example, with reference to FIG. 24, an operation performed in the first modified example will be described by using an example in which the processing robot 1#1 positioned in the first process space SP#1 performs, as a part of the first process stage that should be performed in the first process space SP#1, the processing operation for forming a hole at a first part PP#1 of the workpiece W positioned in the first process space SP#1, and then the processing robot 1#2 positioned in the second process space SP#2 performs, as a part of the second process stage that should be performed in the second process space SP#2, the processing operation for forming a hole at a second part PP#2 of the workpiece W positioned in the second process space SP#2. Incidentally, the second part PP#2 is assumed to be positioned at a position that is distant from the first part PP#1 by a predetermined pitch distance P along a predetermined pitch direction (in the example illustrated in FIG. 24, the horizontal direction of the paper) that is along the surface of the workpiece W.

A left side of FIG. 24 illustrates a cross-sectional view of the workpiece W in a case where an ideal processing operation is performed in each of the first process space SP#1 and the second process space SP#2. In this case, as illustrated in FIG. 24, the processing robot 1#1 moves the processing head 13#1 to a first position HP#1 in the first process space SP#1 based on a first robot control signal generated by the robot control apparatus 6 to control the processing robot 1#1 to process the first part PP#1 of the workpiece W. The first robot control signal may include a command value specifying the first position HP#1 at which the processing head 13#1 should be positioned, for example. Furthermore, the first robot control signal may include a command value specifying the posture of the processing head 13#1 positioned at the first position HP#1, for example. Then, the processing robot 1#1 forms the hole at the first part PP#1 of the workpiece W by using the processing head 13#1 positioned at the first position HP#1 based on the first robot control signal. Furthermore, the processing robot 1#2 moves the processing head 13#2 to a second position HP#2 in the second process space SP#2 based on a second robot control signal generated by the robot control apparatus 6 to control the processing robot 1#2 to process the second part PP#2 of the workpiece W. The second robot control signal may include a command value specifying the second position HP#2 at which the processing head 13#2 should be positioned, for example. Furthermore, the second robot control signal may include a command value specifying the posture of the processing head 13#2 positioned at the second position HP#2, for example. Then, the processing robot 1#2 forms the hole at the second part PP#2 of the workpiece W by using the processing head 13#2 positioned at the second position HP#2 based on the second robot control signal.

On the other hand, a right side of FIG. 24 illustrates a cross-sectional view of the workpiece W in a case where the processing error occurs in the processing operation performed in the first process space SP#1. Specifically, in FIG. 24, the processing robot 1#1 moves the processing head 13#1 to the first position HP#1 in the first process space SP#1 based on the first robot control signal, in the same manner as the ideal processing operation. However, the processing head 13#1 is actually positioned at a third position HP#3, which is different from the first position HP#1, due to a movement error of the processing head 13#1 and the like. FIG. 24 illustrates an example in which the processing head 13#1 is positioned at the third position HP#3, which is distant from the first position HP#1 by an error amount ΔP along the direction (the horizontal direction of the paper in FIG. 24) that is along the surface of the workpiece W. As a result, as illustrated in FIG. 24, the processing head 13#1, which is positioned at the third position HP#3 different from the first position HP#1, forms the hole at a third part PP#3 of the workpiece W, which is different from the first part PP#1 that should be processed by the processing head 13#1. Specifically, the processing head 13#1 forms the hole at the third part PP#3, which is distant from the first part PP #1 by the error amount ΔP along the direction (the horizontal direction of the paper in FIG. 24) that is along the surface of the workpiece W.

In this case, the control information generation unit 513 of the tracker control apparatus 5 may recognize that the third part PP#3 of the workpiece W, which is different from the first part PP#1 that should be processed by the processing head 13#1, has been processed incorrectly in the first process space SP#1, based on the already-generated three-dimensional shape data indicating the three-dimensional shape of the workpiece W whose third part PP#3 has been processed. In this case, the control information generation unit 513 may generate, based on the already-generated three-dimensional shape data, the robot control information that is usable by the robot control apparatus 6 to correct the second robot control signal that is used to control the processing head 13#2 positioned in the second process space SP#2.

For example, as illustrated in FIG. 24, in a case where the processing error occurs in the processing operation, the third part PP#3 of the workpiece W corresponds to the processed part of the workpiece W. In this case, the control information generation unit 513 may set a fourth part PP#4 of the workpiece W, which is in the predetermined positional relationship relative to the third part PP#3 of the workpiece W, to the processing target part PT that should be processed in the second process space SP#2. As one example, the control information generation unit 513 may set the fourth part PP#4, which is positioned at a position that is distant from the third part PP#3 by the predetermined pitch distance P along the predetermined pitch direction (in the example illustrated in FIG. 24, the horizontal direction of the paper) that is along the surface of the workpiece W, to the processing target part PT that should be processed in the second process space SP#2. In other words, the control information generation unit 513 may set the fourth part PP#4 of the workpiece W, which satisfies a condition that a positional relationship between the third part PP#3 and the fourth part PP#4 is the same as a positional relationship between the first part PP#1 and the second part PP#2 that should be processed in the ideal processing operation, to the processing target part PT that should be processed in the second process space SP#2. In this case, the fourth part PP#4 is distant from the second part PP#2 by the error amount ΔP along the predetermined pitch direction (in the example illustrated in FIG. 24, the horizontal direction of the paper) that is along the surface of the workpiece W.

Then, the control information generation unit 513 generates the robot control information that is usable by the robot control apparatus 6 to correct the second robot control signal for controlling the processing robot 1#2 to process the second part PP#2 of the workpiece W into a second robot control signal for controlling the processing robot 1#2 to process the fourth part PP#4 of the workpiece W. For example, the control information generation unit 513 may generate the robot control information for correcting the second robot control signal so as to move the processing head 13#2 positioned in the second process space SP#2 to not the second position HP#2 for processing the second part PP#2 of the workpiece W but a fourth position HP#4 for processing the fourth part PP#4 of the workpiece W. The fourth position HP#4 is a position that is distant from the third position HP#3 by the predetermined pitch distance P along the predetermined pitch direction (in the example illustrated in FIG. 24, the horizontal direction of the paper) that is along the surface of the workpiece W. The fourth position HP#4 is typically a position that is distant from the second position HP#2 by the error amount ΔP along the predetermined pitch direction (in the example illustrated in FIG. 24, the horizontal direction of the paper) that is along the surface of the workpiece W.

Then, the robot control apparatus 6 corrects the second robot control signal based on the robot control information. For example, the robot control apparatus 6 may correct the command value specifying at least one of the position and the posture of the processing head 13#2 included in the second robot control signal. As one example, the robot control apparatus 6 may correct the command value specifying the position of the processing head 13#2 included in the second robot control signal from the command value specifying the second position HP#2 to the command value specifying the fourth position HP#4. As a result, as illustrated in FIG. 24, the processing robot 1#2 moves the processing head 13#2 to the fourth position HP#4 based on the corrected second robot control signal, and forms the hole at the fourth part PP#4 of the workpiece W by using the processing head 13#2 positioned at the fourth position HP#4.

In this case, even in a case where the processing error occurs in the processing operation, the processing system PSYS can form the plurality of holes in the workpiece W that are separated by the same pitch distance P. Namely, in a case where the processing error occurs in the processing operation performed in the first process space SP#1, the processing system PSYSS can process the workpiece W in the second process space SP#2 so as to cancel the processing error by the processing operation performed in the second process space SP#2. In other words, in a case where the processing error occurs in the processing operation performed as a part of the first process stage, the processing system PSYSS can perform the second process stage so as to cancel the processing error by the processing operation performed as a part of the second process stage. Therefore, the processing system PSYSS can process the workpiece W properly in the desired processing aspect.

Incidentally, not only in a case where the plurality of holes that are separated by the same pitch distance P are formed in the workpiece W, but also in a case where the workpiece W is processed in any processing aspect, the processing system PSYS may process the workpiece W in the second process space SP#2 so as to cancel the processing error by the processing operation performed in the second process space SP#2 even in a case where the processing error occurs in the processing operation performed in the first process space SP#1.

### (4-2) Second Modified Example

In the above-described description, the plurality of reflectors 34 are positioned at the workpiece transport apparatus 3. In a second modified example, at least one of the plurality of reflectors 34 may be positioned at a member that is different from the workpiece transport apparatus 3. In this case, the reflector 34 can be arranged in a more flexible manner.

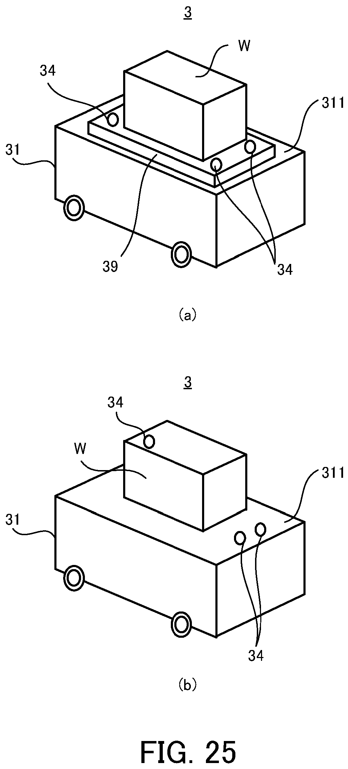

For example, in a case where the workpiece W is placed on the workpiece transport apparatus 3 through a jig 39 that is a holding member for holding the workpiece W as illustrated in FIG. 25(a), at least one of the plurality of reflectors 34 may be positioned at the jig 39. In this case, a part of the plurality of reflectors 34 may be positioned at the jig 39, and other part of the plurality of reflectors 34 may be positioned at the workpiece transport apparatus 3. Alternatively, all of the reflectors 34 may be positioned at the jig 39.

Even in this case, since the jig 39 at which the reflector 34 is positioned holds the workpiece W, it can be said that the reflector 34 is positioned at the position that is fixed relative to the workpiece W as described above. Namely, it can be said that the reflector 34 is positioned at the position satisfying the condition that the positional relationship between the reflector 34 and the workpiece W does not change even in a case where the workpiece W is transported.

For example, at least one of the plurality of reflectors 34 may be positioned at the workpiece W as illustrated in FIG. 25(b). In this case, a part of the plurality of reflectors 34 may be positioned at the workpiece W, and other part of the plurality of reflectors 34 may be positioned at at least one of the workpiece transport apparatus 3 and the jig 39. Alternatively, all of the plurality of reflectors 34 may be positioned at the workpiece W.

Even in this case, since the reflector 34 is positioned at the workpiece W itself, it can be said that the reflector 34 is positioned at the position that is fixed relative to the workpiece W as described above. Namely, it can be said that the reflector 34 is positioned at the position satisfying the condition that the positional relationship between the reflector 34 and the workpiece W does not change even in a case where the workpiece W is transported.

In a case where at least one reflector 34 is positioned at the workpiece W, the tracker control apparatus 5 may detect a positional displacement of the workpiece W based on the calculated result of the position of at least one reflector 34 positioned at the workpiece W, in addition to or instead of building the base coordinate system and calculating the position of the workpiece W as described above. Namely, the tracker control apparatus 5 may generate positional displacement information related to the positional displacement of the workpiece W based on the calculated result of the position of at least one reflector 34 positioned at the workpiece W. Incidentally, in the below-described description, at least one reflector 34 positioned at the workpiece W is referred to as a "workpiece reflector 34" for convenience of description.

As one example, in a case where the base coordinate system has already been built, the tracker control apparatus 5 may detect the positional displacement of the workpiece W with respect to the base coordinate system by calculating a relative positional relationship between the base coordinate system and the workpiece W. Specifically, since the base coordinate system is built based on the positions of the plurality of reflectors 34 including the workpiece reflector 34 as described above, information related to the position of the workpiece reflector 34 in the base coordinate system is known information for the tracker control apparatus 5 at the timing at which the base coordinate system has been built. In this case, in a case where the position of the workpiece reflector 34 calculated after the base coordinate system has been built is the same as the position of the workpiece reflector 34 at the timing at which the base coordinate system is built, the tracker control apparatus 5 may determine that there is no positional displacement of the workpiece W with respect to the base coordinate system. On the other hand, in a case where the position of the workpiece reflector 34 calculated after the base coordinate system has been built is different from the position of the workpiece reflector 34 at the timing at which the base coordinate system is built, the tracker control apparatus 5 may determine that there is the positional displacement of the workpiece W with respect to the base coordinate system.

As another example, since the base coordinate system is built based on the positions of the plurality of reflectors 34 including the workpiece reflector 34 as described above, the information related to the position of the workpiece reflector 34 in the base coordinate system and information related to a position of the other reflector 34 other than the workpiece reflector 34 in the base coordinate system are known information for the tracker control apparatus 5 at the timing at which the base coordinate system has been built. In this case, in a case where a relative positional relationship between the workpiece reflector 34 and the other reflector 34, which is calculated after the base coordinate system has been built, is the same as a relative positional relationship between the workpiece reflector 34 and the other reflector 34 at the timing at which the base coordinate system is built, the tracker control apparatus 5 may determine that there is no positional displacement of the workpiece W with respect to the base coordinate system. On the other hand, in a case where the relative positional relationship between the workpiece reflector 34 and the other reflector 34, which is calculated after the base coordinate system has been built, is different from the relative positional relationship between the workpiece reflector 34 and the other reflector 34 at the timing at which the base coordinate system is built, the tracker control apparatus 5 may determine that there is the positional displacement of the workpiece W with respect to the base coordinate system.

FIG. 26(a) illustrates one example of the workpiece W whose position is not displaced with respect to the base coordinate system, FIG. 26(b) illustrates the positions of the plurality of reflectors 34 calculated in a case where there is no positional displacement of the workpiece W with respect to the base coordinate system, FIG. 26(c) illustrates one example of the workpiece W whose position is displaced with respect to the base coordinate system, and FIG. 26(d) illustrates the positions of the plurality of reflectors 34 calculated in a case where there is the positional displacement of the workpiece W with respect to the base coordinate system. In the example illustrated in FIG. 26(a) to FIG. 26(b), the reflector 34#1 is the workpiece reflector 34, and the reflectors 34#2 and 34#3 are the other reflectors 34 other than the workpiece reflector 34. As illustrated in FIG. 26(a) to FIG. 26(d), in a case where there is the positional displacement of the workpiece W with respect to the base coordinate system, the position of the workpiece reflector 34 is displaced with respect to the position of the origin O of the base coordinate system and the position of the other reflector 34.

Incidentally, considering that the position of the workpiece reflector 34 is displaced with respect to the position of the other reflector 34 positioned at the workpiece transport apparatus 3 in a case where there is the positional displacement of the workpiece W with respect to the base coordinate system, the positional displacement of the workpiece W with respect to the base coordinate system may be considered to be equivalent to a positional displacement of the workpiece W with respect to the workpiece transport apparatus 3 on which the workpiece W is placed. In a case where the workpiece W is placed on the workpiece transport apparatus 3 through the jig 39, the positional displacement of the workpiece W with respect to the base coordinate system may be considered to be equivalent to a positional displacement of the workpiece W with respect to the jig 39 that holds the workpiece W.

The positional displacement of the workpiece W with respect to the base coordinate system may include a positional displacement in a translational direction along the X-axis of the base coordinate system. The positional displacement of the workpiece W with respect to the base coordinate system may include a positional displacement in a translational direction along the Y-axis of the base coordinate system. The positional displacement of the workpiece W with respect to the base coordinate system may include a positional displacement in a translational direction along the Z-axis of the base coordinate system. The positional displacement of the workpiece W with respect to the base coordinate system may include a positional displacement in a rotational direction around the X-axis of the base coordinate system. The positional displacement of the workpiece W with respect to the base coordinate system may include a positional displacement in a rotational direction around the Y-axis of the base coordinate system. The positional displacement of the workpiece W with respect to the base coordinate system may include a positional displacement in a rotational direction around the Z-axis of the base coordinate system.

The tracker control apparatus 5 may further control at least one of the processing robot 1 and the measurement robot 2 based on information related to the positional displacement of the workpiece W. The tracker control apparatus 5 may control at least one of the position and the posture of at least one of the processing head 13 and the measurement head 23 based on the information related to the positional displacement of the workpiece W. Typically, the tracker control apparatus 5 may control at least one of the processing robot 1 and the measurement robot 2 based on the information related to the positional displacement of the workpiece W so as to cancel an influence of the positional displacement of the workpiece W. The tracker control apparatus 5 may control at least one of the position and the posture of at least one of the processing head 13 and the measurement head 23 based on the information related to the positional displacement of the workpiece W so as to cancel the influence of the positional displacement of the workpiece W.

For example, the tracker control apparatus 5 may control the processing robot 1 to process the workpiece W in the same manner as in a case where there is no positional displacement of the workpiece W, even in a case where there is the positional displacement of the workpiece W. As one example, the tracker control apparatus 5 may generate the robot control information that is usable by the robot control apparatus 6 to move the processing head 13 so that the workpiece W is processed in the same manner as in a case where there is no positional displacement of the workpiece W, even in a case where there is the positional displacement of the workpiece W. Namely, the tracker control apparatus 5 may generate the robot control information that is usable by the robot control apparatus 6 to control at least one of the position and the posture of the processing head 13 so that the workpiece W is processed in the same manner as in a case where there is no positional displacement of the workpiece W, even in a case where there is the positional displacement of the workpiece W.

For example, the tracker control apparatus 5 may control the measurement robot 2 to measure the workpiece W in the same manner as in a case where there is no positional displacement of the workpiece W, even in a case where there is the positional displacement of the workpiece W. As one example, the tracker control apparatus 5 may generate the robot control information that is usable by the robot control apparatus 6 to move the measurement head 23 so that the workpiece W is measured in the same manner as in a case where there is no positional displacement of the workpiece W, even in a case where there is the positional displacement of the workpiece W. Namely, the tracker control apparatus 5 may generate the robot control information that is usable by the robot control apparatus 6 to control at least one of the position and the posture of the measurement head 23 so that the workpiece W is measured in the same manner as in a case where there is no positional displacement of the workpiece W, even in a case where there is the positional displacement of the workpiece W.

Incidentally, the tracker control apparatus 5 may build the base coordinate system by using only the plurality of workpiece reflectors 34 positioned at the workpiece W. In this case, the base coordinate system is fixed to the workpiece W itself, so the positional displacement of the workpiece W with respect to the base coordinate system described above, namely, the positional displacement of the workpiece W with respect to the workpiece transport apparatus 3, is not a problem.

### (4-3) Third Modified Example

In the above-described description, the position measurement system MSYS builds the base coordinate system based on the positions of the reflectors 34 positioned at the workpiece transport apparatus 3. On the other hand, in a third modified example, an example in which the position measurement system MSYS uses, as the base coordinate system, a coordinate system that is different from the coordinate system built based on the positions of the reflectors 34 positioned at the workpiece transport apparatus 3 will be described.

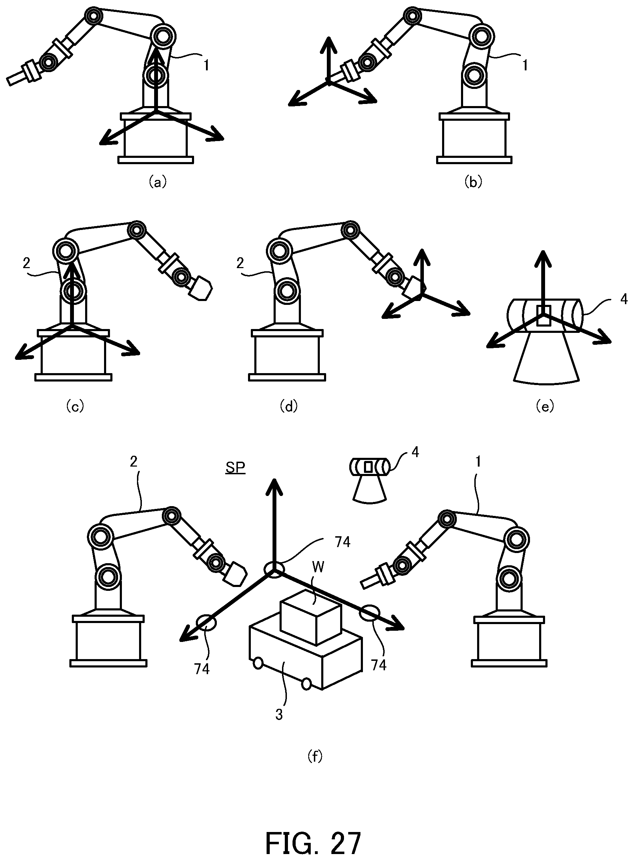

For example, as illustrated in FIG. 27(a), the tracker control apparatus 5 may use the processing robot coordinate system, which is determined with respect to the processing robot 1, as the base coordinate system. In other words, the tracker control apparatus 5 may use the processing robot coordinate system, which is specific to the processing robot 1, as the base coordinate system. Namely, the tracker control apparatus 5 may may manage the measured result of at least one of the position and the posture of the processing head 13, the measured result of at least one of the position and the posture of the measurement head 23, the measured result of at least one of the position and the posture of the workpiece transport apparatus 3, the measured result of at least one of the position and the posture of the workpiece W, and the measured result of the three-dimensional shape of the workpiece W, as the measured results in the processing robot coordinate system. In this case, compared to a case where a coordinate system that is different from the processing robot coordinate system is used as the base coordinate system, the tracker control apparatus 5 can generate the robot control information for controlling at least one of the position and the posture of the processing head 13, which moves in the processing robot coordinate system, relatively easily. This is because the coordinate conversion of the measured result is not required to generate the robot control information for controlling at least one of the position and the posture of the processing head 13.

For example, as illustrated in FIG. 27 (b), the tracker control apparatus 5 may use a processing head coordinate system, which is determined with respect to the processing head 13, as the base coordinate system. In other words, the tracker control apparatus 5 may use the processing head coordinate system, which moves due to the movement of the processing head 13, as the base coordinate system. Namely, the tracker control apparatus 5 may may manage the measured result of at least one of the position and the posture of the processing head 13, the measured result of at least one of the position and the posture of the measurement head 23, the measured result of at least one of the position and the posture of the workpiece transport apparatus 3, the measured result of at least one of the position and the posture of the workpiece W, and the measured result of the three-dimensional shape of the workpiece W, as the measured results in the processing head coordinate system. In this case, the measured result of at least one of the position and the posture of the workpiece W and the measured result of the three-dimensional shape of the workpiece W may be represented in the processing head coordinate system whose origin is the processing head (more specifically, for example, a TCP (Tool Center Point)). The tracker control apparatus 5 may output the position and posture information represented in the processing head coordinate system to the robot control apparatus 6. Incidentally, since the processing head 13 is one aspect of the process apparatus, the processing head coordinate system may be referred to as a process apparatus coordinate system. The processing head coordinate system may be referred to as a tool coordinate system (a processing tool coordinate system).

For example, as illustrated in FIG. 27(c), the tracker control apparatus 5 may use the measurement robot coordinate system, which is determined with respect to the measurement robot 2, as the base coordinate system. In other words, the tracker control apparatus 5 may use the measurement robot coordinate system, which is specific to the measurement robot 2, as the base coordinate system. Namely, the tracker control apparatus 5 may may manage the measured result of at least one of the position and the posture of the processing head 13, the measured result of at least one of the position and the posture of the measurement head 23, the measured result of at least one of the position and the posture of the workpiece transport apparatus 3, the measured result of at least one of the position and the posture of the workpiece W, and the measured result of the three-dimensional shape of the workpiece W, as the measured results in the measurement robot coordinate system. In this case, compared to a case where a coordinate system that is different from the measurement robot coordinate system is used as the base coordinate system, the tracker control apparatus 5 can generate the robot control information for controlling at least one of the position and the posture of the measurement head 23, which moves in the measurement robot coordinate system, relatively easily. This is because the coordinate conversion of the measured result is not required to generate the robot control information for controlling at least one of the position and the posture of the measurement head 23.

For example, as illustrated in FIG. 27 (d), the tracker control apparatus 5 may use the shape measurement coordinate system, which is determined with respect to the measurement head 23, as the base coordinate system. In other words, the tracker control apparatus 5 may use the shape measurement coordinate system, which moves due to the movement of the measurement head 23, as the base coordinate system. Namely, the tracker control apparatus 5 may may manage the measured result of at least one of the position and the posture of the processing head 13, the measured result of at least one of the position and the posture of the measurement head 23, the measured result of at least one of the position and the posture of the workpiece transport apparatus 3, the measured result of at least one of the position and the posture of the workpiece W, and the measured result of the three-dimensional shape of the workpiece W, as the measured results in the shape measurement coordinate system. In this case, the measured result of at least one of the position and the posture of the workpiece W and the measured result of the three-dimensional shape of the workpiece W may be represented in the shape measurement coordinate system whose origin is the measurement head. The tracker control apparatus 5 may output the position and posture information represented in the shape measurement coordinate system to the robot control apparatus 6. Incidentally, since the measurement head 23 is one aspect of the process apparatus, the shape measurement coordinate system may be referred to as a process apparatus coordinate system.

For example, as illustrated in FIG. 27(e), the tracker control apparatus 5 may use the tracker coordinate system, which is determined with respect to the laser tracker 4, as the base coordinate system. In other words, the tracker control apparatus 5 may use the tracker coordinate system, which is specific to the laser tracker 4, as the base coordinate system. Namely, the tracker control apparatus 5 may may manage the measured result of at least one of the position and the posture of the processing head 13, the measured result of at least one of the position and the posture of the measurement head 23, the measured result of at least one of the position and the posture of the workpiece transport apparatus 3, the measured result of at least one of the position and the posture of the workpiece W, and the measured result of the three-dimensional shape of the workpiece W, as the measured results in the tracker coordinate system. In this case, compared to a case where a coordinate system that is different from the tracker coordinate system is used as the base coordinate system, the tracker control apparatus 5 may use the measured result of at least one of the position and the posture of the measurement target object using the laser tracker 4 as the measured result of at least one of the position and the posture of the measurement target object in the base coordinate system as it is.

In this case, the tracker control apparatus 5 may build the base coordinate system by using the measured result of the position of the reflector 34 positioned at the workpiece transport apparatus 3. For example, the tracker control apparatus 5 may build the base coordinate system by using the laser tracker 4 to measure the position of one reflector 34 positioned at the workpiece transport apparatus 3, defining its direction as a base direction (for example, the X-axis direction), defining the position of the laser tracker 4 itself as the origin, and defining two axes that are orthogonal to the X-axis direction as the Y-axis direction and the Z-axis direction. Alternatively, the tracker control apparatus 5 may build the base coordinate system by measuring the positions of two reflectors 34 and defining a direction of a line connecting the positions of the two reflectors 34 as the base direction. Alternatively, the tracker control apparatus 5 may build the base coordinate system in a polar coordinate system whose origin is the laser tracker 4 by defining a direction determined based on an apparatus origin in the pan direction and an apparatus origin in the tilt direction as the base direction, in FIG. 6.

For example, as illustrated in FIG. 27(f), the tracker control apparatus 5 may build the base coordinate system based on positions of a plurality of reflectors 74 (typically, at least three reflectors 74) positioned in the process space SP. As one example, the tracker control apparatus 5 may build the base coordinate system based on the positions of the plurality of reflectors 74 (typically, at least three reflectors 74) positioned at the support surface SS in the process space SP. Incidentally, an operation for building the base coordinate system based on the positions of the reflectors 74 may be the same as the operation for building the base coordinate system based on the positions of the reflectors 34 at the step S101 in FIG. 11, except that the reflectors 74 are used instead of the reflectors 34. Therefore,, a detailed description of the operation for building the base coordinate system based on the positions of the reflectors 74 is omitted. In this case, the tracker control apparatus 5 can build the base coordinate system by using the reflector 74, which is a member that is independent of the processing robot 1, the measurement robot 2, the workpiece transport apparatus 3, the laser tracker 4, and the workpiece W. Therefore, the tracker control apparatus 5 can properly manage each measured result by using the base coordinate system that is commonly usable without being affected by the movement of the processing robot 1, the measurement robot 2, the workpiece transport apparatus 3, the laser tracker 4, and the workpiece W.

Incidentally, the reflector 74 may be positioned in the process space SP. For example, the reflector 74 may be positioned directly on the support surface SS. For example, the reflector 74 may be positioned at the support surface SS through an proper base (support member). For example, the reflector 74 may be positioned directly at a ceiling. For example, the reflector 74 may be positioned at the ceiling through a base. Basically, the reflector 74 may be fixedly positioned in the process space SP so that the measurement light ML from the laser tracker 4 reaches the reflector 74 without being blocked.

Alternatively, as in the above example, the tracker control apparatus 5 may build the base coordinate system by using a combination of the plurality of reflectors 34 positioned at the workpiece transport apparatus 3 and the reflector 74 positioned in the process space SP. In this case, the tracker control apparatus 5 may define the X-axis direction, the Y-axis direction, and the Z-axis direction by using the plurality of reflectors 34 positioned at the workpiece transport apparatus 3, and define the position of the origin by using the reflector 74 positioned in the process space SP.

The tracker control apparatus 5 may calculate at least one of the position and the posture of the workpiece transport apparatus 3 by using the combination of the plurality of reflectors 34 positioned at the workpiece transport apparatus 3 and the reflector 74 positioned in the process space SP. For example, the tracker control apparatus 5 may build the base coordinate system by using the plurality of reflectors 34 positioned at the workpiece transport apparatus 3. On the other hand, the tracker control apparatus 5 may calculate a position at which the workpiece transport apparatus 3 stops in the process space SP by using the reflectors 74 positioned at the process space SP. Even in this case, the tracker control apparatus 5 can calculate at least one of the position and the posture of the workpiece transport apparatus 3 in the base coordinate system based on the base coordinate system that is built by using the plurality of reflectors 34 positioned at the workpiece transport apparatus 3 and the position at which the workpiece transport apparatus 3 stops that is calculated by using the reflector 74 positioned in the process space SP. This is because the posture of the workpiece transport apparatus 3 is not important, because the base coordinate system is built by using the plurality of reflectors 34 positioned at the workpiece transport apparatus 3.

### (4-4) Fourth Modified Example

In the above-described description, the tracker control apparatus 5 builds the base coordinate system based on the positions of the reflectors 34 positioned at the workpiece transport apparatus 3. On the other hand, in a fourth modified example, the measurement head 23 measures the three-dimensional shape of the workpiece W before building the base coordinate system, and the tracker control apparatus 5 builds the base coordinate system based on the three-dimensional shape data indicating the measured result of the three-dimensional shape of the workpiece W by the measurement head 23.

Specifically, first, the robot control apparatus 6 moves the measurement head 23 roughly so that at least a part of the workpiece W is included in the measurement field of view of the measurement head 23. Then, the tracker control apparatus 5 extracts at least one feature part F of the workpiece W based on the three-dimensional shape data.

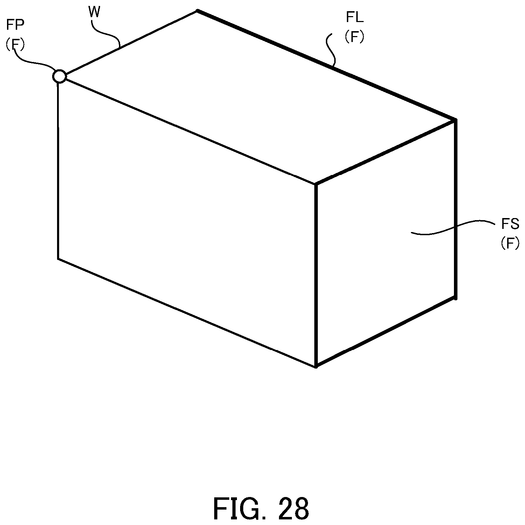

A feature point FP of the workpiece W is one example of the feature part F as illustrated in FIG. 28. At least one of a vertex of the workpiece W, a corner of the workpiece W, a hole formed in the workpiece W (especially, a center of the hole), and an intersection point of a feature line FL of the workpiece W and a feature surface FS of the workpiece W, which will be described later, is one example of feature points FP of the workpiece W.

The feature line FL of the workpiece W, which linearly extends, is another example of a feature part F as illustrated in FIG. 28. At least one of an edge of the workpiece W, a line connecting the centers of two holes formed in the workpiece W, a line extending along a central axis of a cylindrical hole formed in the workpiece W, and an intersection line of two feature surfaces FS of the workpiece W, which will be described later, is one example of the feature line FL of the workpiece W.

The feature surface FS of the workpiece W, which spreads out in a plane, is another example of a feature part F as illustrated in FIG. 28. A surface of the workpiece W is one example of the feature surface FS of the workpiece W. Incidentally, in a case where the three-dimensional shape data is point cloud data, a surface on which a plurality of points exist may be used as the feature surface FS.

Then, the position measurement system MSYS builds the base coordinate system based on at least one feature part F. For example, the tracker control apparatus 5 may specify a certain feature point FP as the origin O of the base coordinate system. For example, the tracker control apparatus 5 may specify an axis passing through a certain feature point FP as one axis of the base coordinate system. For example, the tracker control apparatus 5 may specify an axis passing through two feature points FP as one axis of the base coordinate system. For example, the tracker control apparatus 5 may specify an axis along a certain feature line FL as one axis of the base coordinate system. For example, the tracker control apparatus 5 may specify an axis orthogonal to a certain feature line FL as one axis of the base coordinate system. For example, the tracker control apparatus 5 may specify an axis along a certain feature surface FS as one axis of the base coordinate system. For example, the tracker control apparatus 5 may specify an axis orthogonal to a certain feature surface FS as one axis of the base coordinate system.

In this case, the position measurement system MSYS may build the base coordinate system without using the reflector 34 positioned at the workpiece transport apparatus 3. Therefore, the position measurement system MSYS can build the base coordinate system properly even in a case where the reflector 34 is not positioned at the workpiece transport apparatus 3. Furthermore, it is possible to reduce the cost required for positioning the reflector 34 in a case where the reflector 34 is not positioned at the workpiece transport apparatus 3.

Incidentally, the position measurement system MSYS (for example, the tracker control apparatus 5) may use the feature part F of the workpiece W to perform a 3D matching processing, in addition to or instead of building the base coordinate system. The 3D matching processing is a processing for calculating at least one of the position and the posture of the workpiece W by performing a matching between the measured result of the three-dimensional shape of the workpiece W (namely, the three-dimensional shape data) and model data (for example, CAD data) indicating a designed three-dimensional shape of the workpiece W. In this case, the tracker control apparatus 5 may perform the matching between the three-dimensional shape data and the model data so that the feature part F indicated by the three-dimensional shape data coincides with the same feature part F indicated by the model data. Then, the tracker control apparatus 5 may generate the robot control information that is usable to control at least one of the processing robot 1 and the measurement robot 2 based on at least one of the position and the posture of the workpiece W calculated by the 3D matching processing. For example, the tracker control apparatus 5 may generate the robot control information that is usable to control at least one of the position and the posture of the processing robot 1 based on at least one of the position and the posture of the workpiece W calculated by the 3D matching processing. For example, the tracker control apparatus 5 may generate the robot control information that is usable to control at least one of the position and the posture of the measurement robot 2 based on at least one of the position and the posture of the workpiece W calculated by the 3D matching processing.

### (4-5) Fifth Modified Example

In the above-described description, the position measurement system MSYS builds the base coordinate system in a situation where the workpiece transport apparatus 3 is stationary in the process space SP. Namely, the position measurement system MSYS builds the base coordinate system based on the light reception information indicating the optical received result of reflected light from the reflector 34 attached to the workpiece transport apparatus 3 that is stationary in the process space SP. However, the tracker control apparatus 5 may build the base coordinate system in a period during which the workpiece transport apparatus 3 is moving in the process space SP. Namely, the position measurement system MSYS may build the base coordinate system based on the light reception information indicating the optical received result of the reflected light from the reflector 34 attached to the workpiece transport apparatus 3 that is moving in the process space SP. In this case, in a case where the workpiece transport apparatus 3 moving in the process space SP is positioned at a first position in the process space SP at a first time, the tracker control apparatus 5 may build the base coordinate system, which is used as the base in the processing system PSYS at the first time, based on the optical received result of reflected light RL from the reflector 34 of the workpiece transport apparatus 3 positioned at the first position in the process space SP. Then, in a case where the workpiece transport apparatus 3 moving in the process space SP moves from the first position in the process space SP to a second position in the process space SP to thereby be positioned at the second position in the process space SP at a second time, the tracker control apparatus 5 may build the base coordinate system, which is used as the base in the processing system PSYS at the second time, based on the optical received result of reflected light RL from the reflector 34 of the workpiece transport apparatus 3 positioned at the second position in the process space SP. Namely, the tracker control apparatus 5 may re-build the base coordinate system in real time in accordance with the movement of the workpiece transport apparatus 3. Furthermore, the tracker control apparatus 5 may calculate the position of the processing head 13, the posture of the processing head 13, the position of the measurement head 23, the posture of the measurement head 23, the position of the workpiece transport apparatus 3, the posture of the workpiece transport apparatus 3, the position of the workpiece W, and the posture of the workpiece W by using the base coordinate system that is rebuilt in real time in accordance with the movement of the workpiece transport apparatus 3.

In this case, the laser tracker 4 may irradiate the measurement light ML onto the plurality of reflectors 14 positioned at the processing robot 1, the plurality of reflectors 24 positioned at the measurement robot 2, and the plurality of reflectors 34 positioned at the workpiece transport apparatus 3 in sequence, in order to perform the operation illustrated in FIG. 11. Namely, the laser tracker 4 may perform a first irradiation operation for irradiating the measurement light ML onto each of the plurality of reflectors 14, a second irradiation operation for irradiating the measurement light ML onto each of the plurality of reflectors 24, and a third irradiation operation for irradiating the measurement light ML onto each of the plurality of reflectors 34, in sequence.

Especially, the laser tracker 4 may repeat the first irradiation operation to the third irradiation operation at high speed. However, there is a possibility that the laser tracker 4 cannot repeat the first irradiation operation to the third irradiation operation at a required speed depending on a speed limit of the rotational movement of the housing 42 of the laser tracker 4. In this case, the position measurement system MSYS may include a plurality of laser trackers 4. For example, the position measurement system MSYS may include, as the plurality of laser trackers 4, a first laser tracker 4 that performs the first irradiation operation, a second laser tracker 4 that performs the second irradiation operation, and a third laser tracker 4 that performs the third irradiation operation.

Furthermore, the position measurement system MSYS may include a plurality of first laser trackers 4. For example, the position measurement system MSYS may include, as the plurality of first laser trackers 4, a laser tracker 4 that irradiates the measurement light ML onto a first reflector 14, a laser tracker 4 that irradiates the measurement light ML onto a second reflector 14, and a laser tracker 4 that irradiates the measurement light ML onto a third reflector 14.

Furthermore, the position measurement system MSYS may include a plurality of second laser trackers 4. For example, the position measurement system MSYS may include, as the plurality of second laser trackers 4, a laser tracker 4 that irradiates the measurement light ML onto a first reflector 24, a laser tracker 4 that irradiates the measurement light ML onto a second reflector 24, and a laser tracker 4 that irradiates the measurement light ML onto a third reflector 24.

Furthermore, the position measurement system MSYS may include a plurality of third laser trackers 4. For example, the position measurement system MSYS may include, as the plurality of third laser trackers 4, a laser tracker 4 that irradiates the measurement light ML onto a first reflector 34, a laser tracker 4 that irradiates the measurement light ML onto a second reflector 34, and a laser tracker 4 that irradiates the measurement light ML onto a third reflector 34.

### (4-6) Other Modified Example

In the above-described description, the robot system RSYS includes the processing robot 1. However, the robot system RSYS may not include the processing robot 1. In a case where the robot system RSYS does not include the processing robot 1, each of the robot system RSYS and the position measurement system MSYS may not perform the operation related to the processing robot 1. At least one of the operation for controlling at least one of the position and the posture of the processing head 13 at the step S102 in FIG. 11 and the operation for processing the workpiece W at the step S103 in FIG. 11 is one example of the operation related to processing robot 1.

In the above-described description, the robot system RSYS includes the measurement robot 2. However, the robot system RSYS may not include the measurement robot 2. In a case where the robot system RSYS does not include the measurement robot 2, each of the robot system RSYS and the position measurement system MSYS may not perform the operation related to the measurement robot 2. At least one of the operation for controlling at least one of the position and the posture of the measurement head 23 at the step S104 in FIG. 11, the operation for measuring the three-dimensional shape of the workpiece W at the step S105 in FIG. 11, the operation for measuring at least one of the position and the posture of the measurement head 23 at the step S106 in FIG. 11, the operation for performing the data conversion processing on the three-dimensional shape data at the step S107 in FIG. 11, the operation for moving the measurement robot 2 at the step S108 in FIG. 11, and the operation for coupling the three-dimensional shape data at the step S109 in FIG. 11 is one example of the operation related to the measurement robot 2.

In the above-described description, the tracker control apparatus 5 of the position measurement system MSYS and the robot control apparatus 6 of the robot system RSYS are described as separate control apparatuses. However, the tracker control apparatus 5 and the robot control apparatus 6 may be configured as a single integrated control apparatus. Namely, the position measurement system MSYS and the robot system RSYS may be integrated to form a single system, and this single system may include a control apparatus that is configured to serve as the tracker control apparatus 5 and that is configured to serve as the robot control apparatus 6.

In the above-described description, the tracker control apparatus 5 includes the control information generation unit 513 and outputs the robot control information to the robot control apparatus 6. However, this is not limited to this, and the tracker control apparatus 5 may output information related to at least one of the position and the posture of the measurement target object to the robot control apparatus 6 instead of the robot control information. In this case, in a case where the coordinate transformation matrix (processing robot - base) has been calculated by using the procedure described above, the robot control apparatus 6 may convert the information related to the position and the posture of the measurement target object (for example, the processing head 13) to information in the processing robot coordinate system, and generate the robot control information by itself. Moreover, in a case where the coordinate transformation matrix (measurement robot - base) has been calculated by using the procedure described above, the robot control apparatus 6 may convert the information related to the position and the posture of the measurement target object (for example, the measurement head 23) to information in the measurement robot coordinate system, and generate the robot control information by itself. Furthermore, the information that is output from the tracker control apparatus 5 to the robot control apparatus 6 and that is related to at least one of the position and the posture of the measurement target object may be the information in the base coordinate system, may be the information in the processing robot coordinate system, and may be the information in the measurement robot coordinate system. In this manner, since at least one of the coordinate transformation matrix (processing robot - base) and the coordinate transformation matrix (measurement robot - base) has been calculated as described above, the information related to the position and the posture of the measurement target object (for example, measurement head 23) may be converted to the control information in the robot coordinate system by at least one of the tracker control apparatus 5 and in the robot control apparatus 6.

In the above-described description, the tracker control apparatus 5 includes the shape data processing unit 514, and performs the predetermined data processing (for example, at least one of the data conversion processing and the data coupling processing) on the three-dimensional shape data measured by the measurement head 23. However, this is not limited to this, and the measurement head 23 may include its own control apparatus and perform the predetermined data processing on the three-dimensional shape data. In this case, the control apparatus of the measurement head 23 may acquire the information related to the position and/or the posture of the measurement head 23 (namely, the information in the base coordinate system) from the position measurement system MSYS, and convert the three-dimensional shape data acquired in the shape measurement coordinate system to the three-dimensional shape data in the base coordinate system.

### (5) Supplementary Note

Regarding the above-described example embodiment, below described Supplementary notes are further disclosed.

### [Supplementary Note 1]

A control apparatus that is used in a robot system that performs a predetermined operation on an object, wherein
the robot system includes a position measurement apparatus,
the position measurement apparatus includes an irradiation unit that emits measurement light and a light receiving unit that optically receives reflected light of the measurement light,
the control apparatus:
   controls the position measurement apparatus to irradiate the measurement light onto each of a plurality of base reflective members that are attached to a movable body, which is movable, and that are positioned at positions fixed to the object; and
   builds a base coordinate system, which is used as a base in the robot system, based on an optical received result of base reflected light, which is the reflected light from each of the plurality of base reflective members, by the light receiving unit.

### [Supplementary Note 2]

The control apparatus according to the Supplementary Note 1, wherein
the robot system further includes a measurement robot,
the measurement robot includes: a shape measurement apparatus that is configured to perform a measurement operation for measuring a three-dimensional shape of the object; and a measurement robot arm that includes a measurement movable part to which the shape measurement apparatus is attached,
the control apparatus:
   control the position measurement apparatus to irradiate the measurement light onto each of a plurality of measurement reflective members that are positioned at the shape measurement apparatus; and
   converts a measured result of the three-dimensional shape of the object by the shape measurement apparatus to shape data indicating the three-dimensional shape of the object in the base coordinate system based on an optical received result of measurement reflected light, which is the reflected light from each of the plurality of measurement reflective members, by the light receiving unit.

### [Supplementary Note 3]

The control apparatus according to the Supplementary Note 2, wherein
the shape measurement apparatus performs the measurement operation in a first measurement period, and performs the measurement operation in a second measurement period that is different from the first measurement period,
the control apparatus:
   control the position measurement apparatus to irradiate the measurement light onto each of the plurality of measurement reflective members in the first measurement period;
   control the position measurement apparatus to irradiate the measurement light onto each of the plurality of measurement reflective members in the second measurement period; and
   couples a first measured result of the three-dimensional shape of the object by the shape measurement apparatus in the first measurement period with a second measured result of the three-dimensional shape of the object by the shape measurement apparatus in the second measurement period in the base coordinate system based on a first optical received result of the measurement reflected light from each of the plurality of measurement reflective members by the light receiving unit in the first measurement period and a second optical received result of the measurement reflected light from each of the plurality of measurement reflective members by the light receiving unit in the second measurement period.

### [Supplementary Note 4]

The control apparatus according to the Supplementary Note 3, wherein
the control apparatus:
converts the first measured result to first shape data, which indicates the three-dimensional shape of the object in the base coordinate system, based on the first optical received result;
converts the second measured result to second shape data, which indicates the three-dimensional shape of the object in the base coordinate system, based on the second optical received result; and
couples the first measured result and the second measured result in the base coordinate system by coupling the first shape data and the second shape data.

### [Supplementary Note 5]

The control apparatus according to the Supplementary Note 3 or 4, wherein
the first measurement period includes a period in which the shape measurement apparatus is positioned at a first position, and
the second measurement period includes a period in which the shape measurement apparatus is positioned at a second position that is different from the first position.

### [Supplementary Note 6]

The control apparatus according to any one of the Supplementary Notes 3 to 5, wherein
the first measurement period includes a period in which a posture of the shape measurement apparatus is a first posture, and
the second measurement period includes a period in which the posture of the shape measurement apparatus is a second posture that is different from the first posture.

### [Supplementary Note 7]

The control apparatus according to any one of the Supplementary Notes 1 to 6, wherein
the robot system further includes a measurement robot,
the measurement robot includes: a shape measurement apparatus that is configured to perform a measurement operation for measuring a three-dimensional shape of the object; and a measurement robot arm that includes a measurement movable part to which the shape measurement apparatus is attached,
the control apparatus:
   controls the position measurement apparatus to irradiate the measurement light onto each of a plurality of measurement reflective members that are positioned at the shape measurement apparatus;
   calculates measurement position posture information, which indicates at least one of a position and a posture of the shape measurement apparatus in the base coordinate system, based on an optical received result of measurement reflected light, which is the reflected light from each of the plurality of measurement reflective members, by the light receiving unit; and
   generates, based on the measurement position posture information, measurement correction information that includes at least one of a correction amount of the position of the shape measurement apparatus, which is required to change the position of the shape measurement apparatus to a desired measurement position, and a correction amount of the posture of the shape measurement apparatus, which is required to change the posture of the shape measurement apparatus to a desired measurement posture, in the base coordinate system.

### [Supplementary Note 8]

The control apparatus according to the Supplementary Note 7, wherein
the control apparatus:
re-controls the position measurement apparatus to irradiate the measurement light onto each of the plurality of measurement reflective members after the measurement robot arm is controlled to move the shape measurement apparatus based on the measurement correction information;
re-calculate the measurement position posture information based on the optical received result of the measurement reflected light, which is from each of the plurality of measurement reflective members, by the light receiving unit; and
determines, based on the re-calculated measurement position posture information, at least one of whether or not the position of the shape measurement apparatus is the desired measurement position and whether or not the posture of the shape measurement apparatus is the desired measurement posture in the base coordinate system.

### [Supplementary Note 9]

The control apparatus according to any one of the Supplementary Notes 1 to 8, wherein
the robot system further includes a measurement robot,
the measurement robot includes: a shape measurement apparatus that is configured to perform a measurement operation for measuring a three-dimensional shape of the object; and a measurement robot arm that includes a measurement movable part to which the shape measurement apparatus is attached,
the control apparatus:
   controls the position measurement apparatus to irradiate the measurement light onto each of a plurality of measurement reflective members that are positioned at the shape measurement apparatus;
   calculates measurement position posture information, which indicates at least one of a position and a posture of the shape measurement apparatus in the base coordinate system, based on an optical received result of measurement reflected light, which is the reflected light from each of the plurality of measurement reflective members, by the light receiving unit; and
   determines, based on the measurement position posture information, at least one of whether or not the position of the shape measurement apparatus is a desired measurement position and whether or not the posture of the shape measurement apparatus is a desired measurement posture in the base coordinate system.

### [Supplementary Note 10]

The control apparatus according to any one of the Supplementary Notes 2 to 9, wherein
the control apparatus:
controls the position measurement apparatus to irradiate the measurement light onto each of the plurality of base reflective members in a first period in which the object is positioned at a first object position;
builds a first base coordinate system, which is used as the base coordinate system in the first period, based on the optical received result of the base reflected light by the light receiving unit in the first period;
controls the position measurement apparatus to irradiate the measurement light onto each of the plurality of measurement reflective members in the first period;
converts a measured result of the three-dimensional shape of the object by the shape measurement apparatus in the first period to the shape data indicating the three-dimensional shape of the object in the first base coordinate system based on the optical received result of the measurement reflected light by the light receiving unit in the first period;
controls the position measurement apparatus to irradiate the measurement light onto each of the plurality of base reflective members in a second period in which the object is positioned at a second object position that is different from the first object position;
builds a second base coordinate system, which is used as the base coordinate system in the second period, based on the optical received result of the base reflected light by the light receiving unit in the second period;
controls the position measurement apparatus to irradiate the measurement light onto each of the plurality of measurement reflective members in the second period;
converts a measured result of the three-dimensional shape of the object by the shape measurement apparatus in the second period to the shape data indicating the three-dimensional shape of the object in the second base coordinate system based on the optical received result of the measurement reflected light by the light receiving unit in the second period;

### [Supplementary Note 11]

The control apparatus according to any one of the Supplementary Notes 2 to 10, wherein
the robot system further includes a processing robot,
the processing robot includes: a processing apparatus that is configured to perform a processing operation for processing the object; and a processing robot arm that includes a processing movable part to which the processing apparatus is attached,
the control apparatus:
   controls the position measurement apparatus to irradiate the measurement light onto each of the plurality of measurement reflective members in a third period after the processing robot processes the object positioned at a third object position;
   converts a measured result of the three-dimensional shape of the object by the shape measurement apparatus in the third period to the shape data indicating the three-dimensional shape of the object in the base coordinate system based on the optical received result of the measurement reflected light by the light receiving unit in the third period; and
   generates control information, which is used to control at least one of a position and a posture of the processing apparatus so as to process the object positioned at a fourth object position that is different from the third object position, based on the shape data.

### [Supplementary Note 12]

The control apparatus according to the Supplementary Note 11, wherein
the control apparatus generates, as at least a part of the control information, information that is used to control at least one of the position and the posture of the processing apparatus so as to process a processing target part of the object that is in a predetermined positional relationship relative to a processed part of the object, which has been processed by the processing robot in the third period, based on the shape data.

### [Supplementary Note 13]

The control apparatus according to the Supplementary Note 11 or 12, wherein
the control apparatus generates, as at least a part of the control information, information that is used to correct a command value specifying at least one of the position and the posture of the processing apparatus in a fourth period in which the processing robot processes the object positioned at the fourth object position.

### [Supplementary Note 14]

The control apparatus according to any one of the Supplementary Notes 1 to 13, wherein
the robot system further includes a processing robot,
the processing robot includes: a processing apparatus that is configured to perform a processing operation for processing the object; and a processing robot arm that includes a processing movable part to which the processing apparatus is attached,
the control apparatus:
   controls the position measurement apparatus to irradiate the measurement light onto each of a plurality of processing reflective members that are positioned at the processing apparatus;
   calculates processing position posture information, which indicates at least one of a position and a posture of the processing apparatus in the base coordinate system, based on an optical received result of processing reflected light, which is the reflected light from each of the plurality of processing reflective members, by the light receiving unit; and
   generates, based on the processing position posture information, processing correction information that includes at least one of a correction amount of the position of the processing apparatus, which is required to change the position of the processing apparatus to a desired processing position, and a correction amount of the posture of the processing apparatus, which is required to change the posture of the processing apparatus to a desired processing posture, in the base coordinate system.

### [Supplementary Note 15]

The control apparatus according to the Supplementary Note 14, wherein
the control apparatus:
re-controls the position measurement apparatus to irradiate the measurement light onto each of the plurality of processing reflective members after the processing robot arm is controlled to move the processing apparatus based on the processing correction information;
re-calculates the processing position posture information based on the optical received result of the processing reflected light, which is from each of the plurality of processing reflective members, by the light receiving unit; and
determines, based on the re-calculated processing position posture information, at least one of whether or not the position of the processing apparatus is the desired processing position and whether or not the posture of the processing apparatus is the desired processing posture in the base coordinate system.

### [Supplementary Note 16]

The control apparatus according to any one of the Supplementary Notes 1 to 15, wherein
the robot system further includes a processing robot,
the processing robot includes: a processing apparatus that is configured to perform a processing operation for processing the object; and a processing robot arm that includes a processing movable part to which the processing apparatus is attached,
the control apparatus:
   controls the position measurement apparatus to irradiate the measurement light onto each of a plurality of processing reflective members that are positioned at the shape processing apparatus;
   calculates processing position posture information, which indicates at least one of a position and a posture of the processing apparatus in the base coordinate system, based on an optical received result of processing reflected light, which is the reflected light from each of the plurality of processing reflective members, by the light receiving unit; and
   determines, based on the processing position posture information, at least one of whether or not the position of the processing apparatus is a desired processing position and whether or not the posture of the processing apparatus is a desired processing posture in the base coordinate system.

### [Supplementary Note 17]

The control apparatus according to any one of the Supplementary Notes 1 to 16, wherein
at least one base reflective member of the plurality of base reflective members is positioned at the object, and
the control apparatus generates relative position information related to a relative positional relationship between the base coordinate system and the object based on the optical received result of the base reflected light by the light receiving unit.

### [Supplementary Note 18]

The control apparatus according to the Supplementary Note 17, wherein
the robot system further includes a processing robot,
the processing robot includes: a processing apparatus that is configured to perform a processing operation for processing the object; and a processing robot arm that includes a processing movable part to which the processing apparatus is attached, and
the control apparatus generates control information, which is used to control at least one of a position and a posture of the processing apparatus so as to process the object, based on the relative position information.

### [Supplementary Note 19]

The control apparatus according to the Supplementary Note 17 or 18, wherein
the robot system further includes a measurement robot,
the measurement robot includes: a shape measurement apparatus that is configured to perform a measurement operation for measuring a three-dimensional shape of the object; and a measurement robot arm that includes a measurement movable part to which the shape measurement apparatus is attached, and
the control apparatus generates control information, which is used to control at least one of a position and a posture of the shape measurement apparatus so as to measure the object, based on the relative position information.

### [Supplementary Note 20]

The control apparatus according to any one of the Supplementary Notes 1 to 19, wherein
the object is placed on a placing apparatus that is movable, and
the movable body includes the placing apparatus.

### [Supplementary Note 21]

The control apparatus according to any one of the Supplementary Notes 1 to 20, wherein
the object is held by a holding member placed on a placing apparatus that is movable, and
the movable body includes the attachment member.

### [Supplementary Note 22]

The control apparatus according to any one of the Supplementary Notes 1 to 21, wherein
the object is placed on a placing apparatus that is movable, and
the movable body includes the object.

### [Supplementary Note 23]

A control apparatus that is used in a robot system that performs a predetermined operation on an object, wherein
the robot system includes a position measurement apparatus and a measurement robot,
the position measurement apparatus includes an irradiation unit that emits measurement light and a light receiving unit that optically receives reflected light of the measurement light,
the measurement robot includes: a shape measurement apparatus that is configured to perform a measurement operation for measuring a three-dimensional shape of the object; and a measurement robot arm that includes a measurement movable part to which the shape measurement apparatus is attached,
the shape measurement apparatus performs the measurement operation in a first measurement period, and performs the measurement operation in a second measurement period that is different from the first measurement period,
the control apparatus:
   builds a base coordinate system, which is used as a base in the robot system;
   control the position measurement apparatus to irradiate the measurement light onto each of a plurality of reflective members, which are positioned at the shape measurement apparatus, in the first measurement period;
   control the position measurement apparatus to irradiate the measurement light onto each of the plurality of reflective members in the second measurement period; and
   couples a first measured result of the three-dimensional shape of the object by the shape measurement apparatus in the first measurement period with a second measured result of the three-dimensional shape of the object by the shape measurement apparatus in the second measurement period in the base coordinate system based on a first optical received result of the reflected light from each of the plurality of reflective members by the light receiving unit in the first measurement period and a second optical received result of the reflected light from each of the plurality of reflective members by the light receiving unit in the second measurement period.

### [Supplementary Note 24]

A control apparatus that is used in a robot system that performs a predetermined operation on an object, wherein
the robot system includes a position measurement apparatus and a measurement robot,
the position measurement apparatus includes an irradiation unit that emits measurement light and a light receiving unit that optically receives reflected light of the measurement light,
the measurement robot includes: a shape measurement apparatus that is configured to perform a measurement operation for measuring a three-dimensional shape of the object; and a measurement robot arm that includes a measurement movable part to which the shape measurement apparatus is attached,
the shape measurement apparatus performs the measurement operation in a first measurement period, and performs the measurement operation in a second measurement period that is different from the first measurement period,
the control apparatus:
   builds a first base coordinate system, which is used as a base in the robot system in a first period in which the object is positioned at a first object position;
   controls the position measurement apparatus to irradiate the measurement light onto each of a plurality of reflective members, which are positioned at the shape measurement apparatus, in the first period;
   converts a measured result of the three-dimensional shape of the object by the shape measurement apparatus in the first period to the shape data indicating the three-dimensional shape of the object in the first base coordinate system based on the optical received result of the reflected light by the light receiving unit in the first period;
   builds a second base coordinate system, which is used as a base in the robot system in a second period in which the object is positioned at a second object position that is different from the first object position;
   controls the position measurement apparatus to irradiate the measurement light onto each of the plurality of reflective members in the second period;
   converts a measured result of the three-dimensional shape of the object by the shape measurement apparatus in the second period to the shape data indicating the three-dimensional shape of the object in the second base coordinate system based on the optical received result of the reflected light by the light receiving unit in the second period;

### [Supplementary Note 25]

A control apparatus that is used in a robot system that performs a predetermined operation on an object, wherein
the robot system includes a position measurement apparatus, a measurement robot, and a processing robot,
the position measurement apparatus includes an irradiation unit that emits measurement light and a light receiving unit that optically receives reflected light of the measurement light,
the measurement robot includes: a shape measurement apparatus that is configured to perform a measurement operation for measuring a three-dimensional shape of the object; and a measurement robot arm that includes a measurement movable part to which the shape measurement apparatus is attached,
the processing robot includes: a processing apparatus that is configured to perform a processing operation for processing the object; and a processing robot arm that includes a processing movable part to which the processing apparatus is attached,
the control apparatus:
   builds a base coordinate system, which is used as a base in the robot system;
   control the position measurement apparatus to irradiate the measurement light onto each of a plurality of reflective members, which are positioned at the shape measurement apparatus, in a first period after the processing robot processes the object positioned at a first object position;
   converts a measured result of the three-dimensional shape of the object by the shape measurement apparatus in the first period to the shape data indicating the three-dimensional shape of the object in the base coordinate system based on the optical received result of the reflected light by the light receiving unit in the first period; and
   generates control information, which is used to control at least one of a position and a posture of the processing apparatus so as to process the object positioned at a second object position that is different from the first object position, based on the shape data.

### [Supplementary Note 26]

A control apparatus that is used in a robot system that performs a predetermined operation on an object, wherein
the robot system includes a position measurement apparatus and a processing robot,
the position measurement apparatus includes an irradiation unit that emits measurement light and a light receiving unit that optically receives reflected light of the measurement light,
the processing robot includes: a processing apparatus that is configured to perform a processing operation for processing the object; and a processing robot arm that includes a processing movable part to which the processing apparatus is attached,
the control apparatus:
   builds a base coordinate system, which is used as a base in the robot system;
   controls the position measurement apparatus to irradiate the measurement light onto each of a plurality of processing reflective members that are positioned at the processing apparatus;
   calculates processing position posture information, which indicates at least one of a position and a posture of the processing apparatus in the base coordinate system, based on an optical received result of processing reflected light, which is the reflected light from each of the plurality of processing reflective members, by the light receiving unit; and
   generates, based on the processing position posture information, processing correction information that includes at least one of a correction amount of the position of the processing apparatus, which is required to change the position of the processing apparatus to a desired processing position, and a correction amount of the posture of the processing apparatus, which is required to change the posture of the processing apparatus to a desired processing posture, in the base coordinate system.

### [Supplementary Note 27]

The control apparatus according to the Supplementary Note 26, wherein
the control apparatus:
controls the position measurement apparatus to irradiate the measurement light onto each of a plurality of base reflective members that are positioned at positions fixed to the object;
generates relative position information related to a relative positional relationship between the base coordinate system and the object based on an optical received result of base reflected light, which is the reflected light from each of the plurality of base reflective members, by the light receiving unit, and
at least one base reflective member of the plurality of base reflective members is positioned at the object.

### [Supplementary Note 28]

The control apparatus according to the Supplementary Note 26 or 27, wherein
the control apparatus:
re-controls the position measurement apparatus to irradiate the measurement light onto each of the plurality of processing reflective members after the processing robot arm is controlled to move the processing apparatus based on the processing correction information;
re-calculates the processing position posture information based on the optical received result of the processing reflected light, which is from each of the plurality of processing reflective members, by the light receiving unit; and
determines, based on the re-calculated processing position posture information, at least one of whether or not the position of the processing apparatus is the desired processing position and whether or not the posture of the processing apparatus is the desired processing posture in the base coordinate system.

### [Supplementary Note 29]

The control apparatus according to any one of the Supplementary Notes 26 to 28, wherein
the robot system further includes a measurement robot,
the measurement robot includes: a shape measurement apparatus that is configured to perform a measurement operation for measuring a three-dimensional shape of the object; and a measurement robot arm that includes a measurement movable part to which the shape measurement apparatus is attached,
the control apparatus:
   controls the position measurement apparatus to irradiate the measurement light onto each of a plurality of measurement reflective members that are positioned at the shape measurement apparatus;
   calculates measurement position posture information, which indicates at least one of a position and a posture of the shape measurement apparatus in the base coordinate system, based on an optical received result of measurement reflected light, which is the reflected light from each of the plurality of measurement reflective members, by the light receiving unit; and
   generates, based on the measurement position posture information, measurement correction information that includes at least one of a correction amount of the position of the shape measurement apparatus, which is required to change the position of the shape measurement apparatus to a desired measurement position, and a correction amount of the posture of the shape measurement apparatus, which is required to change the posture of the shape measurement apparatus to a desired measurement posture, in the base coordinate system.

### [Supplementary Note 30]

The control apparatus according to the Supplementary Note 29, wherein
the control apparatus:
re-controls the position measurement apparatus to irradiate the measurement light onto each of the plurality of measurement reflective members after the measurement robot arm is controlled to move the shape measurement apparatus based on the measurement correction information;
re-calculate the measurement position posture information based on the optical received result of the measurement reflected light, which is from each of the plurality of measurement reflective members, by the light receiving unit; and
determines, based on the re-calculated measurement position posture information, at least one of whether or not the position of the shape measurement apparatus is the desired measurement position and whether or not the posture of the shape measurement apparatus is the desired measurement posture in the base coordinate system.

### [Supplementary Note 31]

A robot system that performs a predetermined operation on an object, wherein
the robot system includes:
the position measurement apparatus; and
the control apparatus according to any one of the Supplementary Notes 1 to 30.

### [Supplementary Note 32]

The robot system according to the Supplementary Note 31, wherein
the robot system further includes a measurement robot,
the measurement robot includes: a shape measurement apparatus that is configured to perform a measurement operation for measuring a three-dimensional shape of the object; and a measurement robot arm that includes a measurement movable part to which the shape measurement apparatus is attached.

### [Supplementary Note 33]

The robot system according to the Supplementary Note 31 or 32, wherein
the robot system further includes a processing robot,
the processing robot includes: a processing apparatus that is configured to perform a processing operation for processing the object; and a processing robot arm that includes a processing movable part to which the processing apparatus is attached.

### [Supplementary Note 34]

A position measurement system that is used with a robot system, wherein
the robot system includes a robot that positions a process apparatus, which performs a predetermined process on an object placed on a movable body, in a three-dimensional space,
the position measurement system includes:
   a position measurement apparatus that includes an irradiation unit that emits measurement light and a light receiving unit that optically receives reflected light of the measurement light; and
   a control apparatus,
   the control apparatus:
      controls the irradiation unit to irradiate the measurement light onto each of a plurality of reflective members, which are attached to the process apparatus, and each of a plurality of reflective members, which are positioned in a process space in which the process apparatus performs the predetermined process on the object;
      builds a base coordinate system based on the reflected light that is optically received by the light receiving unit and that is from each of the plurality of reflective members positioned in the process space; and
      generates position posture information, which indicates a position and a posture of the process apparatus in the base coordinate system, based on the reflected light that is optically received by the light receiving unit and that is from each of the plurality of reflective members attached to the process apparatus.

### [Supplementary Note 35]

The control apparatus according to the Supplementary Note 34, wherein
the plurality of reflective members positioned in the process space are positioned at the movable body.

### [Supplementary Note 36]

The control apparatus according to the Supplementary Note 34 or 35, wherein
the plurality of reflective members positioned in the process space are positioned at a support member that is fixed in the process space.

### [Supplementary Note 37]

The control apparatus according to any one of the Supplementary Notes 34 to 36, wherein
the plurality of reflective members positioned in the process space are positioned at the object.

### [Supplementary Note 38]

A position measurement system that is used with a robot system, wherein
the robot system includes a robot that positions a process apparatus, which performs a predetermined process on an object, in a three-dimensional space,
the position measurement system includes:
   a position measurement apparatus that includes an irradiation unit that emits measurement light and a light receiving unit that optically receives reflected light of the measurement light; and
   a control apparatus,
   the control apparatus:
      controls the irradiation unit to irradiate the measurement light onto each of a plurality of first reflective members, which are attached to a movable body on which the object is placed and which is movable, and each of a plurality of second reflective members, which are attached to the process apparatus;
      builds a base coordinate system based on the reflected light that is optically received by the light receiving unit and that is from each of the plurality of first reflective members; and
      generates position posture information, which indicates a position and a posture of the process apparatus in the base coordinate system, based on the reflected light that is optically received by the light receiving unit and that is from each of the plurality of second reflective members.

### [Supplementary Note 39]

The position measurement system according to the Supplementary Note 38, wherein
the process apparatus is a shape measurement apparatus that performs a measurement operation for measuring a three-dimensional shape of the object,
the control apparatus generates the position posture information of the shape measurement apparatus in the base coordinate system in performing the measurement operation, based on the reflected light that is from each of the plurality of second reflective members positioned at the shape measurement apparatus,
there-dimensional shape information of the object in the base coordinate system is generated based on the position posture information of the shape measurement apparatus in performing the measurement operation and a measured result of the three-dimensional shape of the object measured by the shape measurement apparatus.

### [Supplementary Note 40]

The position measurement system according to the Supplementary Note 39, wherein
the shape measurement apparatus acquires a first measured result of the three-dimensional shape by performing a first measurement operation in a state where the object and the shape measurement apparatus is in a first positional relationship, and acquires a second measured result of the three-dimensional shape by performing a second measurement operation in a second positional relationship that is different from the first positional relationship,
the control apparatus:
   generates first position posture information of the shape measurement apparatus in the base coordinate system in performing the first measurement operation; and
   generates second position posture information of the shape measurement apparatus in the base coordinate system in performing the second measurement operation,
   the there-dimensional shape information of the object in the base coordinate system is acquired based on the first position posture information, the first measured result of the three-dimensional shape, the second position posture information, the second measured result of the three-dimensional shape.

### [Supplementary Note 41]

The position measurement system according to the Supplementary Note 40, wherein
the first measured result of the three-dimensional shape is converted to first three-dimensional shape information, which indicates the three-dimensional shape of the object in the base coordinate system, based on the first position posture information,
the second measured result of the three-dimensional shape is converted to second three-dimensional shape information, which indicates the three-dimensional shape of the object in the base coordinate system, based on the second position posture information, and
the there-dimensional shape information of the object in the base coordinate system is generated by combining the first there-dimensional shape information and the second there-dimensional shape information.

### [Supplementary Note 42]

The position measurement system according to the Supplementary Note 40 or 41, wherein
the control apparatus:
converts the first measured result of the three-dimensional shape to first three-dimensional shape information, which indicates the three-dimensional shape of the object in the base coordinate system, based on the first position posture information;
converts the second measured result of the three-dimensional shape to second three-dimensional shape information, which indicates the three-dimensional shape of the object in the base coordinate system, based on the second position posture information; and
generates the there-dimensional shape information of the object in the base coordinate system by combining the first there-dimensional shape information and the second there-dimensional shape information.

### [Supplementary Note 43]

The position measurement system according to any one of the Supplementary Notes 38 to 42, wherein
the process apparatus is a processing apparatus that performs a processing process on the object,
the control apparatus generates the position posture information of the processing apparatus in the base coordinate system, based on the reflected light that is from each of the plurality of second reflective members positioned at the processing apparatus.

### [Supplementary Note 44]

The position measurement system according to the Supplementary Note 43, wherein
the control apparatus:
generates first preparation position posture information of the processing apparatus that is positioned at a first preparation position by the robot;
generates second preparation position posture information of the processing apparatus that is moved to be positioned at a second preparation position by the robot; and
generates calibration information for calibrating a position control of the processing apparatus by the robot based on the first preparation position, the second preparation position, the first preparation position posture information, the second preparation position posture information, and driving information of the robot that moves the processing apparatus from the first preparation position to the second preparation position.

### [Supplementary Note 45]

The position measurement system according to any one of the Supplementary Notes 38 to 44, wherein
the robot of the robot system includes: a first robot to which a processing apparatus performing a processing process on the object is attached as the process apparatus; and a second robot to which a shape measurement apparatus performing a measurement process on the object is attached as the process apparatus,
the control apparatus:
   generates the position posture information of the shape measurement apparatus in the base coordinate system in performing a measurement operation, based on the reflected light that is from each of the plurality of second reflective members attached to the shape measurement apparatus; and
   generates the position posture information of the processing apparatus in the base coordinate system, based on the reflected light that is from each of the plurality of second reflective members attached to the processing apparatus,
   the processing process on the object is performed by the first robot moving the processing apparatus based on the position posture information of the processing apparatus in the base coordinate system and there-dimensional shape information of the object in the base coordinate system which is generated based on the position posture information of the shape measurement apparatus in performing the measurement operation and a measured result of the three-dimensional shape of the object measured by the shape measurement apparatus.

### [Supplementary Note 46]

The position measurement system according to the Supplementary Note 45, wherein
the movable body on which the object is placed moves between a measurement process space in which the second robot performs the measurement process by using the shape measurement apparatus and a processing process space in which the first robot performs the processing process by using the processing apparatus,
the control apparatus:
   builds the base coordinate system in the measurement process space, and generates the position posture information of the shape measurement apparatus in the base coordinate system in performing the measurement operation; and
   re-builds the base coordinate system in the processing process space, and generates the position posture information of the processing apparatus in the re-built base coordinate system,
   the processing process on the object, which is performed in the processing process space of the first robot is performed by moving the processing apparatus based on the there-dimensional shape information of the object in the re-built base coordinate system and the position posture information of the processing apparatus in the re-built base coordinate system.

### [Supplementary Note 47]

The position measurement system according to the Supplementary Note 46, wherein
the position measurement apparatus includes:
a first position measurement apparatus that irradiates the measurement light onto the plurality of first reflective members attached to the movable body and the plurality of second reflective members attached to the shape measurement apparatus, and that optically receives the reflected light in the measurement process space; and
a second position measurement apparatus that is different from the first position measurement apparatus, that irradiates the measurement light onto the plurality of first reflective members attached to the movable body and the plurality of second reflective members attached to the processing apparatus, and that optically receives the reflected light in the processing process space.

### [Supplementary Note 48]

The position measurement system according to any one of the Supplementary Notes 45 to 47, wherein
the robot system includes a first robot system and a second robot system,
the movable body on which the object is placed moves between a first process space in which the measurement process and the processing process are performed on the object by the first robot system and a second process space in which the measurement process and the processing process are performed on the object by the second robot system,
the control apparatus:
   builds the base coordinate system by controlling the position measurement apparatus to irradiate the measurement light onto the plurality of first reflective members attached to the movable body and optically receive the reflected light in the first process space; and
   re-builds the base coordinate system by irradiating the measurement light onto the plurality of first reflective members attached to the movable body and optically receiving the reflected light in the second process space,
   at least one of the measurement process and the processing process on the object is performed in the base coordinate system that is common to the first process space and the second process space.

### [Supplementary Note 49]

The position measurement system according to the Supplementary Note 48, wherein
the position measurement apparatus includes:
a first position measurement apparatus that irradiates the measurement light onto the plurality of first reflective members attached to the movable body and the plurality of second reflective members attached to the shape measurement apparatus and the processing apparatus used by the first robot system, and that optically receives the reflected light in the first process space; and
a second position measurement apparatus that is different from the first position measurement apparatus, that irradiates the measurement light onto the plurality of first reflective members attached to the movable body and the plurality of second reflective members attached to the shape measurement apparatus and the processing apparatus used by the second robot system, and that optically receives the reflected light in the second process space.

### [Supplementary Note 50]

The position measurement system according to any one of the Supplementary Notes 38 to 49, wherein
the control apparatus outputs position information for driving the robot to position the process apparatus to the robot system based on the base coordinate system and the position posture information of the process apparatus in the base coordinate system.

### [Supplementary Note 51]

The position measurement system according to the Supplementary Note 50, wherein
the control apparatus converts the position posture information of the process apparatus in the base coordinate system to position posture information of the process apparatus in a robot coordinate system that is specific to the robot, and outputs it to the robot system as the position information for driving the robot to position the process apparatus.

### [Supplementary Note 52]

The position measurement system according to any one of the Supplementary Notes 38 to 49, wherein
the control apparatus builds a process apparatus coordinate system, which is based on the process apparatus, based on the position posture information of the process apparatus in the base coordinate system, and outputs position information for driving the robot to position the process apparatus to the robot system based on position posture information of the object in the process apparatus coordinate system.

### [Supplementary Note 53]

The position measurement system according to any one of the Supplementary Notes 38 to 52, wherein
a third reflective member is attached to the object,
the control apparatus:
   controls the irradiation unit to irradiate the measurement light onto the third reflective member; and
   generates position information of the object in the base coordinate system based on the reflected light that is optically received by the light receiving unit and that is from the plurality of third reflective members.

### [Supplementary Note 54]

The position measurement system according to any one of the Supplementary Notes 38 to 53, wherein
the base coordinate system is built on the movable body and moves due to the movement of the movable body.

### [Supplementary Note 55]

The position measurement system according to any one of the Supplementary Notes 38 to 54, wherein
the base coordinate system is a position measurement apparatus coordinate system that is specific to the position measurement apparatus.

### [Supplementary Note 56]

The position measurement system according to any one of the Supplementary Notes 1 to 55, wherein
a fourth reflective member is positioned in a process space in which the robot system performs the predetermined process on the object,
the control apparatus:
   controls the irradiation unit to irradiate the measurement light onto the fourth reflective member; and
   builds the base coordinate system based on the reflected light that is optically received by the light receiving unit and that is from the fourth reflective member.

### [Supplementary Note 57]

The position measurement system according to any one of the Supplementary Notes 38 to 56, wherein
a fourth reflective member is positioned in a process space in which the robot system performs the predetermined process on the object,
the control apparatus:
   controls the irradiation unit to irradiate the measurement light onto the fourth reflective member; and
   generates position information of the movable body in the process space based on the reflected light that is optically received by the light receiving unit and that is from the fourth reflective member and the reflected light that is optically received by the light receiving unit and that is from the first reflective member.

### [Supplementary Note 58]

A position measurement system that is used in a robot system, wherein
the robot system includes a robot that positions a process apparatus, which performs a predetermined process on an object, in a three-dimensional space,
the position measurement system includes:
   a position measurement apparatus that includes an irradiation unit that emits measurement light and a light receiving unit that optically receives reflected light of the measurement light; and
   a control apparatus,
   the control apparatus:
      controls the irradiation unit to irradiate the measurement light onto each of a plurality of first reflective members, which are attached to a movable body on which the object is placed and which is movable, each of a plurality of second reflective members, which are attached to the process apparatus, and each of a plurality of fourth reflective members, which are positioned in a process space in which the process apparatus performs the predetermined process on the object;
      builds a base coordinate system based on the reflected light that is optically received by the light receiving unit and that is from each of the plurality of fourth reflective members;
      generates position posture information, which indicates a position and a posture of the movable body in the base coordinate system, based on the reflected light that is optically received by the light receiving unit and that is from each of the plurality of first reflective members; and
      generates position posture information, which indicates a position and a posture of the process apparatus in the base coordinate system, based on the reflected light that is optically received by the light receiving unit and that is from each of the plurality of second reflective members.

### [Supplementary Note 59]

The position measurement system according to the Supplementary Note 58, wherein
the process apparatus is a shape measurement apparatus that performs a measurement operation for measuring a three-dimensional shape of the object,
the control apparatus generates the position posture information of the shape measurement apparatus in the base coordinate system in performing the measurement operation, based on the reflected light that is from each of the plurality of second reflective members positioned at the shape measurement apparatus,
there-dimensional shape information of the object in the base coordinate system is generated based on the position posture information of the shape measurement apparatus in performing the measurement operation and a measured result of the three-dimensional shape of the object measured by the shape measurement apparatus.

### [Supplementary Note 60]

The position measurement system according to the Supplementary Note 59, wherein
the shape measurement apparatus acquires a first measured result of the three-dimensional shape by performing a first measurement operation in a state where the object and the shape measurement apparatus is in a first positional relationship, and acquires a second measured result of the three-dimensional shape by performing a second measurement operation in a second positional relationship that is different from the first positional relationship,
the control apparatus:
   generates first position posture information of the shape measurement apparatus in the base coordinate system in performing the first measurement operation; and
   generates second position posture information of the shape measurement apparatus in the base coordinate system in performing the second measurement operation,
   the there-dimensional shape information of the object in the base coordinate system is acquired based on the first position posture information, the first measured result of the three-dimensional shape, the second position posture information, the second measured result of the three-dimensional shape.

### [Supplementary Note 61]

The position measurement system according to the Supplementary Note 60, wherein
the first measured result of the three-dimensional shape is converted to first three-dimensional shape information, which indicates the three-dimensional shape of the object in the base coordinate system, based on the first position posture information,
the second measured result of the three-dimensional shape is converted to second three-dimensional shape information, which indicates the three-dimensional shape of the object in the base coordinate system, based on the second position posture information, and
the there-dimensional shape information of the object in the base coordinate system is generated by combining the first there-dimensional shape information and the second there-dimensional shape information.

### [Supplementary Note 62]

The position measurement system according to the Supplementary Note 60 or 61, wherein
the control apparatus:
converts the first measured result of the three-dimensional shape to first three-dimensional shape information, which indicates the three-dimensional shape of the object in the base coordinate system, based on the first position posture information;
converts the second measured result of the three-dimensional shape to second three-dimensional shape information, which indicates the three-dimensional shape of the object in the base coordinate system, based on the second position posture information; and
generates the there-dimensional shape information of the object in the base coordinate system by combining the first there-dimensional shape information and the second there-dimensional shape information.

### [Supplementary Note 63]

The position measurement system according to any one of the Supplementary Notes 58 to 62, wherein
the process apparatus is a processing apparatus that performs a processing process on the object,
the control apparatus generates the position posture information of the processing apparatus in the base coordinate system, based on the reflected light that is from each of the plurality of second reflective members positioned at the processing apparatus.

### [Supplementary Note 64]

The position measurement system according to any one of the Supplementary Notes 58 to 63, wherein
the robot of the robot system includes: a first robot to which a processing apparatus performing a processing process on the object is attached as the process apparatus; and a second robot to which a shape measurement apparatus performing a measurement process on the object is attached as the process apparatus,
the control apparatus:
   generates the position posture information of the shape measurement apparatus in the base coordinate system in performing a measurement operation, based on the reflected light that is from each of the plurality of second reflective members attached to the shape measurement apparatus; and
   generates the position posture information of the processing apparatus in the base coordinate system, based on the reflected light that is from each of the plurality of second reflective members attached to the processing apparatus,
   the processing process on the object is performed by the first robot moving the processing apparatus based on the position posture information of the processing apparatus in the base coordinate system and there-dimensional shape information of the object in the base coordinate system which is generated based on the position posture information of the shape measurement apparatus in performing the measurement operation and a measured result of the three-dimensional shape of the object measured by the shape measurement apparatus.

### [Supplementary Note 65]

A position measurement method that measures a three-dimensional position of a process apparatus, which is moved in a three-dimensional space and which performs a predetermined process on an object, wherein
the position measurement method:
irradiates measurement light from a position measurement apparatus onto each of a plurality of first reflective members that are attached to a movable body on which the object is placed and that is movable, and optically receives reflected light reflected by each of the plurality of first reflective members;
irradiates the measurement light from the position measurement apparatus onto each of a plurality of second reflective members that are attached to the process apparatus, and optically receives reflected light reflected by each of the plurality of second reflective members;
acquires position information of the plurality of first reflective members in the three-dimensional space based on the reflected light from the plurality of first reflective members;
acquires position information of the plurality of second reflective members in the three-dimensional space based on the reflected light from the plurality of second reflective members;
builds a base coordinate system based on the position information of the plurality of first reflective members; and
generates position posture information, which indicates a position and a posture of the process apparatus in the base coordinate system, based on the position information of the plurality of second reflective members.

### [Supplementary Note 66]

The position measurement method according to the Supplementary Note 65, wherein
the process apparatus is a shape measurement apparatus that performs a measurement operation for measuring a three-dimensional shape of the object,
the position posture information of the shape measurement apparatus in the base coordinate system when the position measurement apparatus performs the measurement operation is generated based on the position information of the plurality of second reflective members,
there-dimensional shape information of the object in the base coordinate system is generated based on the position posture information of the shape measurement apparatus in performing the measurement operation and a measured result of the three-dimensional shape of the object measured by the shape measurement apparatus.

### [Supplementary Note 67]

The position measurement method according to the Supplementary Note 66,
acquires a first measured result of the three-dimensional shape by performing a first measurement operation in a state where the object and the shape measurement apparatus is in a first positional relationship;
acquires a second measured result of the three-dimensional shape by performing a second measurement operation in a second positional relationship that is different from the first positional relationship;
generates first position posture information of the shape measurement apparatus in the base coordinate system in performing the first measurement operation;
generates second position posture information of the shape measurement apparatus in the base coordinate system in performing the second measurement operation;
generates first three-dimensional shape information by converting the first measured result of the three-dimensional shape based on the first position posture information;
generates second three-dimensional shape information by converting the second measured result of the three-dimensional shape based on the second position posture information; and
generates the there-dimensional shape information of the object in the base coordinate system by combining the first there-dimensional shape information and the second there-dimensional shape information.

### [Supplementary Note 68]

The position measurement method according to any one of the Supplementary Notes 65 to 67,
generates the position posture information of a shape measurement apparatus, which is the process apparatus and which performs a measurement process on the object, in the base coordinate system in performing a measurement operation;
generates the position posture information of a processing apparatus, which is the process apparatus and which performs a processing process on the object, in the base coordinate system;
generates there-dimensional shape information of the object in the base coordinate system based on the position posture information of the shape measurement apparatus in performing the measurement operation and a measured result of the three-dimensional shape of the object measured by the shape measurement apparatus; and
performs the processing process on the object by moving the processing apparatus based on the position posture information of the processing apparatus in the base coordinate system and the there-dimensional shape information of the object in the base coordinate system.

### [Supplementary Note 69]

The position measurement method according to the Supplementary Note 68, wherein
builds the base coordinate system in a measurement process space in which the measurement process is performed, and generates the there-dimensional shape information of the object in the base coordinate system;
moves the movable body on which the object is placed from the measurement process space to a processing process space in which the processing process is performed;
re-builds the base coordinate system in the processing process space;
generates the position posture information of the processing apparatus in the re-built base coordinate system;
performs the processing process on the object at the processing position by the processing apparatus based on the there-dimensional shape information of the object in the re-built base coordinate system and the position posture information of the processing apparatus in the re-built base coordinate system.

### [Supplementary Note 70]

The position measurement method according to the Supplementary Note 68 or 69, wherein
build the based coordinate system in a first process space in which the measurement process and the processing process are performed on the object;
moves the movable body on which the object is placed from the first process space to a second process space that is different from the first process space;
re-build the based coordinate system in the second process space in which the measurement process and the processing process are performed on the object; and
performs at least one of the measurement process and the processing process on the object in the base coordinate system that is common to the first process space and the second process space.

### [Supplementary Note 71]

A position measurement method that measures a three-dimensional position of a process apparatus, which is moved in a three-dimensional space and which performs a predetermined process on an object, wherein
the position measurement method:
irradiates measurement light from a position measurement apparatus onto each of a plurality of first reflective members that are attached to a movable body on which the object is placed and that is movable, and optically receives reflected light reflected by each of the plurality of first reflective members;
irradiates the measurement light from the position measurement apparatus onto each of a plurality of second reflective members that are attached to the process apparatus, and optically receives reflected light reflected by each of the plurality of second reflective members;
irradiates the measurement light from the position measurement apparatus onto each of a plurality of fourth reflective members, which are positioned in a process space in which the process apparatus performs the predetermined process on the object, and optically receives reflected light reflected by each of the plurality of fourth reflective members;
acquires position information of the plurality of first reflective members in the three-dimensional space based on the reflected light from the plurality of first reflective members;
acquires position information of the plurality of second reflective members in the three-dimensional space based on the reflected light from the plurality of second reflective members;
acquires position information of the plurality of fourth reflective members in the three-dimensional space based on the reflected light from the plurality of fourth reflective members;
builds a base coordinate system based on the position information of the plurality of fourth reflective members;
generates position posture information, which indicates a position and a posture of the movable body in the base coordinate system, based on the position information of the plurality of first reflective members; and
generates position posture information, which indicates a position and a posture of the process apparatus in the base coordinate system, based on the position information of the plurality of second reflective members.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a position measurement system and a position measurement method, which involve such changes, are also intended to be in the technical scope of the present invention.

### Description of Reference Codes

- SYS: robot system
- 1: processing robot
- 13: processing head
- 14: reflector
- 2: measurement robot
- 23: measurement head
- 24: reflector
- 3: workpiece transport apparatus
- 34: reflector
- 4: laser tracker
- 5: tracker control apparatus
- 511: base coordinate system building unit
- 512: position-posture control unit
- 513: control information generation unit
- 514: shape data processing unit
- 6: robot control apparatus
- W: workpiece
- ML: measurement light
- RL: reflected light

## Claims

1. A position measurement system that is used with a robot system, wherein
the robot system includes a robot that positions a process apparatus, which performs a predetermined process on an object, in a three-dimensional space,
the position measurement system comprises:
a position measurement apparatus that includes an irradiation unit that emits measurement light and a light receiving unit that optically receives reflected light of the measurement light; and
a control apparatus,
the control apparatus:
controls the irradiation unit to irradiate the measurement light onto each of a plurality of first reflective members, which are attached to a movable body on which the object is placed and which is movable, and each of a plurality of second reflective members, which are attached to the process apparatus;
builds a base coordinate system based on the reflected light that is optically received by the light receiving unit and that is from each of the plurality of first reflective members; and
generates position posture information, which indicates a position and a posture of the process apparatus in the base coordinate system, based on the reflected light that is optically received by the light receiving unit and that is from each of the plurality of second reflective members.

2. The position measurement system according to claim 1, wherein
the process apparatus is a shape measurement apparatus that performs a measurement operation for measuring a three-dimensional shape of the object,
the control apparatus generates the position posture information of the shape measurement apparatus in the base coordinate system in performing the measurement operation, based on the reflected light that is from each of the plurality of second reflective members positioned at the shape measurement apparatus,
there-dimensional shape information of the object in the base coordinate system is generated based on the position posture information of the shape measurement apparatus in performing the measurement operation and a measured result of the three-dimensional shape of the object measured by the shape measurement apparatus.

3. The position measurement system according to claim 2, wherein
the shape measurement apparatus acquires a first measured result of the three-dimensional shape by performing a first measurement operation in a state where the object and the shape measurement apparatus is in a first positional relationship, and acquires a second measured result of the three-dimensional shape by performing a second measurement operation in a second positional relationship that is different from the first positional relationship,
the control apparatus:
generates first position posture information of the shape measurement apparatus in the base coordinate system in performing the first measurement operation; and
generates second position posture information of the shape measurement apparatus in the base coordinate system in performing the second measurement operation,
the there-dimensional shape information of the object in the base coordinate system is acquired based on the first position posture information, the first measured result of the three-dimensional shape, the second position posture information, the second measured result of the three-dimensional shape.

4. The position measurement system according to claim 3, wherein
the first measured result of the three-dimensional shape is converted to first three-dimensional shape information, which indicates the three-dimensional shape of the object in the base coordinate system, based on the first position posture information,
the second measured result of the three-dimensional shape is converted to second three-dimensional shape information, which indicates the three-dimensional shape of the object in the base coordinate system, based on the second position posture information, and
the there-dimensional shape information of the object in the base coordinate system is generated by combining the first there-dimensional shape information and the second there-dimensional shape information.

5. The position measurement system according to claim 3, wherein
the control apparatus:
converts the first measured result of the three-dimensional shape to first three-dimensional shape information, which indicates the three-dimensional shape of the object in the base coordinate system, based on the first position posture information;
converts the second measured result of the three-dimensional shape to second three-dimensional shape information, which indicates the three-dimensional shape of the object in the base coordinate system, based on the second position posture information; and
generates the there-dimensional shape information of the object in the base coordinate system by combining the first there-dimensional shape information and the second there-dimensional shape information.

6. The position measurement system according to claim 1, wherein
the process apparatus is a processing apparatus that performs a processing process on the object,
the control apparatus generates the position posture information of the processing apparatus in the base coordinate system, based on the reflected light that is from each of the plurality of second reflective members positioned at the processing apparatus.

7. The position measurement system according to claim 6, wherein
the control apparatus:
generates first preparation position posture information of the processing apparatus that is positioned at a first preparation position by the robot;
generates second preparation position posture information of the processing apparatus that is moved to be positioned at a second preparation position by the robot; and
generates calibration information for calibrating a position control of the processing apparatus by the robot based on the first preparation position, the second preparation position, the first preparation position posture information, the second preparation position posture information, and driving information of the robot that moves the processing apparatus from the first preparation position to the second preparation position.

8. The position measurement system according to claim 1, wherein
the robot of the robot system includes: a first robot to which a processing apparatus performing a processing process on the object is attached as the process apparatus; and a second robot to which a shape measurement apparatus performing a measurement process on the object is attached as the process apparatus,
the control apparatus:
generates the position posture information of the shape measurement apparatus in the base coordinate system in performing a measurement operation, based on the reflected light that is from each of the plurality of second reflective members attached to the shape measurement apparatus; and
generates the position posture information of the processing apparatus in the base coordinate system, based on the reflected light that is from each of the plurality of second reflective members attached to the processing apparatus,
the processing process on the object is performed by the first robot moving the processing apparatus based on the position posture information of the processing apparatus in the base coordinate system and there-dimensional shape information of the object in the base coordinate system which is generated based on the position posture information of the shape measurement apparatus in performing the measurement operation and a measured result of the three-dimensional shape of the object measured by the shape measurement apparatus.

9. The position measurement system according to claim 8, wherein
the movable body on which the object is placed moves between a measurement process space in which the second robot performs the measurement process by using the shape measurement apparatus and a processing process space in which the first robot performs the processing process by using the processing apparatus,
the control apparatus:
builds the base coordinate system in the measurement process space, and generates the position posture information of the shape measurement apparatus in the base coordinate system in performing the measurement operation; and
re-builds the base coordinate system in the processing process space, and generates the position posture information of the processing apparatus in the re-built base coordinate system,
the processing process on the object, which is performed in the processing process space of the first robot is performed by moving the processing apparatus based on the there-dimensional shape information of the object in the re-built base coordinate system and the position posture information of the processing apparatus in the re-built base coordinate system.

10. The position measurement system according to claim 9, wherein
the position measurement apparatus includes:
a first position measurement apparatus that irradiates the measurement light onto the plurality of first reflective members attached to the movable body and the plurality of second reflective members attached to the shape measurement apparatus, and that optically receives the reflected light in the measurement process space; and
a second position measurement apparatus that is different from the first position measurement apparatus, that irradiates the measurement light onto the plurality of first reflective members attached to the movable body and the plurality of second reflective members attached to the processing apparatus, and that optically receives the reflected light in the processing process space.

11. The position measurement system according to claim 8, wherein
the robot system includes a first robot system and a second robot system,
the movable body on which the object is placed moves between a first process space in which the measurement process and the processing process are performed on the object by the first robot system and a second process space in which the measurement process and the processing process are performed on the object by the second robot system,
the control apparatus:
builds the base coordinate system by controlling the position measurement apparatus to irradiate the measurement light onto the plurality of first reflective members attached to the movable body and optically receive the reflected light in the first process space; and
re-builds the base coordinate system by irradiating the measurement light onto the plurality of first reflective members attached to the movable body and optically receiving the reflected light in the second process space,
at least one of the measurement process and the processing process on the object is performed in the base coordinate system that is common to the first process space and the second process space.

12. The position measurement system according to claim 11, wherein
the position measurement apparatus includes:
a first position measurement apparatus that irradiates the measurement light onto the plurality of first reflective members attached to the movable body and the plurality of second reflective members attached to the shape measurement apparatus and the processing apparatus used by the first robot system, and that optically receives the reflected light in the first process space; and
a second position measurement apparatus that is different from the first position measurement apparatus, that irradiates the measurement light onto the plurality of first reflective members attached to the movable body and the plurality of second reflective members attached to the shape measurement apparatus and the processing apparatus used by the second robot system, and that optically receives the reflected light in the second process space.

13. The position measurement system according to any one of claims 1 to 12, wherein
the control apparatus outputs position information for driving the robot to position the process apparatus to the robot system based on the base coordinate system and the position posture information of the process apparatus in the base coordinate system.

14. The position measurement system according to claim 13, wherein
the control apparatus converts the position posture information of the process apparatus in the base coordinate system to position posture information of the process apparatus in a robot coordinate system that is specific to the robot, and outputs it to the robot system as the position information for driving the robot to position the process apparatus.

15. The position measurement system according to any one of claims 1 to 12, wherein
the control apparatus builds a process apparatus coordinate system, which is based on the process apparatus, based on the position posture information of the process apparatus in the base coordinate system, and outputs position information for driving the robot to position the process apparatus to the robot system based on position posture information of the object in the process apparatus coordinate system.

16. The position measurement system according to any one of claims 1 to 15, wherein
a third reflective member is attached to the object,
the control apparatus:
controls the irradiation unit to irradiate the measurement light onto the third reflective member; and
generates position information of the object in the base coordinate system based on the reflected light that is optically received by the light receiving unit and that is from the plurality of third reflective members.

17. The position measurement system according to any one of claims 1 to 16, wherein
the base coordinate system is built on the movable body and moves due to the movement of the movable body.

18. The position measurement system according to any one of claims 1 to 9, wherein
the base coordinate system is a position measurement apparatus coordinate system that is specific to the position measurement apparatus.

19. The position measurement system according to any one of claims 1 to 16, wherein
a fourth reflective member is positioned in a process space in which the robot system performs the predetermined process on the object,
the control apparatus:
controls the irradiation unit to irradiate the measurement light onto the fourth reflective member; and
builds the base coordinate system based on the reflected light that is optically received by the light receiving unit and that is from the fourth reflective member.

20. The position measurement system according to any one of claims 1 to 16, wherein
a fourth reflective member is positioned in a process space in which the robot system performs the predetermined process on the object,
the control apparatus:
controls the irradiation unit to irradiate the measurement light onto the fourth reflective member; and
generates position information of the movable body in the process space based on the reflected light that is optically received by the light receiving unit and that is from the fourth reflective member and the reflected light that is optically received by the light receiving unit and that is from the first reflective member.

21. A position measurement system that is used in a robot system, wherein
the robot system includes a robot that positions a process apparatus, which performs a predetermined process on an object, in a three-dimensional space,
the position measurement system comprises:
a position measurement apparatus that includes an irradiation unit that emits measurement light and a light receiving unit that optically receives reflected light of the measurement light; and
a control apparatus,
the control apparatus:
controls the irradiation unit to irradiate the measurement light onto each of a plurality of first reflective members, which are attached to a movable body on which the object is placed and which is movable, each of a plurality of second reflective members, which are attached to the process apparatus, and each of a plurality of fourth reflective members, which are positioned in a process space in which the process apparatus performs the predetermined process on the object;
builds a base coordinate system based on the reflected light that is optically received by the light receiving unit and that is from each of the plurality of fourth reflective members;
generates position posture information, which indicates a position and a posture of the movable body in the base coordinate system, based on the reflected light that is optically received by the light receiving unit and that is from each of the plurality of first reflective members; and
generates position posture information, which indicates a position and a posture of the process apparatus in the base coordinate system, based on the reflected light that is optically received by the light receiving unit and that is from each of the plurality of second reflective members.

22. The position measurement system according to claim 21, wherein
the process apparatus is a shape measurement apparatus that performs a measurement operation for measuring a three-dimensional shape of the object,
the control apparatus generates the position posture information of the shape measurement apparatus in the base coordinate system in performing the measurement operation, based on the reflected light that is from each of the plurality of second reflective members positioned at the shape measurement apparatus,
there-dimensional shape information of the object in the base coordinate system is generated based on the position posture information of the shape measurement apparatus in performing the measurement operation and a measured result of the three-dimensional shape of the object measured by the shape measurement apparatus.

23. The position measurement system according to claim 22, wherein
the shape measurement apparatus acquires a first measured result of the three-dimensional shape by performing a first measurement operation in a state where the object and the shape measurement apparatus is in a first positional relationship, and acquires a second measured result of the three-dimensional shape by performing a second measurement operation in a second positional relationship that is different from the first positional relationship,
the control apparatus:
generates first position posture information of the shape measurement apparatus in the base coordinate system in performing the first measurement operation; and
generates second position posture information of the shape measurement apparatus in the base coordinate system in performing the second measurement operation,
the there-dimensional shape information of the object in the base coordinate system is acquired based on the first position posture information, the first measured result of the three-dimensional shape, the second position posture information, the second measured result of the three-dimensional shape.

24. The position measurement system according to claim 23, wherein
the first measured result of the three-dimensional shape is converted to first three-dimensional shape information, which indicates the three-dimensional shape of the object in the base coordinate system, based on the first position posture information,
the second measured result of the three-dimensional shape is converted to second three-dimensional shape information, which indicates the three-dimensional shape of the object in the base coordinate system, based on the second position posture information, and
the there-dimensional shape information of the object in the base coordinate system is generated by combining the first there-dimensional shape information and the second there-dimensional shape information.

25. The position measurement system according to claim 23, wherein
the control apparatus:
converts the first measured result of the three-dimensional shape to first three-dimensional shape information, which indicates the three-dimensional shape of the object in the base coordinate system, based on the first position posture information;
converts the second measured result of the three-dimensional shape to second three-dimensional shape information, which indicates the three-dimensional shape of the object in the base coordinate system, based on the second position posture information; and
generates the there-dimensional shape information of the object in the base coordinate system by combining the first there-dimensional shape information and the second there-dimensional shape information.

26. The position measurement system according to claim 21, wherein
the process apparatus is a processing apparatus that performs a processing process on the object,
the control apparatus generates the position posture information of the processing apparatus in the base coordinate system, based on the reflected light that is from each of the plurality of second reflective members positioned at the processing apparatus.

27. The position measurement system according to claim 21, wherein
the robot of the robot system includes: a first robot to which a processing apparatus performing a processing process on the object is attached as the process apparatus; and a second robot to which a shape measurement apparatus performing a measurement process on the object is attached as the process apparatus,
the control apparatus:
generates the position posture information of the shape measurement apparatus in the base coordinate system in performing a measurement operation, based on the reflected light that is from each of the plurality of second reflective members attached to the shape measurement apparatus; and
generates the position posture information of the processing apparatus in the base coordinate system, based on the reflected light that is from each of the plurality of second reflective members attached to the processing apparatus,
the processing process on the object is performed by the first robot moving the processing apparatus based on the position posture information of the processing apparatus in the base coordinate system and there-dimensional shape information of the object in the base coordinate system which is generated based on the position posture information of the shape measurement apparatus in performing the measurement operation and a measured result of the three-dimensional shape of the object measured by the shape measurement apparatus.

28. A position measurement method that measures a three-dimensional position of a process apparatus, which is moved in a three-dimensional space and which performs a predetermined process on an object, wherein
the position measurement method:
irradiates measurement light from a position measurement apparatus onto each of a plurality of first reflective members that are attached to a movable body on which the object is placed and that is movable, and optically receives reflected light reflected by each of the plurality of first reflective members;
irradiates the measurement light from the position measurement apparatus onto each of a plurality of second reflective members that are attached to the process apparatus, and optically receives reflected light reflected by each of the plurality of second reflective members;
acquires position information of the plurality of first reflective members in the three-dimensional space based on the reflected light from the plurality of first reflective members;
acquires position information of the plurality of second reflective members in the three-dimensional space based on the reflected light from the plurality of second reflective members;
builds a base coordinate system based on the position information of the plurality of first reflective members; and
generates position posture information, which indicates a position and a posture of the process apparatus in the base coordinate system, based on the position information of the plurality of second reflective members.

29. The position measurement method according to claim 28, wherein
the process apparatus is a shape measurement apparatus that performs a measurement operation for measuring a three-dimensional shape of the object,
the position posture information of the shape measurement apparatus in the base coordinate system when the position measurement apparatus performs the measurement operation is generated based on the position information of the plurality of second reflective members,
there-dimensional shape information of the object in the base coordinate system is generated based on the position posture information of the shape measurement apparatus in performing the measurement operation and a measured result of the three-dimensional shape of the object measured by the shape measurement apparatus.

30. The position measurement method according to claim 29,
acquires a first measured result of the three-dimensional shape by performing a first measurement operation in a state where the object and the shape measurement apparatus is in a first positional relationship;
acquires a second measured result of the three-dimensional shape by performing a second measurement operation in a second positional relationship that is different from the first positional relationship;
generates first position posture information of the shape measurement apparatus in the base coordinate system in performing the first measurement operation;
generates second position posture information of the shape measurement apparatus in the base coordinate system in performing the second measurement operation;
generates first three-dimensional shape information by converting the first measured result of the three-dimensional shape based on the first position posture information;
generates second three-dimensional shape information by converting the second measured result of the three-dimensional shape based on the second position posture information; and
generates the there-dimensional shape information of the object in the base coordinate system by combining the first there-dimensional shape information and the second there-dimensional shape information.

31. The position measurement method according to claim 28,
generates the position posture information of a shape measurement apparatus, which is the process apparatus and which performs a measurement process on the object, in the base coordinate system in performing a measurement operation;
generates the position posture information of a processing apparatus, which is the process apparatus and which performs a processing process on the object, in the base coordinate system;
generates there-dimensional shape information of the object in the base coordinate system based on the position posture information of the shape measurement apparatus in performing the measurement operation and a measured result of the three-dimensional shape of the object measured by the shape measurement apparatus; and
performs the processing process on the object by moving the processing apparatus based on the position posture information of the processing apparatus in the base coordinate system and the there-dimensional shape information of the object in the base coordinate system.

32. The position measurement method according to claim 31, wherein
builds the base coordinate system in a measurement process space in which the measurement process is performed, and generates the there-dimensional shape information of the object in the base coordinate system;
moves the movable body on which the object is placed from the measurement process space to a processing process space in which the processing process is performed;
re-builds the base coordinate system in the processing process space;
generates the position posture information of the processing apparatus in the re-built base coordinate system;
performs the processing process on the object at the processing position by the processing apparatus based on the there-dimensional shape information of the object in the re-built base coordinate system and the position posture information of the processing apparatus in the re-built base coordinate system.

33. The position measurement method according to claim 31, wherein
build the based coordinate system in a first process space in which the measurement process and the processing process are performed on the object;
moves the movable body on which the object is placed from the first process space to a second process space that is different from the first process space;
re-build the based coordinate system in the second process space in which the measurement process and the processing process are performed on the object; and
performs at least one of the measurement process and the processing process on the object in the base coordinate system that is common to the first process space and the second process space.

34. A position measurement method that measures a three-dimensional position of a process apparatus, which is moved in a three-dimensional space and which performs a predetermined process on an object, wherein
the position measurement method:
irradiates measurement light from a position measurement apparatus onto each of a plurality of first reflective members that are attached to a movable body on which the object is placed and that is movable, and optically receives reflected light reflected by each of the plurality of first reflective members;
irradiates the measurement light from the position measurement apparatus onto each of a plurality of second reflective members that are attached to the process apparatus, and optically receives reflected light reflected by each of the plurality of second reflective members;
irradiates the measurement light from the position measurement apparatus onto each of a plurality of fourth reflective members, which are positioned in a process space in which the process apparatus performs the predetermined process on the object, and optically receives reflected light reflected by each of the plurality of fourth reflective members;
acquires position information of the plurality of first reflective members in the three-dimensional space based on the reflected light from the plurality of first reflective members;
acquires position information of the plurality of second reflective members in the three-dimensional space based on the reflected light from the plurality of second reflective members;
acquires position information of the plurality of fourth reflective members in the three-dimensional space based on the reflected light from the plurality of fourth reflective members;
builds a base coordinate system based on the position information of the plurality of fourth reflective members;
generates position posture information, which indicates a position and a posture of the movable body in the base coordinate system, based on the position information of the plurality of first reflective members; and
generates position posture information, which indicates a position and a posture of the process apparatus in the base coordinate system, based on the position information of the plurality of second reflective members.
